(19) Europäisches Patentamt
European Patent Office
Office européen des brevets

(11) Veröffentlichungsnummer : **0 471 702 B1**

(12) # EUROPÄISCHE PATENTSCHRIFT

(45) Veröffentlichungstag der Patentschrift :
**29.12.93 Patentblatt 93/52**

(51) Int. Cl.$^5$ : **C09B 62/503,** D06P 1/38

(21) Anmeldenummer : **90906926.2**

(22) Anmeldetag : **04.05.90**

(86) Internationale Anmeldenummer :
**PCT/EP90/00715**

(87) Internationale Veröffentlichungsnummer :
**WO 90/13604 15.11.90 Gazette 90/26**

(54) **WASSERLÖSLICHE FASERREAKTIVE FARBSTOFFE, VERFAHREN ZU IHRER HERSTELLUNG UND IHRE VERWENDUNG.**

(30) Priorität : **10.05.89 DE 3915306**
**14.09.89 DE 3930704**

(43) Veröffentlichungstag der Anmeldung :
**26.02.92 Patentblatt 92/09**

(45) Bekanntmachung des Hinweises auf die Patenterteilung :
**29.12.93 Patentblatt 93/52**

(84) Benannte Vertragsstaaten :
**AT BE CH DE ES FR GB IT LI NL**

(56) Entgegenhaltungen :
**EP-A- 0 040 806**
**EP-A- 0 199 950**
**FR-A- 2 066 070**

(73) Patentinhaber : **HOECHST AKTIENGESELLSCHAFT**
**D-65926 Frankfurt (DE)**

(72) Erfinder : **BÜCH, Holger, Michael**
**Neugasse 4**
**D-6238 Hofheim am Taunus (DE)**
Erfinder : **HÄHNLE, Reinhard**
**Kastanienweg 7a**
**D-6240 Königstein/Taunus (DE)**
Erfinder : **SPRINGER, Hartmut**
**Am Erdbeerstein 27**
**D-6240 Königstein/Taunus (DE)**



Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Wasserlösliche faserreaktive Farbstoffe, Verfahren zu ihrer Herstellung und ihre Verwendung

Die Erfindung liegt auf dem technischen Gebiet der faserreaktiven Farbstoffe.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolgedessen besteht weiterhin ein Bedarf nach neuen Reaktivfarbstoffen, die verbesserte Eigenschaften, nicht nur in Bezug auf die Echtheiten, sondern auch einen hohen Fixiergrad auf dem zu färbenden Material aufweisen.

So sind aus der US-Patentschrift Nr. 4 740 592 und aus den japanischen Patent-Auslegungen Sho-40-17113 und Sho-50-31566 faserreaktive Farbstoffe bekannt, die einen s-Triazinrest enthalten, an den eine faserreaktive Gruppe aus der Vinylsulfon-Reihe gebunden ist und dessen dritter Substituent eine gegebenenfalls substituierte Aminogruppe oder eine Methoxygruppe ist. Des weiteren sind aus der US-PS 3 758 470 Farbstoffe bekannt, die einen 2-Chlor-4-cyanamido-s-triazin-6-ylamino-Rest enthalten. Die bekannten Farbstoffe haben jedoch gewisse anwendungstechnische Mängel; so besitzen sie einen Fixiergrad, der aus heutiger Sicht nicht mehr voll befriedigend ist, und sie liefern Färbungen mit nicht ausreichender coloristischer Farbstärke.

Weiterhin werden in der europäischen Patentanmeldungs-Veröffentlichung Nr. 0 199 950 A1 Farbstoffe mit einem faserreaktiven Rest, der jedoch kein cyanamido-substituierter Triazinrest ist, beschrieben. Diese Farbstoffe besitzen als faserreaktive Gruppierung einen Triazinylamino-Rest, der durch einen Phenylamino- oder Naphthylaminorest mit einer faserreaktiven Gruppierung der Vinylsulfonreihe und desweiteren durch einen gegebenenfalls substituierten Pyridiniumrest substituiert ist.

Mit der vorliegenden Erfindung wurden nunmehr neue, wasserlösliche, diesbezüglich verbesserte Farbstoffe gefunden, die der nachstehenden allgemeinen Formel (1) entsprechen.

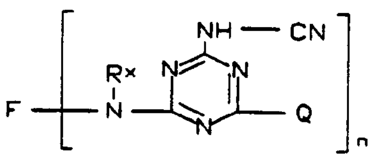

(1)

In Formel (1) bedeuten:

F ist der Rest eines Monoazo-, Disazo- oder Polyazofarbstoffes, oder eines davon abgeleiteten Schwermetallkomplex-Azofarbstoffes oder eines Anthrachinon-, Phthalocyanin-, Azomethin-, Dioxazin-, Phenazin-, Stilben-, Triphenylmethan-, Xanthen-, Thioxanthen-, Nitroaryl-, Naphthochinon-, Pyrenchinon- oder Perylentetracarbimid-Farbstoffes;

$R^x$ ist ein Wasserstoffatom oder eine Alkylgruppe von 1 bis 4 C-Atomen, wie die Methyl- oder Ethylgruppe, die durch Halogen, wie Chlor und Brom, Hydroxy, Cyano, Alkoxy von 1 bis 4 C-Atomen, wie Methoxy und Ethoxy, Alkoxycarbonyl von 2 bis 5 C-Atomen, Carboxy, Sulfamoyl, Sulfo oder Sulfato substituiert sein kann, bevorzugt die Methyl- oder Ethylgruppe und insbesondere ein Wasserstoffatom;

n ist die Zahl 1 oder 2, bevorzugt 1;

Q ist eine Gruppe der allgemeinen Formel (2a) oder (2b)

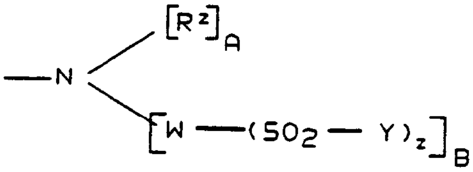

(2a)

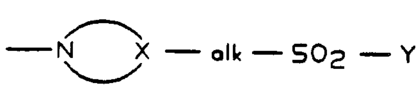

(2b)

in welchen

$R^z$ ein Wasserstoffatom oder eine Alkylgruppe von 1 bis 4 C-Atomen, wie insbesondere die Methyl- oder

Ethylgruppe, ist, die durch Halogen, wie Chlor und Brom, Hydroxy, Cyano, Alkoxy von 1 bis 4 C-Atomen, wie Methoxy und Ethoxy, Carboxy, Sulfamoyl, Sulfo oder Sulfato oder durch einen gegebenenfalls durch Substituenten aus der Gruppe Halogen, wie Chlor und Brom, Alkoxy von 1 bis 4 C-Atomen, wie Methoxy und Ethoxy, Alkyl von 1 bis 4 C-Atomen, wie Methyl, Sulfo und Carboxy substituierten Phenylrest substituiert sein kann, oder ein Cyclohexylrest oder ein gegebenenfalls durch Substituenten aus der Gruppe Halogen, wie Chlor und Brom, Alkoxy von 1 bis 4 C-Atomen, wie Methoxy und Ethoxy, Alkyl von 1 bis 4 C-Atomen, wie Methyl, Sulfo und Carboxy substituierter Phenylrest ist,

W ein gegebenenfalls substituierter Arylenrest oder ein Alkylen-arylen- oder Arylen-alkylen- oder Alkylen-arylen-alkylen- oder Arylen-alkylen-arylen-Rest ist, wobei die Alkylenreste solche von 1 bis 8, vorzugsweise von 2 bis 6, insbesondere von 2 bis 4, C-Atomen sind und substituiert sein können und die Arylenreste gegebenenfalls substituierte Phenylen- oder Naphthylenreste sind, und wobei die Alkylenreste durch 1 oder mehrere, wie 1 oder 2, Heterogruppen, wie Aminogruppen oder Sauerstoff- oder Schwefelatome oder Gruppen der Formeln $-SO_2-$ , CO- , $-SO_2$-NH- oder -CO-NH- , unterbrochen sein können und die Alkylen- und Arylenanteile in den kombinierten Alkylen/Arylen-Resten jeweils durch eine solche Gruppe voneinander getrennt sein können,

Y die Vinylgruppe oder eine β-Sulfatoethyl-, β-Thiosulfatoethyl- oder β-Phosphatoethyl-Gruppe oder eine β-Alkanoyloxy-ethyl-Gruppe mit 2 bis 5 C-Atomen im Alkanoylrest, wie die β-Acetyloxyethyl-Gruppe, oder die β-Benzoyloxy-ethyl-, β-(Sulfobenzoyloxy)-ethyl- oder die β-(p-Toluolsulfonyloxy)-ethyl-Gruppe oder eine β-Halogenethyl-Gruppe, wie die β-Bromethyl- oder β-Chlorethyl-Gruppe, bevorzugt die Vinylgruppe und insbesondere die β-Sulfatoethyl-Gruppe, ist,

z die Zahl 1 oder 2 ist,

A die Zahl Null oder 1 bedeutet und

B die Zahl 1 oder 2 bedeutet,

wobei die Summe von (A + B) gleich der Zahl 2 ist und wobei im Falle von B gleich 2 die Gruppen der Formel $-W-(SO_2-Y)_z$ zueinander die gleiche Bedeutung oder voneinander eine verschiedene Bedeutung haben können,

X zusammen mit dem N-Atom den bivalenten Rest eines aus 1 oder 2 Alkylengruppen von 1 bis 5 C-Atomen und gegebenenfalls 1 oder 2 Heterogruppen, wie Stickstoff- und Sauerstoffatomen oder einer Gruppe -NH- , bestehenden heterocyclischen Ringes bildet, wie beispielsweise den Piperazin-l,4-ylen- oder einen Piperidinylen-Rest, und

alk einen Alkylenrest von 1 bis 4 C-Atomen, bevorzugt von 2 oder 3 C-Atomen, wie den Ethylen- oder n-Propylen-Rest, bedeutet.

Bevorzugt ist F der Rest eines Mono- oder Disazofarbstoffes oder der Rest eines Metallkomplex-Azofarbstoffes, wie eines o,o'-1:1-Kupferkomplex-Mono- oder -Disazofarbstoffes, oder eines Triphendioxazin- oder eines Anthrachinon- oder eines Phthalocyaninfarbstoffes, wie eines Kupferphthalocyaninfarbstoffes.

Der Rest F kann in seinem Grundgerüst die bei organischen Farbstoffen üblichen Substituenten, einschließlich faserreaktive Gruppen, wie beispielsweise solche der oben definierten Formel $-SO_2-Y$ , gebunden enthalten. Solche Substituenten sind beispielsweise: Alkylgruppen von 1 bis 4 C-Atomen, wie Methyl, Ethyl, Propyl, Isopropyl oder Butyl, hiervon bevorzugt Ethyl und insbesondere Methyl; Alkoxygruppen von 1 bis 4 C-Atomen, wie Methoxy, Ethoxy, Propoxy, Isopropoxy und Butoxy, bevorzugt hiervon Ethoxy und insbesondere Methoxy; Acylaminogruppen von 2 bis 8 C-Atomen, wie die Acetylamino-, Propionylamino- oder Benzoylaminogruppe; primäre und mono- oder disubstituierte Aminogruppen, wie beispielsweise durch Alkylgruppen von 1 bis 4 C-Atomen und/oder Phenylgruppen, wie Monoalkylamino- und Dialkylaminogruppen mit 1 bis 4 C-Atomen im Alkylrest, Phenylamino- oder N-($C_1$-$C_4$-Alkyl)-N-phenyl-amino-Gruppen, wobei die Alkylreste noch substituiert sein können, beispielsweise durch Phenyl, Sulfophenyl, Hydroxy, Sulfato, Sulfo und Carboxy, und die Phenylgruppen noch subsituiert sein können, wie durch Chlor, Sulfo, Carboxy, Methyl und/oder Methoxy, so beispielsweise Methylamino-, Ethylamino-, Propylamino-, Isopropylamino-, Butylamino-, N,N-Di-(β-hydroxyethyl)-amino-, N,N-Di-(β-sulfatoethyl)-amino-, Sulfobenzylamino-, N,N-Di-(sulfobenzyl)-amino- und Diethylaminogruppen sowie Phenylamino- und Sulfophenylaminogruppen; Alkoxycarbonylgruppen mit einem Alkylrest von 1 bis 4 C-Atomen, wie Methoxycarbonyl und Ethoxycarbonyl; Alkylsulfonylgruppen von 1 bis 4 C-Atomen, wie Methylsulfonyl und Ethylsulfonyl; Trifluormethyl-, Nitro- und Cyanogruppen; Halogenatome, wie Fluor, Chlor und Brom; Carbamoylgruppen, die durch Alkyl von 1 bis 4 C-Atomen mono- und disubstituiert sein können, wobei die Alkylreste wiederum substituiert sein können, wie beispielsweise durch Hydroxy, Sulfato, Sulfo, Carboxy, Phenyl und Sulfophenyl, wie beispielsweise N-Methyl-carbamoyl und N-Ethyl-carbamoyl; Sulfamoylgruppen, die durch Alkylgruppen von 1 bis 4 C-Atomen mono- oder disubstituiert sein können, und N-Phenyl-N-alkylsulfamoylgruppen mit einer Alkylgruppe von 1 bis 4 C-Atomen, wobei diese Alkylgruppen wiederum durch Hydroxy, Sulfato, Sulfo, Carboxy, Phenyl und Sulfophenyl substituiert sein können, wie beispielsweise N-Methyl-sulfamoyl, N-Ethyl-sulfamoyl, N-Propyl-sulfamoyl, N-Isopropyl-sulfamoyl, N-Butyl-sulfamoyl, N-(β-Hydroxyethyl)-sulfamoyl und N,N-Di-(β-hydroxyethyl)-sulfamoyl; N-Phenyl-sulfamoyl-, Ureido-, Hydroxy-, Carboxy-, Sulfomethyl- und Sulfogruppen; β-Sulfatoethylsulfonyl-, β-Thiosulfatoethylsulfonyl-, β-Phosphatoethylsulfonyl-, β-Acetyloxiethylsulfonyl-, β-Chlorethylsulfonyl- und Vinylsulfonylgruppen.

Vorzugsweise ist der Farbstoffrest F durch eine oder mehrere, wie 2 bis 4, Sulfogruppen substituiert, und weiterhin kann er bevorzugt Substituenten enthalten, die aus der Gruppe Sulfo, Methyl, Ethyl, Methoxy, Ethoxy, Alkanoylamino von 2 bis 5 C-Atomen, wie Acetylamino, Benzoylamino, Amino, Chlor, Brom, Ureido, Hydroxy, Carboxy und Sulfomethyl ausgewählt sind.

Der Farbstoffrest F kann auch andere, aus der Literatur bekannte faserreaktive Gruppen besitzen, die nicht der Konstitution der allgemeinen Formel (3)

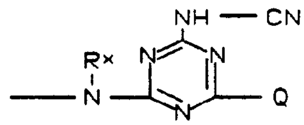

(3)

in welcher $R^x$ und Q die obengenannten Bedeutungen haben, entsprechen. Solche bekannten faserreaktiven Gruppen sind beispielsweise eine Gruppe der Vinylsulfonreihe wie die oben bereits erwähnte Gruppe der Formel $-SO_2-Y$ mit Y der obigen Bedeutung, die über einen Alkylenrest von 1 bis 4 C-Atomen, wie eine Methylengruppe, oder über eine Methylamino- oder Ethylaminogruppe an F gebunden sein kann, oder ein niedrigmolekularer, durch ein abspaltbares Atom oder eine abspaltbare Gruppe substituierter Alkenoylamino- oder Alkensulfonylamino-Rest oder ein durch ein abspaltbares Atom oder eine abspaltbare Gruppe substituierter carbocyclischer, carbocyclisch-heterocyclischer oder heterocyclischer Rest, die über eine Carbonylamino- oder Sulfonylamino-Gruppe an den Rest A gebunden sind, wobei die heterocyclischen Anteile dieser Reste vier-, fünf- oder sechs-gliedrig sind, oder ein über eine Amino-, Methylamino- oder Ethylamino-Gruppe an den Rest A gebundener, durch ein abspaltbares Atom oder eine abspaltbare Gruppe substituierter Triazinyl- oder Pyrimidinyl-Rest. Solche Reste sind beispielsweise ein über eine Amino-, Methylamino- oder Ethylamino-Gruppe gebundener halogensubstituierter sechsgliedriger heterocyclischer Rest, wie beispielsweise ein Halogentriazinyl- oder Halogenpyrimidinyl-Rest, oder sind aliphatische Acylaminoreste, wie ein Halogenacetylamino- oder Halogenpropionylamino-Rest.

Formelreste $R^x$ sind beispielsweise: Wasserstoff, Methyl, Ethyl, Propyl, Isopropyl, Butyl, Isobutyl, sek.-Butyl, tert.-Butyl, Carboxymethyl, β-Carboxyethyl, β-Carboxypropyl, Methoxycarbonylmethyl, Ethoxycarbonylmethyl, β-Methoxyethyl, β-Ethoxyethyl, β-Methoxypropyl, β-Chlorethyl, γ-Brompropyl, β-Hydroxyethyl, β-Hydroxybutyl, β-Cyanoethyl, Sulfomethyl, β-Sulfoethyl, Amidosulfonylmethyl und β-Sulfatoethyl.

Formelreste $R^z$ sind beispielsweise: Wasserstoff, Methyl, Ethyl, Carboxymethyl, Carbomethoxymethyl, Carbethoxymethyl, Sulfomethyl, Sulfamidomethyl, β-Carboxyethyl, β-Sulfoethyl, n-Propyl, β-Carboxypropyl, β-Sulfatoethyl, β-Ethoxyethyl, β-Methoxypropyl, γ-Chlorpropyl, γ-Brompropyl, n-Butyl, Isobutyl, n-Pentyl, n-Hexyl, n-Nonyl, n-Dodecyl, n-Hexadecyl, n-Pentadecyl, Cyclohexyl, Phenyl, 2-Chlorphenyl, 3-Chlorphenyl, 4-Chlorphenyl, 2- oder 3- oder 4-Sulfophenyl, 2-Methyl-phenyl, 4-Methoxy-phenyl, 3-Methyl-phenyl und 4-Ethylphenyl. Hiervon bevorzugt sind die gegebenenfalls substituierten Alkylgruppen und insbesondere bevorzugt die Methyl- und die Ethylgruppe und das Wasserstoffatom.

Beispiele für Gruppen der allgemeinen Formel (2a) und (2b) sind beispielsweise: 2-(β-Sulfatoethylsulfonyl)-phenyl-amino, 3-(β-Sulfatoethylsulfonyl)-phenyl-amino, 4-(β-Sulfatoethylsulfonyl)-phenyl-amino, 2-Carboxy-5-(β-sulfatoethylsulfonyl)-phenyl-amino, 2-Chlor-3-(β-Sulfatoethylsulfonyl)-phenyl-amino, 2-Chlor-4-(β-sulfatoethylsulfonyl)-phenyl-amino, 2-Ethoxy-4- oder -5-(β-sulfatoethylsulfonyl)-phenyl-amino, 2-Ethyl-4-(β-sulfatoethylsulfonyl)-phenyl-amino, 2-Methoxy-5-(β-sulfatoethylsulfonyl)-phenyl-amino, 2,4-Diethoxy-5-(β-sulfatoethylsulfonyl)-phenyl-amino, 2,4-Dimethoxy-5-(β-sulfatoethylsulfonyl)-phenyl-amino, 2,5-Dimethoxy-4-(β-sulfatoethylsulfonyl)-phenyl-amino, 2-Methoxy-5-methyl-4-(β-sulfatoethylsulfonyl)-phenyl-amino, 2- o der 3- oder 4-(β-Thiosulfatoethylsulfonyl)-phenyl-amino, 2-Methoxy-5-(β-thiosulfatoethylsulfonyl)-phenyl-amino, 2-Sulfo-4-(β-phosphatoethylsulfonyl)-phenyl-amino, 2-Sulfo-4-vinylsulfonyl-phenyl-amino, 2-Hydroxy-4- oder -5-(β-sulfatoethylsulfonyl)-phenyl-amino, 2-Chlor-4- oder -5-(β-chlorethylsulfonyl)-phenyl-amino, 2-Hydroxy-3-sulfo-5-(β-sulfatoethylsulfonyl)-phenyl-amino, 3- oder 4-(β-Acetoxyethylsulfonyl)-phenyl-amino, 2-Methoxy-4-[β-(N-methyl-tauryl)-ethylsulfonyl]-phenyl-amino, 5-(β-Sulfatoethylsulfonyl)naphth-2-yl-amino, 6- oder 7- oder 8-(β-Sulfatoethylsulfonyl)-naphth-2-yl-amino, 6-(β-Sulfatoethylsulfonyl)-1-sulfo-naphth-2-yl-amino, 5-(β-Sulfatoethylsulfonyl)-1-sulfo-naphth-2-yl-amino, 8-(β-Sulfatoethylsulfonyl)-6-sulfo-naphth-2-yl-amino, β-[4-(β'-Sulfatoethylsulfonyl)-phen]-ethylamino, β-[2-Sulfo-4-(β'-sulfatoethylsulfonyl)-phen]-ethylamino, β-(β'-Chlorethylsulfonyl)-ethylamino, β-(β'-Sulfato-ethylsulfonyl)-ethylamino, β-(Vinylsulfonyl)-ethylamino, γ-(β'-Chlorethylsulfonyl)-propylamino, γ-(β'-Sulfato-ethylsulfonyl)-propylamino, γ-(β'-Bromethylsulfonyl)-propylamino, γ-(Vinylsulfonyl)-propylamino, 1-Methyl-1-(β-sulfatoethylsulfonyl)-1-ethylamino, δ-(β'-Sulfatoethylsulfonyl)-butylamino, 2-Methyl-2-(β-chlor-ethylsulfonyl)-1-propylamino, ω-(β'-Chlorethylsulfonyl)-pentylamino, β-(β'-Chlorethylsulfonyl)-n-hexylamino, N-Methyl-N- [β-(β'-chlorethylsulfonyl)-ethyl]-amino, N-Ethyl-N-[β-(β'-chlorethylsulfonyl)-ethyl]-amino, N-n-Propyl-N-[β-(β'-chlorethylsulfonyl)-ethyl]-amino, N-n-Butyl-N-[β-(β'-chlorethylsulfonyl)-ethyl]-amino, N-n-Pentyl-N-[β-(β'-chlorethylsulfonyl)-ethyl]-amino, N-n-Hexyl-N-[β-(β'-chlorethylsulfonyl)-ethyl]-amino, N-n-Nonyl-N-[β-(β'-chlorethylsulfonyl)-ethyl]-amino, N-n-Dodecyl-N-[β-(β'-chlorethylsulfonyl)-ethyl]-amino, N-n-Hexadecyl-N-[β-(β'-chlorethylsulfonyl)-ethyl]-amino, N-n-Octadecyl-N-[β-(β'-chlorethylsulfonyl)-ethyl]-amino, N-Carboxymethyl-N-[β-(β'-bromethylsulfonyl)-ethyl]-amino, N-Sulfatomethyl-N-[β-(β'-chlorethylsulfonyl)-ethyl]-amino, N-(β-Carboxyethyl)-N-[γ'-(β"-chlorethylsulfonyl)-propyl]-amino, N-(β-Sulfatoethyl)-N-[γ'-(β"-chlorethylsulfonyl)-propyl]-amino, N-(β-Sulfatoethyl)-N-[δ'-(β"-chlorethylsulfonyl)-butyl]-amino, N-(β-Ethoxyethyl)-N-[δ'-(β"-chlorethylsulfonyl)-butyl]-amino, N-(γ-Chlorpropyl)-N-[β'-(β"-chlorethylsulfonyl)-ethyl]-amino, N-Phenyl-N-[β-(β'-chlorethylsulfonyl)-ethyl]-amino, N-(4-Chlorphenyl)-N-[β-(β'-chlorethylsulfonyl)-ethyl]-amino, N-(2-Methylphenyl)-N-[β-(β'-chlorethylsulfonyl)-ethyl]-amino, N-(4-Methoxyphenyl)-N-[β-(β'-chlorethylsulfonyl)-ethyl]-amino, N-(3-Sulfophenyl)-N-[β-(β'-chlorethylsulfonyl)-ethyl]-amino, N-(4-Sulfophenyl)-N-[β-(β'-chlorethylsulfonyl)-ethyl]-amino, Bis-[β-(β'-chlorethylsulfonyl)-ethyl]-amino, Bis-[β-(β'-bromethylsulfonyl)-ethyl]-amino, Bis-[γ-(β'-chlorethylsulfonyl)-propyl]-amino, Bis-[δ-(β'-chlorethylsulfonyl)-butyl]-amino, Bis-(β-vinylsulfonyl-ethyl)-amino, N-(β-Cyanoethyl)-N-[γ'-(β"-chlorethylsulfonyl)-propyl]-amino, β-[β'-(β"-Chlorethylsulfonyl)-ethylamino]-ethylamino, β-[β'-(β"-Sulfatoethylsulfonyl)-ethylamino]-ethylamino, β-[β'-(β"-Chlorethylsulfonyl)-ethoxy]-ethylamino, β-[β'-(β"-Sulfatoethylsulfonyl)-ethoxy]-ethylamino, 4-[β-(β'-Chlorethylsulfonyl)-ethyl]-piperazin-1-yl, 4-[γ-(β'-Chlorethylsulfonyl)-propyl]-piperazin-1-yl, 4-[β-(β'-Sulfatoethylsulfonyl)-ethyl]-piperazin-1-yl, 4-[γ-(β'-Sulfatoethylsulfonyl)-propyl]-piperazin-1-yl, 4-{N-[β-(4'-β'-Sulfatoethylsulfonyl-phenyl)-ethyl]-amidocarbonyl-methoxy}-phenylamino, 4-{N-[3'-oder -4'-(β-Sulfatoethylsulfonyl)-phenyl]-amidocarbonyl-methoxy}-phenylamino, 3,4-Di-(β-sulfatoethylsulfonyl)-phenylamino, 2,5-Di-(β-sulfatoethylsulfonyl)-phenylamino, 4-[γ-(β'-Sulfatoethylsulfonyl)-propoxy]-phenylamino, 2,5-Bis-[(β-sulfatoethylsulfonyl)-methyl]-phenylamino, 3- oder 4-{N-[γ-(β'-Sulfatoethylsulfonyl)-propyl-amidocarbonyl]}-phenylamino, 3,5-Bis-{N-[γ-(β'-sulfatoethylsulfonyl)-propyl-amidocarbonyl]}-phenylamino, 3-Sulfo-4-{[N-γ-(β'-sulfatoethylsulfonyl)-propyl-amidocarbonyl]-methoxy}phenylamino, 4-{[N-γ-(β'-Sulfatoethylsulfonyl)-propyl-amidocarbonyl]-methoxy}-phenylamino.

In dem Brückenglied W sind Arylenreste bevorzugt Phenylen- und Naphthylenreste, die einen oder mehrere, wie 1, 2 oder 3, bevorzugt 1 oder 2, Substituenten enthalten können, die beispielsweise der Gruppe der Substituenten Alkyl von 1 bis 4 C-Atomen, wie Methyl und Ethyl, Halogen, wie Fluor, Chlor und Brom, Hydroxy, Cyano, Alkoxy von 1 bis 4 C-Atomen, wie Methoxy und Ethoxy, Carboxy, Sulfamoyl, Sulfo, Trifluormethyl und Alkoxycarbonyl von 2 bis 5 C-Atomen, wie Methoxycarbonyl und Ethoxycarbonyl, angehören. Bevorzugt ist hiervor W ein Phenylenrest, der durch die oben angegebenen Substituenten substituiert sein kann, wobei die Substituenten aus der Gruppe Alkyl von 1 bis 4 C-Atomen, Chlor, Alkoxy von 1 bis 4 C-Atomen, Carboxy und Sulfo bevorzugt sind.

Alkylenreste im Bindungsglied W sind bevorzugt geradkettige und verzweigte Alkylengruppen von 2 bis 6 C-Atomen, die durch die angegebenen Heterogruppen, wie 1 oder 2 dieser Heterogruppen, unterbrochen sein können. Bevorzugt hiervon sind geradkettige Alkylengruppen von 2 bis 4 C-Atomen oder eine durch ein Sauerstoffatom oder eine Amino- oder Methylamino-Gruppe unterbrochene Alkylengruppe von 4 C-Atomen. Insbesondere bevorzugt ist von den Alkylengruppen der 1,3-Propylen-Rest. Substituenten in den Alkylengruppen von W können beispielsweise Sulfo-, Carboxy-, Hydroxy- und Cyanogruppen sein.

Ist der Formelrest W ein Alkylen-arylen- oder ein Alkylen-arylen-alkylen-Rest, so ist in diesen Gruppen der Alkylenrest bevorzugt ein geradkettiger Alkylenrest von 1 bis 3 C-Atomen und der Arylenrest bevorzugt ein 1,3- oder insbesondere 1,4-Phenylenrest. Alkylen-arylen-Reste sind insbesondere die Reste der Formeln $-CH_2-CH_2-$phenylen- und $-CH_2-$phenylen-.

Die faserreaktive Gruppierung der Formel (3) ist bevorzugt ein Rest der allgemeinen Formel (3a) oder insbesondere bevorzugt ein Rest der allgemeinen Formel (3b)

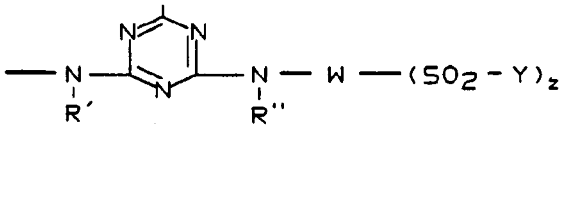

(3a)

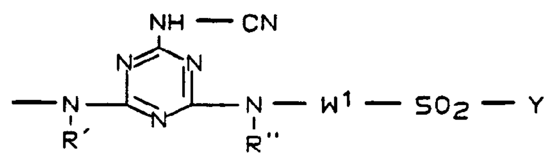

(3b)

wobei in Formel (3a) R' die Methyl- oder Ethylgruppe oder insbesondere ein Wasserstoffatom bedeutet, R" ein Wasserstoffatom oder die Methyl- oder Ethylgruppe bedeutet und W, Y und z die obengenannten, insbesondere bevorzugten Bedeutungen besitzen, und in Formel (3b) R' die Methyl- oder Ethylgruppe oder insbesondere ein Wasserstoffatom bedeutet, R" die Methylgruppe oder insbesondere ein Wasserstoffatom ist, Y die obengenannte, insbesondere bevorzugte Bedeutung besitzt und $W^1$ eine Alkylengruppe von 2 bis 4 C-Atomen, bevorzugt von 2 oder insbesondere von 3 C-Atomen, bedeutet oder ein Phenylenrest ist, der durch 1 oder 2 Substituenten aus der Gruppe Methyl, Methoxy, Ethoxy und Chlor substituiert sein kann, bevorzugt hiervon der 1,3- oder 1,4-Phenylenrest ist, oder eine Gruppe der allgemeinen Formel (a)

$-(CH_2)_w-$ phenylen- (a)

bedeutet, in welcher w die Zahl 1, 2, 3 oder 4, bevorzugt 2, ist und phenylen den 1,3- oder 1,4-Phenylenrest bedeutet.

Wichtige Azofarbstoffe entsprechend der allgemeinen Formel (1) sind solche, in denen A einen Rest eines Farbstoffes der Benzol-azo-naphthol-, der Benzol-azo-1-phenyl-5-pyrazolon-, der Benzol-azo-benzol-, der Naphthalin-azo-benzol-, der Benzol-azo-aminonaphthalin-, der Naphthalinazo-naphthalin-, der Naphthalin-azo-1-phenyl-5-pyrazolon-, der Benzol-azo-pyridon- und der Naphthalin-azo-pyridon-Reihe bedeutet, wobei auch hier die sulfogruppenhaltigen Farbstoffe bevorzugt sind.

Von den erfindungsgemäßen 1:1-Kupferkomplex-Azofarbstoffen sind diejenigen der Benzol- und Naphthalinreihe bevorzugt.

Bevorzugte Mono- und Disazofarbstoffe der allgemeinen Formel (1) sind beispielsweise solche der allgemeinen Formeln (4a), (4b) und (4c)

$$D_1 - N = N -(E - N = N)_v - K - Z \qquad (4a)$$

$$Z - D_1 - N = N - (E - N = N)_v - K \qquad (4b)$$

$$Z - D_1 - N = N -(E - N = N)_v - K - Z \qquad (4c)$$

und die davon abgeleiteten Schwermetallkomplex-Verbindungen, wie 1:1-Kupferkomplex-Verbindungen, in welchen

- $D_1$ der Rest einer Diazokomponente der Benzol- oder Naphthalinreihe ist,
- E der Rest einer Mittelkomponente der Benzol- oder Naphthalinreihe bedeutet,
- K der Rest einer Kupplungskomponente der Benzol-, Naphthalin-, Pyrazolon-, 6-Hydroxypyridon(2)- oder Acetessigsäurearylamid-Reihe ist,
  wobei $D_1$, E und K für Azofarbstoffe übliche Substituenten, wie beispielsweise Hydroxy-, Amino-, Methyl-, Methoxy-, Ethoxy-, Sulfo-, Carboxy-, gegebenenfalls substituierte Alkanoylaminogruppen von 2 bis 4 C-Atomen im Alkanoylrest, gegebenenfalls substituierte Benzoylaminogruppen und Halogenatome, wie Brom- und Chloratome, enthalten können und $D_1$, E und K zusammen mindestens zwei Sulfogruppen, vorzugsweise drei oder vier Sulfogruppen, besitzen,
- v für die Zahl Null oder 1 steht und
- Z eine Gruppe der Formel (3) oder bevorzugt der Formel (3a) oder (3b) ist.

Bevorzugt sind weiterhin Disazofarbstoffe der allgemeinen Formel (4d) oder (4e)

$$D_1 - N = N - K^o - N = N - D_2 - Z \qquad (4d)$$

$$Z - D_1 - N = N - K^o - N = N - D_2 - Z \qquad (4e)$$

in welchen $D_1$ und $D_2$ unabhängig voneinander den Rest einer Diazokomponente der Benzol- oder Naphthalinreihe und $K^o$ den Rest einer bivalenten Kupplungskomponente der Naphthalinreihe darstellt, wobei $D_1$, $D_2$ und $K^o$ die für Azofarbstoffe üblichen Substituenten, wie die oben bereits erwähnten, tragen können, wobei $D_1$, $D_2$ und $K^o$ zusammen mindestens zwei Sulfogruppen, vorzugsweise drei oder vier Sulfogruppen, enthalten.

Solche Azofarbstoffe der allgemeinen Formel (1) sind insbesondere Farbstoffe der allgemeinen Formeln (4f), (4g) und (4h)

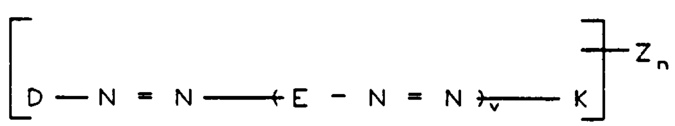

(4f)

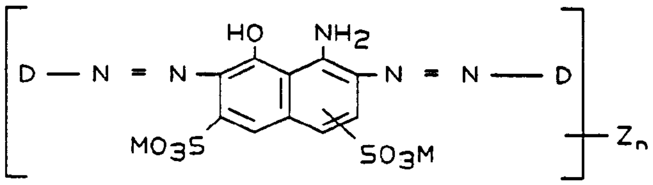

(4g)

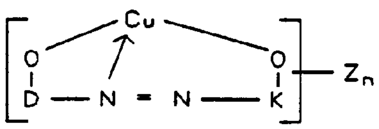

(4h)

in welchen

D jeweils für den Rest einer Diazokomponente steht, die zueinander gleiche oder voneinander verschiedene Bedeutungen besitzen können, wie beispielsweise einen Rest $D_1$ obiger Bedeutung darstellt,

E den bivalenten Rest einer kupplungsfähigen und diazotierbaren Verbindung, beispielsweise obiger Bedeutung, ist,

K den Rest einer Kupplungskomponente, beispielsweise obiger Bedeutung, darstellt,

v für die Zahl Null oder 1 steht,

Z einen Rest der allgemeinen Formel (3) oder (3a) oder (3b) bedeutet,

n die Zahl 1 oder 2, bevorzugt 1, ist und der Rest Z an den Rest D oder den Rest K oder im Falle von n = 2 jeweils an D und K bzw. an beide D gebunden ist sowie

M ein Wasserstoffatom oder ein Alkalimetall, wie Natrium, Kalium oder Lithium, ist.

Die vorliegende Erfindung betrifft weiterhin Verfahren zur Herstellung der erfindungsgemäßen Farbstoffe der allgemeinen Formel (1). Sie lassen sich in an und für sich üblicher Weise analog bekannten, für die jeweilige Farbstoffklasse spezifischen Synthesewegen herstellen, indem man für den jeweiligen Farbstoff typische Vorprodukte, von denen mindestens eines eine Gruppe der allgemeinen Formel (3) enthält, miteinander umsetzt oder indem man von einer aminogruppenhaltigen Ausgangsverbindung der allgemeinen Formel (55)

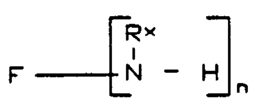

(55)

in welcher F, $R^x$ und n die obengenannten Bedeutungen haben, ausgeht und diese mit einem Trihalogen-s-triazin der allgemeinen Formel (56)

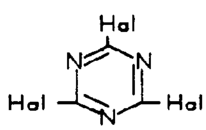

(56)

in welcher Hal für ein Halogenatom, wie insbesondere Chlor- oder Fluoratom, steht, mit Cyanamid oder einem Alkalimetallsalz davon und mit einem Amin der allgemeinen Formel H-Q mit Q der obengenannten Bedeutung in stöchometrischen Mengen in beliebiger Reihenfolge miteinander umsetzt und gegebenenfalls anschließend weitere, dem Fachmann geläufige, erforderliche Umwandlungsreaktionen durchführt.

Insbesondere lassen sich die erfindungemäßen Farbstoffe erfindungsgemäß herstellen, indem man eine Verbindung entsprechend der allgemeinen Formel (57)

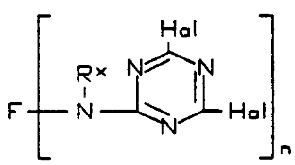

(57)

in welcher F, $R^x$ und n die obengenannten Bedeutungen haben und Hal für ein Halogenatom, wie insbesondere ein Chlor- oder Fluoratom, steht, mit Cyanamid oder einem Alkalimetallsalz davon umsetzt und die so erhaltene Verbindung der allgemeinen Formel (58)

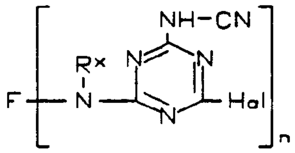
(58)

in welcher F, $R^x$ und Hal die obengenannten Bedeutungen haben, mit einem Amin der allgemeinen Formel H-Q mit Q der obengenannten Bedeutung umsetzt oder daß man eine Verbindung der allgemeinen Formel (59)

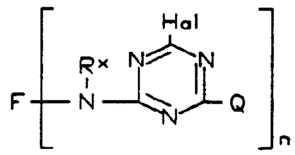
(59)

in welcher F, $R^x$, Hal, Q und n die obengenannten Bedeutungen haben, mit Cyanamid oder einem Alkalimetallsalz davon umsetzt, oder daß man eine Verbindung der allgemeinen Formel (55) mit einer Verbindung der allgemeinen Formel (60)

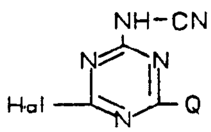
(60)

mit Hal und Q der obgengenannten Bedeutung umsetzt.

Die Umsetzung einer Ausgangsverbindung der allgemeinen Formel (58) mit dem Amin der allgemeinen Formel H-Q erfolgt im wäßrigen oder wäßrig-organischen Medium in Suspension oder Lösung bei einer Temperatur zwischen 30 und 100°C, vorzugsweise zwischen 65 und 85°C, und bei einem pH-Wert zwischen 3 und 11,5, vorzugsweise zwischen 3,5 und 7. Führt man die Umsetzung in einem wäßrig-organischem Medium durch, so ist das organische Medium beispielsweise Aceton, Dimethylformamid und N-Methyl-pyrrolidon. Vorteilhaft wird der bei der Kondensation freiwerdende Halogenwasserstoff laufend durch Zugabe wäßriger Alkalihydroxide, -carbonate oder -bicarbonate neutralisiert.

Die Umsetzung der Verbindung der Formel (55) mit der Verbindung der allgemeinen Formel (60) erfolgt vorzugsweise bei einer Temperatur zwischen 25 und 90°C, insbesondere zwischen 45 und 75°C, und bei einem pH-Wert zwischen 3 und 11,5, insbesondere zwischen 3,5 und 6,5.

Verbindungen der allgemeinen Formel (58) lassen sich außer der Umsetzung einer Verbindung der Formel (57) mit Cyanamid auch so herstellen, daß man, analog bekannter Verfahrensweisen, ein entsprechendes 2,4-Dihalogeno-6-cyanamido-s-triazin mit einer Ausgangsverbindung der allgemeinen Formel (55) umsetzt oder, ebenfalls analog bekannter Verfahrensweisen, durch Reaktion eines für den Farbstofftyp üblichen Farbstoffvorproduktes, das jedoch eine Gruppe der allgemeinen Formel (61)

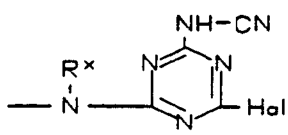
(61)

enthält, in welcher $R^x$ und Hal die obengannten Bedeutungen haben, mit einem weiteren, gegebenenfalls eine Gruppe der Formel (61) enthaltendem Vorprodukt.

Das Amin der Formel H-Q wird in der Regel in Form eines Salzes, wie eines Sulfats oder bevorzugt in Form des Hydrochlorids, in die Umsetzungen eingesetzt.

Geht man bei der erfindungsgemäßen Synthese der Azofarbstoffe von Diazo- und Kupplungskomponenten aus, von denen eine oder beide eine Gruppe der allgemeinen Formel (3) enthalten, erfolgen die Umsetzungen in der üblichen Verfahrensweise der Diazotierungs- und Kupplungsreaktionen, so die Diazotierung in der Regel bei einer Temperatur zwischen -5°C und +15°C und einem pH-Wert unterhalb von 2 mittels einer starken Säure und Alkalinitrit in bevorzugt wäßrigem Medium und die Kupplungsreaktion in der Regel bei einem pH-Wert zwischen 1,5 und 4,5 im Falle einer aminogruppenhaltigen Kupplungskomponente und bei einem pH-Wert zwischen 3 und 7,5 im Falle einer hydroxygruppenhaltigen Kupplungskomponente und bei einer Temperatur zwischen 0 und 25°C, ebenso bevorzugt im wäßrigen Medium.

Ausgangsverbindungen, die als Diazokomponenten dienen können, sind beispielsweise: Aminobenzol, 1-Amino-2-, -3- oder -4-methylbenzol, 1-Amino-2-, -3- oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 4-Aminobiphenyl, 1-Aminobenzol-2-, -3- oder -4-carbonsäure, 2-Aminodiphenyläther, 1-Aminobenzol-2-, -3- oder -4-sulfonsäureamid, -N-methylamid, -N-ethylamid, -N,N-dimethylamid oder -N,N-diethylamid, Dehydrothio-p-toluidin-sulfonsäure, 1-Amino-4-trifluormethyl-6-sulfonsäure, 1-Amino-3- oder -4-nitrobenzol, 1-Amino-3- oder -4-acetylaminobenzol, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3- oder -4-sulfonsäure, 1-Amino-2-carboxybenzol-4-sulfonsäure, 1-Amino-4-carboxybenzol-2-sulfonsäure, 1-Amino-4- oder -5-chlorbenzol-2-sulfonsäure, 1-Amino-6-chlorbenzol-3- oder -4-sulfonsäure, 1-Amino-3,4-dichlorbenzol-6-sulfonsäure, 1-Amino-2,5-dichlorbenzol-6-sulfonsäure, 1-Amino-2,5-dichlorbenzol-4-sulfonsäure, 1-Amino-4-methyl-5-chlorbenzol-2-sulfonsäure, 1-Amino-5-methyl-4-chlorbenzol-2-sulfonsäure, 1-Amino-4- oder -5-methoxybenzol-2-sulfonsäure, 1-Amino-6-methoxybenzol-3- oder -4-sulfonsäure, 1-Amino-6-ethoxybenzol-3- oder -4-sulfonsäure, 1-Amino-2,4-dimethoxybenzol-6-sulfonsäure, 1-Amino-2,5-dimethoxybenzol-4-sulfonsäure, 1-Amino-3-acetylaminobenzol-6-sulfonsäure, 1-Amino-4-acetylaminobenzol-2-sulfonsäure, 1-Amino-3-acetylamino-4-methylbenzol-6-sulfonsäure, 2-Amino-1-methylbenzol-3,5-disulfonsäure, 1-Amino-4-methoxybenzol-2,5-disulfonsäure, 1-Amino-3- oder -4-nitrobenzol-6-sulfonsäure, 1-Aminonaphthalin, 2-Aminonaphthalin, 1-Aminonaphthalin-2-, -4-, -5-, -6-, -7- oder -8-sulfonsäure, 2-Aminonaphthalin-1-, -3-, -4-, -5-, -6-, -7- oder -8-sulfonsäure, 1-Aminonaphthalin-3,6- oder -5,7-disulfonsäure, 2-Aminonaphthalin-1,5-, -1,7-, -3,6-, -5,7-, -4,8- oder -6,8-disulfonsäure, 1-Aminonaphthalin-2,5,7-trisulfonsäure, 2-Aminonaphthalin-1,5,7-, -3,6,8- oder -4,6,8-trisulfonsäure, 1-Hydroxy-2-aminobenzol-4-sulfonsäure, 1-Hydroxy-2-aminobenzol-5-sulfonsäure, 1-Hydroxy-2-aminobenzol-4,6-disulfonsäure, 1-Hydroxy-2-amino-4-acetylaminobenzol-6-sulfonsäure, 1-Hydroxy-2-amino-6-acetylaminobenzol-4-sulfonsäure, 1-Hydroxy-2-amino-4-chlorbenzol-5-sulfonsäure, 1-Hydroxy-2-amino-4-methylsulfonylbenzol, 1-Amino-2-hydroxy-6-nitronaphthalin-4-sulfonsäure, 2-Amino-1-hydroxynaphthalin-4,8-disulfonsäure, 4-Aminoazobenzol-3,4'-disulfonsäure, 3-Methoxy-4-amino-6-methylazobenzol-2',4'- disulfonsäure, 3-Methoxy-4-amino-6-methylazobenzol-2',5'-disulfonsäure, 1,3-Diaminobenzol, 1,4-Diaminobenzol, 1,3-Diamino-4-chlorbenzol, 1,3-Diamino-4-methylbenzol, 1,3-Diamino-4-ethylbenzol, 1,3-Diamino-4-methoxybenzol, 1,3-Diamino-4-ethoxybenzol, 1,4-Diamino-2-methylbenzol, 1,4-Diamino-2-methoxybenzol, 1,4-Diamino-2-ethoxybenzol, 1,4-Diamino-2-chlorbenzol, 1,4-Diamino-2,5-dimethylbenzol, 1,4-Diamino-2,5-diethylbenzol, 1,4-Diamino-2-methyl-5-methoxybenzol, 1,4-Diamino-2,5-dimethoxybenzol, 1,4-Diamino-2,5-diethoxybenzol, 2,6-Diamino-naphthalin, 1,3-Diamino-2,4,6-trimethylbenzol, 1,4-Diamino-2,3,5,6-tetramethylbenzol, 1,3-Diamino-4-nitrobenzol, 4,4'-Diaminostilben, 4,4'-Diaminodiphenylmethan, 4,4'-Diaminobiphenyl (Benzidin), 3,3'-Dimethylbenzidin, 3,3'-Dimethoxybenzidin, 3,3'-Dichlorbenzidin, 3,3'-Dicarboxybenzidin, 3,3'-Dicarboxymethoxybenzidin, 2,2'-Dimethylbenzidin, 4,2'-Diaminodiphenyl (Diphenylin), 2,6-Diaminonaphthalin-4,8-disulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure,1,4-Diamino-2-methylbenzol-5-sulfonsäure, 1,5-Diamino-6-methylbenzol-3-sulfonsäure, 1,3-Diamino-6-methylbenzol-4-sulfonsäure, 3-(3'-Aminobenzoylamino)-1-aminobenzol-6-sulfonsäure, 3-(4'-Aminobenzoylamino)-1-aminobenzol-6-sulfonsäure, 1-(4'-Aminobenzoylamino)-4-aminobenzol-2,5-disulfonsäure, 1,4-Diaminobenzol-2-carbonsäure, 1,3-Diaminobenzol-4-carbonsäure, 1,2-Diaminobenzol-4-carbonsäure, 1,3-Diaminobenzol-5-carbonsäure, 1,4-Diamino-2-methylbenzol, 4,4'-Diaminodiphenyloxid, 4,4'-Diamino-diphenylharnstoff-2,2'-disulfonsäure, 4,4'-Diaminodiphenyloxyethan-2,2'-disulfonsäure, 4,4'-Diaminostilben-2,2'-disulfonsäure, 4,4'-Diaminodiphenylethan-2,2'-disulfonsäure, 2-Amino-5-aminomethylnaphthalin-1-sulfonsäure, 2-Amino-5-aminomethylnaphthalin-1,7-disulfonsäure, 1-Amino-4-methoxy-5-aminomethylbenzol-6-sulfonsäure, 2-(β-Sulfatoethylsulfonyl)-phenyl-anilin, 3-(β-Sulfatoethylsulfonyl)-anilin, 4-(β-Sulfatoethylsulfonyl)-anilin, 2-Carboxy-5-(β-sulfatoethylsulfonyl)-anilin, 2-Chlor-3-(β-Sulfatoethylsulfonyl)-anilin, 2-Chlor-4-(β-sulfatoethylsulfonyl)-anilin, 2-Ethoxy-4- oder -5-(β-sulfatoethylsulfonyl)-anilin, 2-Ethyl-4-(β-sulfatoethylsulfonyl)-anilin, 2-Methoxy-5-(β-sulfatoethylsulfonyl)-anilin, 2,4-Diethoxy-5-(β-sulfatoethylsulfonyl)-anilin, 2,4-Dimethoxy-5-(β-sulfatoethylsulfonyl)-anilin, 2,5-Dimethoxy-4-(β-sulfatoethylsulfonyl)-anilin, 2-Methoxy-5-methyl-4-(β-sulfatoethylsulfonyl)-anilin, 2- oder 3- oder 4-(β-Thiosulfatoethylsulfonyl)-anilin, 2-Methoxy-5-(β-thiosulfatoethylsulfonyl)-anilin, 2-Sulfo-4-(β-phosphatoethylsulfonyl)-anilin, 2-Sulfo-4-vinylsulfonyl-anilin, 2-Hydroxy-4- oder -5-(β-sulfatoethylsulfonyl)-anilin, 2-Chlor-4- oder -5-(β-chlorethylsulfonyl)-anilin, 2-Hydroxy-3-sulfo-5-(β-sulfatoethylsulfonyl)-anilin, 3- oder 4-(β-Acetoxyethylsulfonyl)-anilin, 2-Methoxy-4-[β-(N-methyl-tauryl)-ethylsulfonyl]-anilin, 5-(β-Sulfatoethylsulfonyl)-2-amino-naphthalin, 6- oder 7- oder 8-(β-Sulfatoethylsulfonyl)-2-amino-naphthalin, 6-(β-Sulfatoethylsulfonyl)-1-sulfo-2-amino-naphthalin, 5-(β-Sulfatoethylsulfonyl)-1-sulfo-2-amino-naphthalin, 8-(β-Sulfatoethylsulfonyl)-6-sulfo-2-amino-naphthalin.

Wenn bei der erfindungsgemäßen Synthese als Diazokomponente statt eines Diamins eine Amino-acetylaminoverbindung eingesetzt wird, aus der nachträglich die Acetylgruppe durch Verseifen wieder abgespalten wird, kommen die Monoacetylverbindungen der oben genannten Diazokomponenten in Frage, wie beispielsweise 1-Acetylamino-3-aminobenzol-4-sulfonsäure und 1-Acetylamino-4-aminobenzol-3-sulfonsäure.

Kupplungskomponenten, die zur Synthese der erfindungsgemäßen Azofarbstoffe dienen können, sind beispielsweise:

Phenol, 1-Hydroxy-3- oder -4-methylbenzol, 1-Hydroxybenzol-4-sulfonsäure, 1-Hydroxynaphthalin, 2-Hydroxynaphthalin, 2-Hydroxynaphthalin-6- oder -7-sulfonsäure, 2-Hydroxynaphthalin-3,6- oder -6,8-disulfonsäure, 1-Hydroxynaphthalin-4-sulfonsäure, 1-Hydroxynaphthalin-4,6- oder -4,7-disulfonsäure, 1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynaphthalin-4-sulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- bzw. 2-Ethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methylamino- oder 2-Ethylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6- oder -4,6-disulfonsäure, 1-Acetylamino-8-hydroxynaphthalin-3,6- oder -4,6-disulfonsäure, 1-(4'-Aminobenzoylamino)-8-hydroxynaphthalin-3,6- oder -4,6-disulfonsäure, 1-(4'-Nitrobenzoylamino)-8-hydroxynaphthalin-3,6- oder -4,6-disulfonsäure, 1-(3'-Aminobenzoylamino)-8-hydroxynaphthalin-3,6- oder -4,6-disulfonsäure,1-(3'-Nitrobenzoylamino)-8-hydroxynaphthalin-3,6- oder -4,6-disulfonsäure, 2-(4'-Amino-3'-sulfophenylamino)-5-hydroxynaphthalin-7-sulfonsäure, 3-Methyl-5-pyrazolon, 1-Phenyl-3-methyl-5-pyrazolon, 1-(4'-Sulfophenyl)-5-pyrazolon-3-carbonsäure, 1-(3'-Aminophenyl)-3-methyl-5-pyrazolon, 1-(2' ,5'-Disulfonphenyl)-3-methyl-5-pyrazolon, 1-(2'-Methyl-4'-sulfophenyl)-5-pyrazolon-3-carbonsäure, 1-(4' ,8'-Disulfonaphthyl-[2'])-3-methyl-5-pyrazolon, 1-(5' ,7'-Disulfonaphthyl-[2'])-3-methyl-5-pyrazolon, 1-(2 ,5'-Dichlor-4'-sulfophenyl)-3-methyl-5-pyrazolon, 3-Aminocarbonyl-4-methyl-6-hydroxy-2-pyridon, 1-Ethyl-3-cyan- oder -3-chlor-4-methyl-6-hydroxy-2-pyridon, 1-Ethyl-3-sulfomethyl-4-methyl-6-hydroxy-2-pyridon, 2,4,6-Triamino-3-cyanpyridin, 2-(3'-Sulfophenylamino)-4,6-diamino-3-cyanpyridin, 2-(2'-Hydroxyethylamino)-3-cyan-4-methyl-6-aminopyridin, 2,6-Bis-(2'-hydroxyethylamino)-3-cyan-4-methylpyridin, 1-Ethyl-3-carbonyl-4-methyl-6-hydroxy-2-pyridon, 1-Ethyl-3-sulfomethyl-4-methyl-5-carbonyl-6-hydroxy-2-pyridon, N-Acetoacetylaminobenzol, 1-(N-Acetoacetylamino)-2-methoxybenzol-5-sulfonsäure, 4-Hydroxychinol-2-on, 1-Amino-8-hydroxy-2-(phenylazo)-naphthalin-3,6-disulfonsäure, 1-Amino-8-hydroxy-2-(4'-sulfophenylazo)-naphthalin-3,6-disulfonsäure, 1-Amino-8-hydroxy-2-(2',5'-disulfonphenylazo)-naphthalin-3,6-disulfonsäure, 1-(β-Aminoethyl)-3-cyan-4-methyl-6-hydroxy-2-pyridon,1-(γ-Aminopropyl)-3-sulfomethyl-4-methyl-6-hydroxy-2-pyridon, 1,3-Diaminobenzol, 1-Amino-3-N,N-di-(β-hydroxyethyl)-aminobenzol,1-Amino-3-N,N-di-(β-sulfatoethyl)-aminobenzol, 1-Amino-3-N,N-di-(β-hydroxyethyl)-amino-4-methoxybenzol, 1-Amino-3-N,N-di-(β-sulfatoethyl)-amino-4-methoxybenzol,1-Amino-3-sulfo-benzylaminobenzol, 1-Amino-3-sulfo-benzylamino-4-chlorbenzol, 1-Amino-3-N,N-di-(sulfobenzyl)-aminobenzol, 2-(4-β-Sulfatoethylsulfonyl-phenyl)-3-methyl-5-pyrazolon und 1-(4-β-Sulfatoethylsulfonyl-phenyl)-3-carboxy-5-pyrazolon.

Aromatische Reste D und $D_1$ der Diazokomponenten $D-NH_2$ bzw. $D_1-NH_2$ , die keine faserreaktive Gruppe der allgemeinen Formel (3) tragen, sind beispielsweise solche der Amine der allgemeinen Formeln (5a) und (5b)

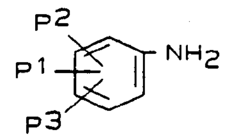 (5a) 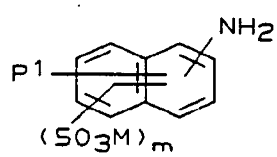 (5b)

in welchen

- $P^1$ Wasserstoff, Sulfo oder eine Gruppe der allgemeinen Formel $-SO_2-Y$ mit Y der obengenannten Bedeutung ist,
- $P^2$ Wasserstoff, Methyl, Ethyl, Methoxy, Ethoxy, Alkanoyl von 2 bis 5 C-Atomen, wie Acetyl und Propionyl, Cyano, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,
- $P^3$ Wasserstoff, Methyl, Ethyl, Methoxy, Ethoxy, Cyan, Carboxy, Sulfo, Alkanoylamino von 2 bis 5 C-Atomen, wie Acetylamino, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,
  wobei der Benzol- oder Naphthalinkern außerdem in ortho-Stellung zur $NH_2$-Gruppe eine Hydroxygruppe enthalten kann,
- m die Zahl Null, 1 oder 2 bedeutet (wobei diese Gruppe im Falle von m gleich Null ein Wasserstoffatom bedeutet) und
- M die obengenannte Bedeutung hat.

Bevorzugt ist hiervon $P^2$ gleich Wasserstoff, Methyl, Methoxy, Brom, Chlor, Carboxy und Sulfo sowie $P^3$ gleich Wasserstoff, Methyl, Methoxy, Chlor, Carboxy, Sulfo und Acetylamino.

Die Gruppen "Sulfo", "Carboxy", "Phosphato", "Thiosulfato" und "Sulfato" schließen sowohl deren Säureform als auch deren Salzform ein. Demgemäß bedeuten Sulfogruppen Gruppen entsprechend der allgemeinen Formel $-SO_3M$ , Carboxygruppen Gruppen entsprechend der allgemeinen Formel -COOM , Phosphatogruppen Gruppen entsprechend der allgemeinen Formel $-OPO_3M_2$ , Thiosulfatogruppen Gruppen entsprechend der allgemeinen Formel $-S-SO_3M$ und Sulfatogruppen Gruppen entsprechend der allgemeinen Formel $-OSO_3M$ , jeweils mit M der obengenannten Bedeutung.

Aromatische Amine der allgemeinen Formel $D-NH_2$ oder $D_1-NH_2$ entsprechend den Formeln (5a) und (5b) sind beispielsweise:
2-Amino- oder 4-Aminobenzoesäure, 3-Amino-benzoesäure, 3-Chloranilin-6-carbonsäure, Anilin-2- oder -3- oder -4-sulfonsäure, 2,5-Disulfo-anilin, 2,4-Disulfo-anilin, 3,5-Disulfoanilin, 2-Aminotoluol-4-sulfonsäure, 2-Amino-anisol-4-sulfonsäure, 2-Amino-anisol-5-sulfonsäure, 4-Amino-anisol-2-sulfonsäure, 2-Ethoxy-anilin-5-sulfonsäure, 2-Ethoxy-anilin-4-sulfonsäure, 4-Sulfo-2-aminobenzoesäure, 2,5-Dimethoxy-anilin-4-sulfonsäure, 2,4-Dimethoxyanilin-5-sulfonsäure, 2-Methoxy-5-methyl-anilin-4-sulfonsäure, 4-Amino-anisol-3-sulfonsäure, 4-Amino-toluol-3-sulfonsäure, 2-Amino-toluol-5-sulfonsäure, 2-Chlor-anilin-4-sulfonsäure, 2-Chlor-anilin-5-sulfonsäure, 2-Brom-anilin-4-sulfonsäure, 2,6-Dichloranilin-4-sulfonsäure, 2,6-Dimethylanilin-3-sulfonsäure oder -4-sulfonsäure, 3-Acetylamino-6-sulfoanilin, 4-Acetyl-amino-2-sulfo-anilin, 1-Aminonaphthalin-4-sulfonsäure, 1-Aminonaphthalin-3-sulfonsäure, 1-Aminonaphthalin-5-sulfonsäure, 1-Aminonaphthalin-6-sulfonsäure, 1-Aminonaphthalin-7-sulfonsäure, 1-Aminonaphthalin-3,7-disulfonsäure, 1-Aminonaphthalin-3,6,8-trisulfonsäure, 1-Aminonaphthalin-4,6,8-trisulfonsäure, 2-Naphthylamin-5-sulfonsäure oder -6- oder -8-sulfonsäure, 2-Aminonaphthalin-3,6,8-trisulfonsäure, 2-Aminonaphthalin-6,8-disulfonsäure, 2-Aminonaphthalin-1,6-disulfonsäure, 2-Aminonaphthalin-1-sulfonsäure, 2-Aminonaphthalin-1,5-disulfonsäure, 2-Aminonaphthalin-3,6-disulfonsäure, 2-Aminonaphthalin-4,8-disulfonsäure, 4-(β-Sulfatoethyl-sulfonyl)-anilin, 3-(β-Sulfatoethylsulfonyl)-anilin, 2-Sulfo-5-(β-sulfatoethylsulfonyl)-anilin, 2-Sulfo-4-(β-sulfatoethylsulfonyl)-anilin, 2-Methoxy-5-(β-sulfatoethylsulfonyl)-anilin, 2-Methoxy-5-methyl-4-(β-sulfatoethylsulfonyl)-anilin, 2,5-Dimethoxy-4-(β-sulfatoethylsulfonyl)-anilin, 2-Amino-5-(β-sulfatoethylsulfonyl)-phenol, 2-Amino-4-(β-sulfatoethylsulfonyl)-phenol, 2-Amino-6-(β-sulfatoethylsulfonyl)-naphthalin-8-sulfonsäure, 2-Amino-8-(β-sulfatoethylsulfonyl)-naphthalin-6-sulfonsäure, 2-Amino-5-(β-sulfatoethylsulfonyl)-naphthalin-7-sulfonsäure und 2-Amino-7-(β-sulfatoethylsulfonyl)-naphthalin-5-sulfonsäure.

Aromatische Amine der Diazokomponente $Z-D-NH_2$ oder $Z-D_1-NH_2$ oder $Z-D_2-NH_2$ mit dem faserreaktiven Rest Z gehen bevorzugt von aromatischen Aminen der allgemeinen Formeln (6a) und (6b)

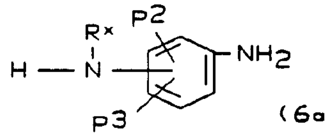 (6a)

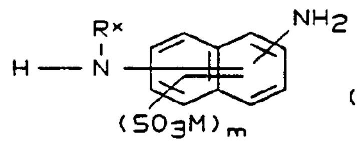 (6b)

aus, in welchen $R^x$, M, m, $P^2$ und $P^3$ die oben angegebenen, insbesondere bevorzugten Bedeutungen haben, wobei der Benzolkern in Formel (6a) und (6b) zusätzlich in ortho-Stellung zur Aminogruppe $-NH_2$ eine Hydroxygruppe enthalten kann.

Amine der allgemeinen Formeln (6) sind beispielsweise:

1,3-Diaminobenzol, 1,3-Diaminobenzol-4-sulfonsäure, 1,3-Diaminobenzol-4,6-disulfonsäure, 1,4-Diaminobenzol, 1,4-Diaminobenzol-2-sulfonsäure, 1,4-Diaminobenzol-2,5-disulfonsäure, 1,4-Diamino-2-methyl-benzol, -1,4-Diamino-2-methoxybenzol, 1,3-Diamino-4-methyl-benzol, 1,5-Diamino-4-methylbenzol-2-sulfonsäure, 1,5-Diamino-4-methoxybenzol-2-sulfonsäure, 1,3-Diaminobenzol-5-sulfonsäure, 1,3-Diamino-5-methyl-benzol, 2,6-Diamino-naphthalin, 2,6-Diamino-naphthalin-4,8-disulfonsäure, 2-Amino-5-methylamino-naphtalin-1-sulfonsäure, 2-Amino-5-methylamino-naphthalin-1,7-disulfonsäure und 1,4-Diamino-naphthalin- 6-sulfonsäure.

Bevorzugte Reste D, $D_1$ oder $D_2$ ohne oder mit dem Rest Z sind in den Formeln (4a) bis (4g) solche der allgemeinen Formeln (5c) und (5d) bzw. (5g) und in Formel (4h) solche der allgemeinen Formeln (5e) und (5f) bzw. (5h):

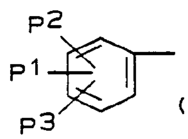 (5c)

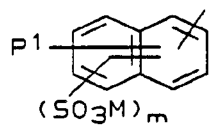 (5d)

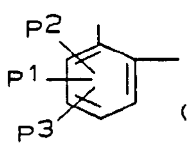 (5e)

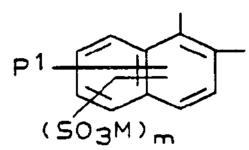 (5f)

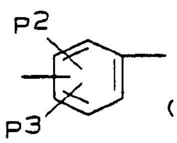 (5g)

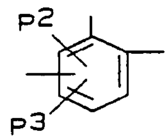 (5h)

in welchen $P^1$, $P^2$, $P^3$, m und M die obengenannten Bedeutungen haben.

Aromatische Reste E einer kupplungsfähigen und diazotierbaren Verbindung der allgemeinen Formel $H-E-NH_2$ sind beispielsweise solche der allgemeinen Formeln (7a), (7b) und (7c)

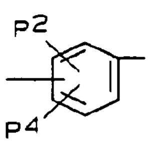 (7a)

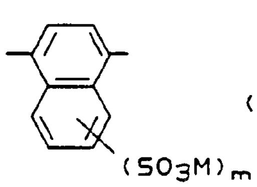 (7b)

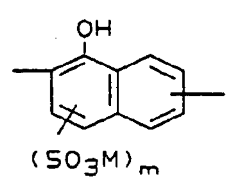 (7c)

in welchen

| | |
|---|---|
| $P^2$ und M | die oben angegebenen Bedeutungen haben, |
| $P^4$ | Wasserstoff, Alkyl von 1 bis 4 C-Atomen, wie Methyl oder Ethyl, Alkoxy von 1 bis 4 C-Atomen, wie Methoxy und Ethoxy, Chlor, Alkanoylamino von 2 bis 5 C-Atomen, wie Acetylamino und Propionylamino, Benzoylamino, Ureido, Phenylureido, Alkylureido mit 1 bis 4 C-Atomen im Al- |

kylrest, Phenylsulfonyl oder eine Alkylsulfonyl von 1 bis 4 C-Atomen ist und

m — für die Zahl Null, 1 oder 2 steht (wobei diese Gruppe im Falle von m gleich Null Wasserstoff bedeutet).

Verbindungen der Formel H-E-$NH_2$ sind beispielsweise:

Anilin, 3-Methylanilin, 3-Chloranilin, 2,5-Dimethylanilin, 2,5-Dimethoxyanilin, 3-Methoxyanilin, 3-Methyl-6-methoxy-anilin, 3-Aminophenylharnstoff, 3-Acetylamino-6-methyl-anilin, 2-Amino-4-acetyl-aminobenzol-1-sulfonsäure, 1-Amino-naphthalin, 1-Aminonaphthalin-6- oder -7- oder -8-sulfonsäure, 3-Acetylaminoanilin, 2-Methylanilin, 2-Methoxyanilin, 3-Benzoylamino-anilin, 2,3-Dimethylanilin, 3,5-Dimethylanilin, 1-Amino-2-methoxy-5-acetylamino-benzol, 3-Propionylamino-anilin, 3-Butyrylamino-anilin, 2-Sulfo-5-acetylamino-anilin, 2-Amino-5-naphthol-7-sulfonsäure und 2-Amino-8-naphthol-6-sulfonsäure.

Die Reste K der Kupplungskomponente entstammen vorzugsweise der Anilin-, Naphthalin-, Pyrazol- und Acylacetarylid-Reihe; sie können faserreaktive Gruppen besitzen.

Kupplungskomponenten der Formel H-K der Anilin- und Naphthalinreihe sind beispielsweise die Aniline, N-mono- und N,N-disubstituierte Aniline, m-Phenylendiamine und deren Derivate, Naphtholsulfonsäuren, Aminonaphthaline, Naphthole, Hydroxynaphthoesäurederivate, Aminonaphthalinsulfonsäuren oder Aminonaphtholsulfonsäuren.

Kupplungskomponenten der Formel H-K , die keine faserreaktive Gruppe der allgemeinen Formel (3) tragen, sind beispielsweise Verbindungen der allgemeinen Formeln (8a) bis (8g)

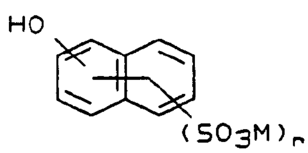
(8a)

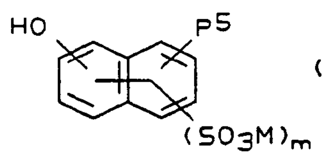
(8b)

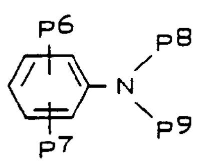
(8c)

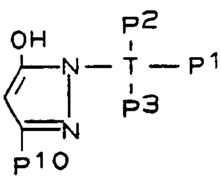
(8d)

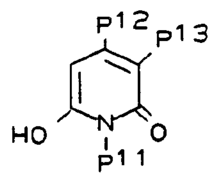
(8e)

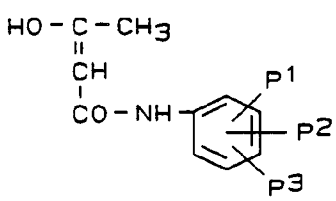
(8f)

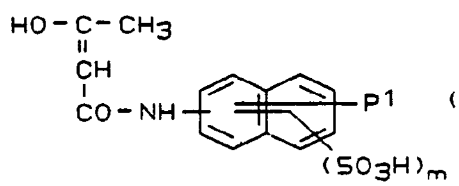
(8g)

in welchen

| | |
|---|---|
| $P^1$, $P^2$, $P^3$, m und M | die obengenannten Bedeutungen haben, |
| r | die Zahl Null, 1, 2 oder 3 ist (wobei diese Gruppe im Falle r gleich Null Wasserstoff bedeutet), |
| $P^5$ | Alkylureido mit Alkylgruppen von 1 bis 6 C-Atomen, Phenylureido, im Phenylrest durch Chlor, Methyl, Methoxy, Nitro, Sulfo und/oder Carboxy und/oder eine Gruppe -$SO_2$-Y mit Y der obigen Bedeutung substituiertes Phenylureido, Alkanoylamino von 2 bis 7 C-Atomen, wie beispielsweise Acetylamino und Propionylamino, Cyclohexanoylamino, Benzoylamino oder im Benzolrest durch Chlor, Methyl, Methoxy, Nitro, Sulfo und/oder Carboxy und/oder eine Gruppe -$SO_2$-Y mit Y der obigen Bedeutung substituiertes Benzoylamino bedeutet, |
| $P^6$ | Wasserstoff, Alkyl von 1 bis 4 C-Atomen, wie Methyl und Ethyl, Alkoxy von 1 bis 4 C-Atomen, wie Methoxy und Ethoxy, Brom, Chlor oder Alkanoylamino von 2 bis 7 C-Atomen, wie Acetylamino und Propionylamino, ist, |

$P^7$ Wasserstoff, Alkyl von 1 bis 4 C-Atomen, wie Methyl und Ethyl, Alkoxy von 1 bis 4 C-Atomen, wie Methoxy und Ethoxy, Chlor oder Alkanoylamino von 2 bis 7 C-Atomen, wie Acetylamino und Propionylamino, Ureido oder Phenylureido ist,

$P^8$ Wasserstoff oder Alkyl von 1 bis 4 C-Atomen, das durch Hydroxy, Cyan, Carboxy, Sulfo, Sulfato, Methoxycarbonyl, Ethoxycarbonyl oder Acetoxy substituiert sein kann, ist,

$P^9$ Alkyl von 1 bis 4 C-Atomen ist, das durch Hydroxy, Cyan, Carboxy, Sulfo, Sulfato, Methoxycarbonyl, Ethoxycarbonyl oder Acetoxy substituiert sein kann, oder Benzyl oder Phenyl oder durch Alkyl von 1 bis 4 C-Atomen, Alkoxy von 1 bis 4 C-Atomen, Chlor und/oder Sulfo substituiertes Phenyl ist,

$P^{10}$ Wasserstoff, Alkyl von 1 bis 4 C-Atomen, wie Methyl, Cyano, Carboxy, Carbalkoxy von 2 bis 5 C-Atomen, wie Carbomethoxy und Carbethoxy, Carbamoyl oder Phenyl, bevorzugt Methyl, Carboxy, Methoxycarbonyl, Ethoxycarbonyl oder Phenyl und insbesondere Methyl oder Carboxy, ist,

T für einen Benzol- oder Naphthalinring, bevorzugt Benzolring, steht,

$P^{11}$ Wasserstoff, Alkyl von 1 bis 6 C-Atomen, bevorzugt von 1 bis 4 C-Atomen, das durch Phenyl oder Sulfophenyl oder durch Hydroxy, Amino, Methoxy, Ethoxy, Carboxy, Sulfo, Acetylamino, Benzoylamino oder Cyano substituiert sein kann, Cyclohexyl, Phenyl oder durch Carboxy, Sulfo, Benzoylamino, Acetylamino, Methyl, Methoxy, Cyano oder Chlor substituiertes Phenyl ist und bevorzugt Wasserstoff oder Alkyl von 1 bis 4 C-Atomen, das durch Phenyl, Sulfo oder Sulfophenyl substituiert sein kann, ist,

$P^{12}$ Wasserstoff oder Alkyl von 1 bis 4 C-Atomen, wie Methyl, oder durch Alkoxy von 1 bis 4 C-Atomen, wie Methoxy, oder Cyano substituiertes Alkyl von 1 bis 4 C-Atomen ist, bevorzugt Alkyl von 1 bis 4 C-Atomen oder Phenyl ist, und

$P^{13}$ Wasserstoff, Chlor, Brom, Sulfo, Carbamoyl, Methylsulfonyl, Phenylsulfonyl, Cyano oder Sulfoalkyl von 1 bis 4 C-Atomen bedeutet, bevorzugt Wasserstoff, Sulfo oder Sulfoalkyl mit einem Alkylrest von 1 bis 4 C-Atomen, wie Sulfomethyl, oder Cyano oder Carbamoyl ist.

Verbindungen der allgemeinen Formeln (8) sind beispielsweise:
1-Naphthol-3-sulfonsäure, 1-Naphthol-4-sulfonsäure, 1-Naphthol-5-sulfonsäure, 1-Naphthol-8-sulfonsäure, 1-Naphthol-3,6-disulfonsäure, 1-Naphthol-3,8-disulfonsäure, 2-Naphthol-5-sulfonsäure, 2-Naphthol-6-sulfonsäure, 2-Naphthol-7-sulfonsäure, 2-Naphthol-8-sulfonsäure, 2-Naphthol-3,6-disulfonsäure, 2-Naphthol-6,8-disulfonsäure, 2-Naphthol-3,6,8-trisulfonsäure, 1-Acetylamino-8-hydroxynaphthalin-3,6-disulfonsäure, 1-Benzoylamino-8-hydroxynaphthalin-3,6-disulfonsäure, 1-Acetylamino-8-hydroxynaphthalin-4,6-disulfonsäure, 1-Benzoylamino-8-hydroxynaphthalin-4,6-disulfonsäure, 2-Acetylamino-5-hydroxy-naphthalin-7-sulfonsäure, 3-Acetyl-amino-5-hydroxy-naphthalin-7-sulfonsäure, 2-Methyl-amino-8-hydroxy-naphthalin-6-sulfonsäure oder 2-(3'- und 4'-Sulfophenyl)-amino-8-hydroxynaphthalin-6-sulfonsäure, 3-(3'- und 4'-Sulfophenyl)-amino-8-hydroxy-naphthalin-6-sulfonsäure, N,N-Di-(β-sulfoethyl)-anilin und dessen im Benzolkern durch Methyl, Methoxy und/oder Ethoxy mono- oder disubstituierten Derivate, N-Ethyl-N-(β-sulfoethyl)-anilin,N-(β-Sulfoethyl)-anilin, N-(β-Carboxyethyl)-anilin und deren im Benzolkern durch Methyl, Methoxy und/oder Ethoxy mono- oder disubstituierten Derivate, des weiteren 1-[3'-(β-Chlorethylsulfonyl)-benzoylamino]-3,6-disulfo-8-naphthol, 1-[3'-(Vinylsulfonyl)-benzoylamino]-3,6-disulfo-8-naphthol, 1-[3'-(Vinylsulfonyl)-benzoylamino]-4,6-disulfo-8-naphthol, 1-[3'-(β-Sulfatoethylsulfonyl)-benzoylamino]-4,6-disulfo-8-naphthol, 2-[3'-(β-Chlorethylsulfonyl)-benzoylamino]-6-sulfo-8-naphthol, 2-[3'-(Vinylsulfonyl)-benzoylamino]- 6-sulfo-8-naphthol, 3-[3'-(β-Chlorethylsulfonyl)-benzoyl-amino]-6-sulfo-8-naphthol, 3-[3'-(Vinylsulfonyl)-benzoyl-amino]-6-sulfo-8-naphthol, 2-[N-Methyl-N-(β-sulfatoethylsulfonyl)-amino]-6-sulfo-8-naphthol, 3-[N-Methyl-N-(β-sulfatoethylsulfonyl)-amino]-6-sulfo-8-naphthol, 2-[N-Ethyl-N-(β-sulfatoethylsulfonyl)-amino]-6-sulfo-8-naphthol, 1-[N'-(3'-β-Chlorethylsulfonyl-phenyl)-ureido]-3,6-disulfo-8-naphthol, 1-[N'-(3'-Vinylsulfonyl-phenyl)-ureido]-3,6-d isulfo-8-naphthol, 1-[N'-(3'-Vinylsulfonyl-propyl)-ureido]-3,6-disulfo-8-naphthol, 1-[N'-(3'-β-Chlorethylsulfonyl-phenyl)-ureido]-4,6-disulfo-8-naphthol, 1-[N'-(3'-Vinylsulfonyl-phenyl)-ureido]-4,6-disulfo-8-naphthol, 1-[N'-(3'-β-Chlorethylsulfonyl-propyl)-ureido]-4,6-disulfo-8-naphthol, 2-[N'-(3'-β-Sulfatoethylsulfonyl-phenyl)-ureido]-6-sulfo-8-naphthol, 2-[N'-(3'-β-Chlor-ethylsulfonyl-propyl)-ureido]-6-sulfo-8-naphthol, 3-[N'-(3'-β-Chlorethylsulfonyl-phenyl)-ureido]-6-sulfo-8-naphthol und 3-[N'-(3'-Vinylsulfonyl-propyl)-ureido]-6-sulfo-8-naphthol.

Von besonderer Bedeutung sind hiervon sulfogruppenhaltige, gegebenenfalls Azogruppen, wie 1 oder 2 Azogruppen, tragende Kupplungskomponenten, die in o- oder p-Stellung zu einer Hydroxy- und/oder Aminogruppe kuppeln, wie beispielsweise 2-Acetylamino-5-hydroxy-naphthalin-7-sulfonsäure, 2-Acetyl-amino-8-hydroxynaphthalin-6-sulfonsäure, 1-Acetylamino-8-hydroxynaphthalin-3,6-disulfonsäure, 1-Benzoylamino-8-hydroxynaphthalin-3,6-disulfonsäure, 1-Acetylamino-8-hydroxynaphthalin-4,6-disulfonsäure oder 1-Benzoylamino-8-hydroxynaphthalin-4,6-disulfonsäure.

Pyrazolon-Kupplungskomponenten sind beispielsweise 3-Methyl-, 3-Carboxy- und 3-($C_2$-$C_5$-Alkoxycarbonyl)-5-pyrazolone, die in 1-Stellung Wasserstoff, gegebenenfalls durch Methyl, Ethyl, Fluor, Chlor, Brom, Trifluormethyl, Methoxy, Ethoxy, Cyano, Phenoxy, Phenylsulfonyl, Methylsulfonyl, Sulfo, Benzoyl, Acetyl, Acetylamino, Nitro, Hydroxy, Carboxy, Carbamoyl und/oder Sulfamoyl substituiertes Phenyl oder sulfosubstituiertes 1- oder 2-Naphthyl tragen, beispielsweise:
1-(2'-Methoxy-5'-methylphenyl)-, 1-(2'-Chlor-5'-sulfophenyl)-, 1-(2'-Methoxy-5'-sulfophenyl)-, 1-(2'-Methyl-4'-sulfophenyl)-, 1-(2',5'-Dichlor-4'-sulfophenyl)-, 1-(2',5'-Disulfophenyl)-, 1-(2'-Carboxyphenyl)-, 1-(3'-Sulfophenyl)-, 1-(4'-Sulfophenyl)-, 1-(3'-Sulfamoylphenyl)-3-carboxy-5-pyrazolon, 1-(3'- oder 4'-Sulfophenyl)-, 1-(2'-Chlor-4'- oder -5'-sulfophenyl)-, 1-(2'-Methyl-4'-sulfophenyl)-, 1-(4',8'-Disulfo-2'-naphthyl)- und 1-(6'-Sulfo-1'-naphthyl)-3-methyl-5-pyrazolon, 1-Phenyl-5-pyrazolon-3-carbonsäureethylester, 5-Pyrazolon-3-carbonsäureethylester, 5-Pyrazolon-3-carbonsäure, 1-[4'-(β-Sulfatoethylsulfonyl)-2'-sulfo]-phenyl-3-methyl-pyrazol-5-on, 1-[4'-(β-Sulfatoethylsulfonyl)]-phenyl-3-carboxy-pyrazol-5-on, 1-[4'-(β-Sulfatoethylsulfonyl)]-phenyl-3-methyl-pyrazol-5-on, 1-[3'-(β-Sulfatoethylsulfonyl)]-phenyl-3-carboxy-pyrazol-5-on, 1-[3-(β-Sulfatoethylsulfonyl)]-phenyl-3-methyl-pyrazol-5-on, und 1-(4'-Sulfophenyl)-3-carboxy-pyrazol-5-on.

Pyridonkupplungskomponenten sind beispielsweise 1-Ethyl-2-hydroxy-4-methyl-5-carbonamido-pyridon-6, 1-(2'-Hydroxyethyl)-2-hydroxy-4-methyl-5-carbonamido-pyridon-6, 1-(4'-Sulfo-phenyl)-2-hydroxy-4-methyl-5-carbonamido-pyridon-6, 1-(2'-Sulfoethyl)-2-hydroxy-4-methyl-5-cyano-pyridon-6, 1-Ethyl-2-hydroxy-4-sulfomethyl-5-carbonamido-pyridon-6, 1-Ethyl-2-hydroxy-4-methyl-5-sulfomethyl-pyridon-6, 1-Methyl-2-hydroxy-4-methyl-5-cyano-pyridon-6, 1-Methyl-2-hydroxy-5-acetyl-pyridon-6, 1,4-Dimethyl-2-hydroxy-5-cyanpyridon-6, 1,4-Dimethyl-2-hydroxy-5-carbonamido-pyridon-6, 2,6-Dihydroxy-4-ethyl-5-cyano-pyridin, 2,6-Dihydroxy-4-ethyl-5-carbonamido-pyridin, 1-Ethyl-2-hydroxy-4-methyl-5-sulfomethyl-pyridon-6, 1-Methyl-2-hydroxy-4-methyl-5-methylsulfonyl-pyridon-6, 1-Carboxymethyl-2-hydroxy-4-ethyl-5-phenylsulfonyl-pyridon-6 und 1-(2'-Sulfo-ethyl)-2-hydroxy-4-carboxy-pyridon-6, und Acetoacetyl-arylamid-Kupplungskomponenten sind beispielsweise Acetoacetyl-(2-methoxy-4-sulfo-5-methyl)-anilin, Acetoacetyl-(2,4-dimethoxy-5-methyl)-anilin und Acetoacetyl-(4-β-sulfatoethylsulfonyl)-anilin.

Als Kupplungskomponenten H-K sind weiterhin besonders zu nennen: 1-Amino-8-hydroxynaphthalin-3,6- und -4,6-disulfonsäure sowie deren durch saure Kupplung erhaltene Arylazokupplungsprodukte der Formel (9a)

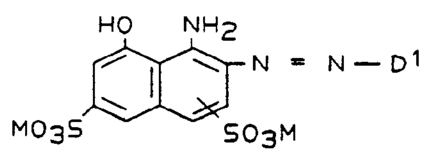
(9a)

in welcher
$D^1$ der Rest einer Diazokomponente, beispielsweise ein Rest der Formel (10a) oder (10b)

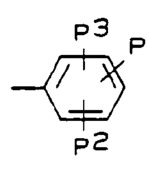
(10a) oder
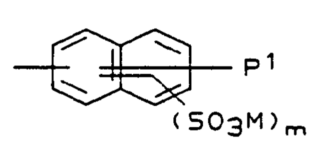
(10b)

sein kann, worin $P^1$, $P^2$, $P^3$, M und m die oben angegebenen Bedeutungen haben.

Einzelne Reste $D^1$ sind beispielsweise: Phenyl, 2-Sulfo-phenyl, 3-Sulfo-phenyl, 4-Sulfo-phenyl, 2,4-Disulfo-phenyl, 2,5-Disulfo-phenyl, 3,5-Disulfo-phenyl, 1,5-Disulfo-naphth-2-yl, 4,8-Disulfo-naphth-2-yl, 3,6,8-Trisulfo-naphth-2-yl, 4,6,8-Trisulfo-naphth-2-yl, 3,6,8-Trisulfo-naphth-1-yl, 4,6,8-Trisulfo-naphth-1-yl, 4-Sulfo-naphth-1-yl, 1-Sulfo-naphth-2-yl, 3-Acetylamino-phenyl, 4-Acetylamino-phenyl, 4-Acetylamino-2-sulfo-phenyl, 5-Acetylamino-2-sulfo-phenyl, 4-Nitro-phenyl, 4-Nitro-2-sulfo-phenyl, 6-Acetylamino-4,8-disulfo-naphth-2-yl, 4-(β-Sulfatoethylsulfonyl)-phenyl und 3-(β-Sulfatoethylsulfonyl)-phenyl.

Kupplungskomponenten, die erfindungsgemäß die faserreaktive Gruppe der Formel (3) enthalten bzw. in die die faserreaktive Gruppe, gegebenenfalls erst nach der Kupplungsreaktion, eingeführt werden kann, sind beispielsweise Verbindungen der allgemeinen Formeln (11a) bis (11h) bzw. deren $Z^o$-freien Vorprodukte (d.h.

Verbindungen, die statt der Gruppe -N(R$^x$)-Z$^o$die Gruppe -N(R$^x$)-H enthalten):

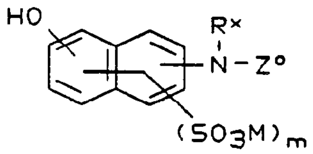

(11 a)

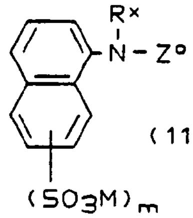

(11 b)

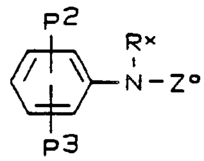

(11 c)

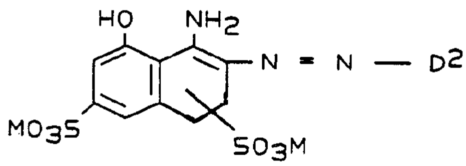

(11 d)

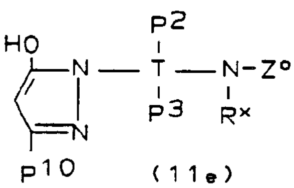

(11e)

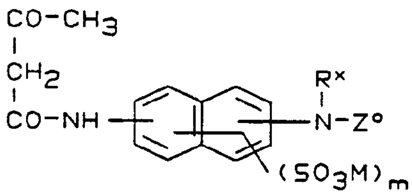

(11f)

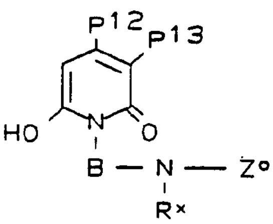

(11g)

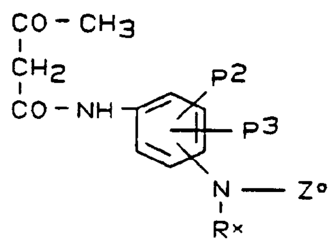

(11h)

in welchen

R$^x$, P$^2$, P$^3$, P$^{10}$, P$^{12}$, P$^{13}$, D$^2$, M, m und T die oben angegebenen, insbesondere bevorzugten Bedeutungen haben,

B Alkyl von 1 bis 4 C-Atomen, Benzyl oder Phenethyl oder Phenyl oder im Benzolrest durch Fluor, Chlor, Brom, Methyl, Methoxy, Cyano, Sulfo, Carboxy, Acetyl, Nitro, Carbamoyl und/oder Sulfamoyl substituiertes Benzyl, Phenethyl oder Phenyl ist, wobei im Falle von "Benzyl" und "Phenethyl" die Gruppe -N(R$^x$)-Z$^o$ an den Benzolkern gebunden ist,

Z$^o$ ein von der Gruppe -N(R$^x$)- bzw. -N(R')- freier Rest der Formel (3), (3a) oder (3b) ist,

D$^2$ der Rest einer Diazokomponente mit einer faserreaktiven Gruppe, insbesondere der Formel (3), ist, vorzugsweise ein Rest der obengenannten Formel (10a) oder (10b) mit p$^1$ gleich einer Gruppe der Formel -$SO_2$-Y oder ein Rest der Formel (10c)

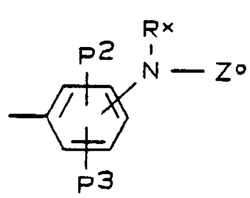

(10c)

ist, in welcher R$^x$, P$^2$, P$^3$ und Z$^o$ die oben angegebenen, insbesondere bevorzugten Bedeutungen haben.

Aromatische Diamine aus dem Rest der Formel (10c) sind beispielsweise: 1,3-Diaminobenzol, 1,3-Diaminobenzol-4-sulfonsäure, 1,3-Diaminobenzol-4,6-disulfonsäure, 1,4-Diaminobenzol, 1,4-Diaminobenzol-2-sulfonsäure, 1,4-Diaminobenzol-2,5-disulfonsäure, 1,4-Diamino-2-methyl-benzol, 1,4-Diamino-2-methoxy-benzol, 1,3-Diamino-4-methyl-benzol, 1,4-Diaminobenzol-2,6-disulfonsäure, 1,5-Diamino-4-methylbenzol-2-sulfonsäure, 1,5-Diamino-4-methoxybenzol-2-sulfonsäure, wobei in allen diesen Diaminoverbindungen die eine primäre oder sekundäre Aminogruppe durch den faserreaktiven Rest Z° substituiert ist.

Reste K in den Formeln (4b) und (4f), die die Gruppe Z nicht enthalten, sind insbesondere Reste der allgemeinen Formeln (12a) bis (12h)

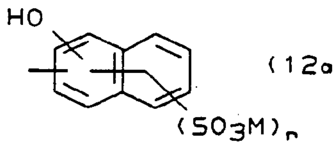
(12a)

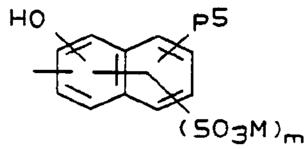
(12b)

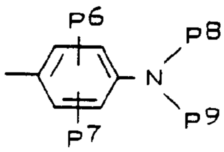
(12c)

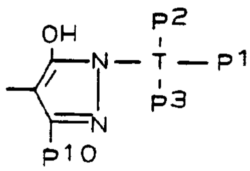
(12d)

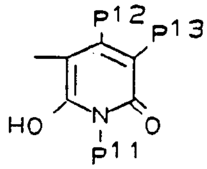
(12e)

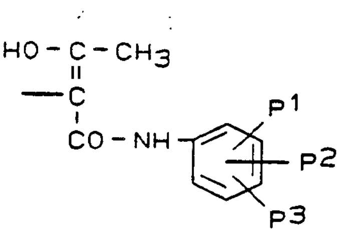
(12f)

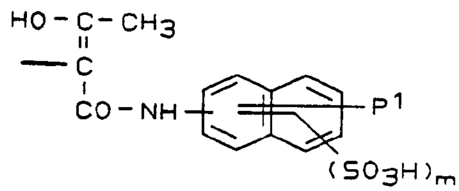
(12g)

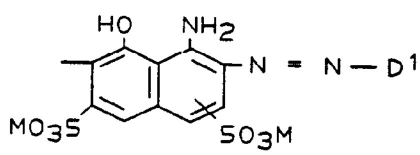
(12h)

in welchen die einzelnen Formelglieder die obengenannten Bedeutungen haben.

Reste K in den Formeln (4a), (4c) und (4f), die die Gruppe Z enthalten, sind insbesondere Reste der allgemeinen Formeln (12j) bis (12p)

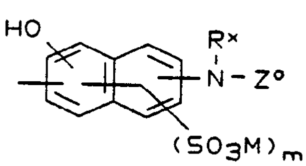
(12j)

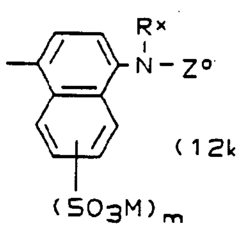
(12k)

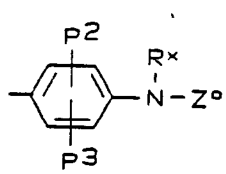
(12m)

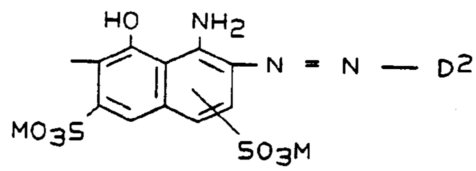

(12n)

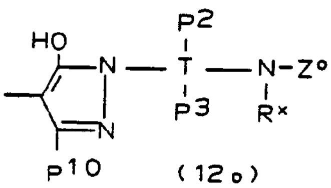

(12o)

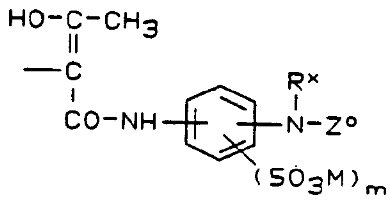

(12p)

in welchen die einzelnen Formelglieder die obengenannten Bedeutungen haben.

Reste K in der Formel (4h) mit einem metallkomplex-bindenden Sauerstoffatom, die gegebenenfalls die Gruppe Z enthalten, sind insbesondere solche der Formeln (13a) bis (13f)

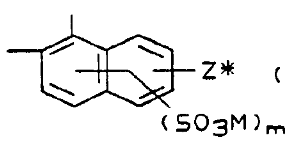

(13a)

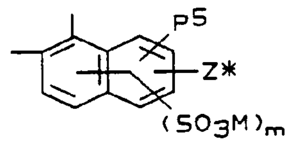

(13b)

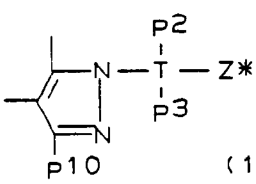

(13c)

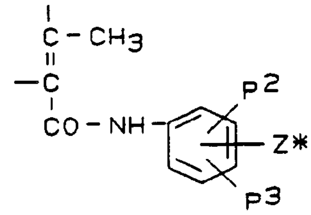

(13d)

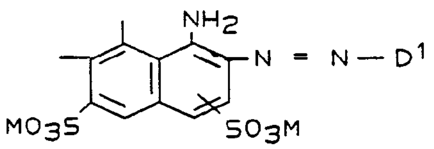

(13e)

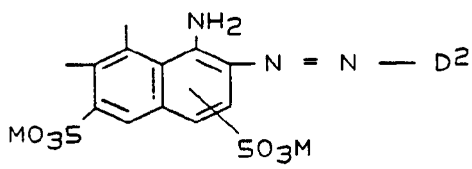

(13f)

in welchen Z* eine der Bedeutungen von $P^1$ oder Z besitzt und die Formelglieder eine der obengenannten Bedeutungen haben.

Die obengenannten Verbindungen der allgemeinen Formeln (11b) und (11c) können selbst als Kupplungskomponenten nicht eingesetzt werden. Als Kupplungskomponenten zur Synthese der erfindungsgemäßen Azofarbstoffe dienen deren $Z^o$-freien Vorprodukte, d.h. deren Vorprodukte, die anstelle der Gruppe $-N(R^x)-Z^o$ eine Aminogruppe der Formel $-N(R^x)-H$ enthalten. Nach Kupplung dieser aminogruppenhaltigen Vorprodukte mit einer entsprechenden Diazokomponente zur Azoverbindung kann der faserreaktive Rest $Z^o$ durch Umsetzung mit einer Verbindung der allgemeinen Formel Hal-$Z^o$ , in welcher Hal ein Halogenatom, bevorzugt ein Fluor- oder Chloratom, darstellt und $Z^o$ die obengenannte Bedeutung besitzt, in die Aminogruppe $-N(R^x)-H$ eingeführt werden. Analog können auch die $Z^o$-freien Aminoverbindungen der Verbindungen der allgemeinen Formeln (11a) und (11d) bis (11h) selbst zunächst als Kupplungskomponenten zur Herstellung einer Amino-Azo-Ausgangsverbindung dienen, in die sodann der faserreaktive Rest in gleicher Weise eingeführt werden kann. Die Kupplungskomponenten mit dem faserreaktiven Rest $Z^o$ der allgemeinen Formeln (11a) und (11d) bis (11h) selbst lassen sich ebenso durch Umsetzung dieser $Z^o$-freien, aminogruppenhaltigen Ausgangsverbindungen mit einer Verbindung der Formel Hal-$Z^o$ analog bekannter Verfahrensweisen herstellen.

Von den erfindungsgemäßen Anthrachinonfarbstoffen sind diejenigen bevorzugt, die der allgemeinen Formel (14)

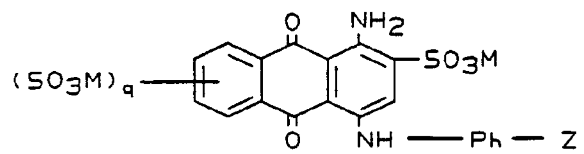

(14)

entsprechen, in welcher

- M ein Wasserstoffatom oder ein Alkalimetall, wie Natrium, Kalium oder Lithium, ist,
- q die Zahl Null oder 1 bedeutet (wobei im Falle von q gleich Null diese Gruppe ein Wasserstoffatom darstellt),
- Ph ein Phenylenrest ist, der durch 1 oder 2 Substituenten aus der Gruppe Alkyl von 1 bis 4 C-Atomen, wie Methyl und Ethyl, Alkoxy von 1 bis 4 C-Atomen, wie Methoxy und Ethoxy, Halogen, wie Chlor und Brom, Carboxy und Sulfo substituiert sein kann, und
- Z die faserreaktive Gruppe der allgemeinen Formel (3) oder bevorzugt (3a) oder (3b) ist.

Von den erfindungsgemäßen Triphendioxazinfarbstoffen sind bevorzugt diejenigen, die der allgemeinen Formel (15)

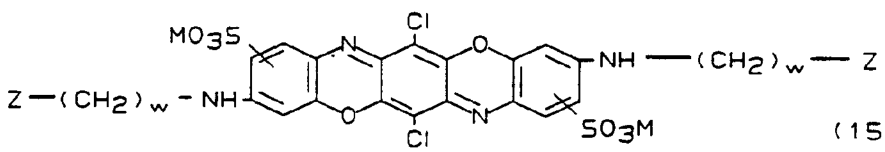

(15)

entsprechen, in welcher M ein Wasserstoffatom oder ein Alkalimetall, wie Natrium, Kalium oder Lithium ist, Z die faserreaktive Gruppe der allgemeinen Formel (3) oder bevorzugt (3a) oder (3b) ist und w für die Zahl 2, 3 oder 4 steht, wobei die beiden Sulfogruppen $-SO_3M$ bevorzugt in ortho-Stellung zum Sauerstoffatom des heterocyclischen Ringes an den Benzolkern gebunden sind.

Von den erfindungsgemäßen Phthalocyaninfarbstoffen sind diejenigen bevorzugt, die der allgemeinen Formel (16)

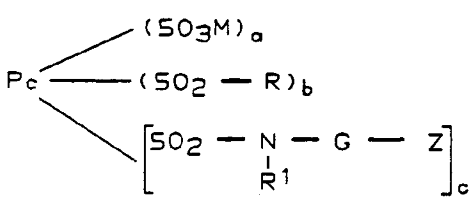

(16)

entsprechen, in welcher bedeuten:

- Pc ist der Rest eines Kupfer- oder Nickelphthalocyanins;
- R ist eine Aminogruppe der Formel $-NR^2R^3$ , in welcher $R^2$ und $R^3$ unabhängig voneinander Wasserstoff oder Alkyl von 1 bis 4 C-Atomen, das durch Hydroxy oder Sulfo substituiert sein kann, bedeuten, oder ist ein heterocyclischer, N-haltiger Rest, wie der Morpholino- oder Piperidino-Rest;
- $R^1$ ist Wasserstoff oder Alkyl von 1 bis 4 C-Atomen, wie Methyl und Ethyl;
- G ist Phenylen, das durch 1 oder 2 Substituenten aus der Gruppe Alkyl von 1 bis 4 C-Atomen, wie Ethyl und Methyl, Halogen, wie Chlor und Brom, Carboxy und Sulfo substituiert sein kann, beispielsweise Sulfophenylen, oder ist Alkylen von 2 bis 6 C-Atomen, wie Ethylen;
- Z ist die faserreaktive Gruppe der Formel (3) oder bevorzugt (3a) oder (3b);
- a ist eine Zahl von 2 bis 3,
- b ist eine Zahl von Null bis 3 und
- c ist eine Zahl von 1 bis 2,

wobei die Summe von (a+b+c) gleich einer Zahl von 3 bis 4 ist.

Weiterhin bevorzugt sind von den Azofarbstoffen solche, die den allgemeinen Formeln (17A) bis (17J)

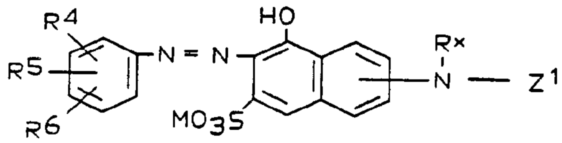

(17A)

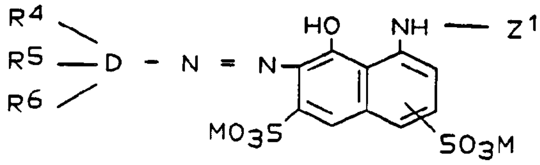

(17B)

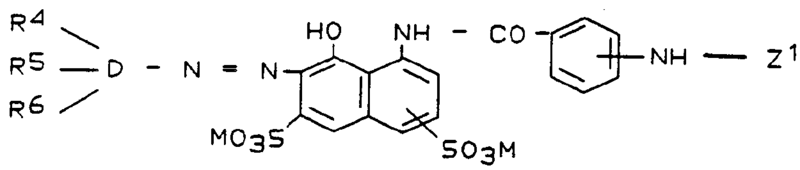

(17C)

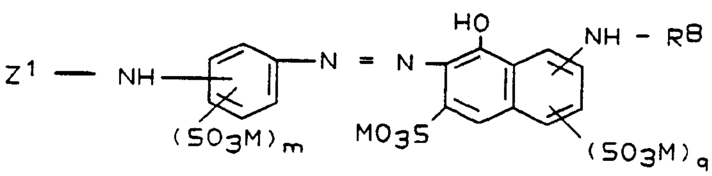

(17D)

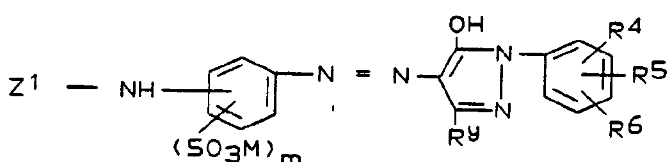

(17E)

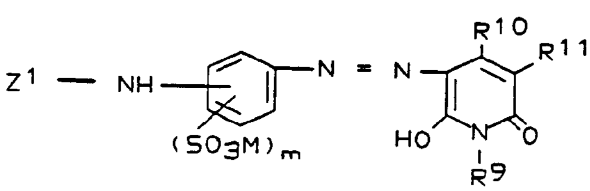

(17F)

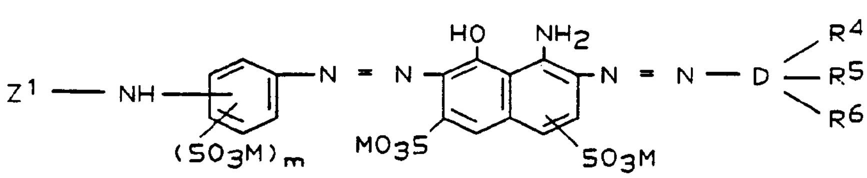

(17G)

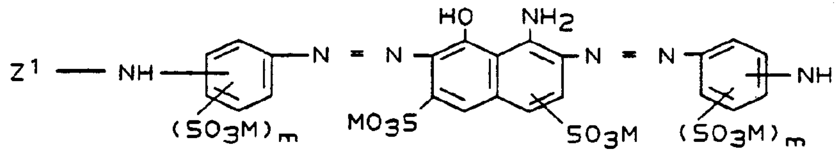

(17H)

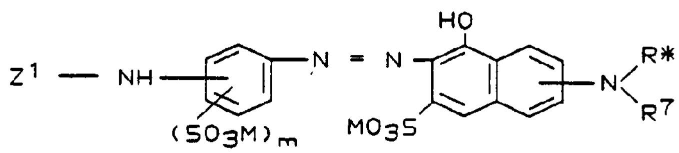

(17J)

entsprechen, in welchen bedeuten:

- M hat eine der obengenannten Bedeutungen;
- $R^x$ ist Wasserstoff oder Alkyl von 1 bis 4 C-Atomen, wie Methyl;
- $R^4$ ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Halogen, wie Chlor und Brom, Carboxy, Sulfo, β-Sulfatoethylsulfonyl, β-Chlorethylsulfonyl oder Vinylsulfonyl;
- $R^5$ ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Halogen, wie Chlor und Brom, Carboxy oder Sulfo;
- $R^6$ ist Wasserstoff oder Sulfo;
- R* ist Wasserstoff oder Methyl;
- $R^7$ ist Alkanoyl von 2 bis 5 C-Atomen, wie Acetyl, oder ist Benzoyl, β-Sulfatoethylsulfonyl oder 3-(β-Chlorethylsulfonyl)-benzoyl;
- $R^8$ ist Alkanoyl von 2 bis 5 C-Atomen, wie Acetyl, oder Benzoyl;
- $R^y$ ist Methyl oder Carboxy;
- $R^9$ ist Wasserstoff oder Alkyl von 1 bis 4 C-Atomen, wie Methyl oder Ethyl, das durch Sulfo oder Carboxy substituiert sein kann, oder ist Phenyl;
- $R^{10}$ ist Wasserstoff oder Alkyl von 1 bis 4 C-Atomen, wie Methyl, oder ist Phenyl;
- $R^{11}$ ist Wasserstoff, Cyano, Carbamoyl, Sulfamoyl oder Sulfomethyl;
- $Z^1$ ist ein Rest der allgemeinen Formel (3A) oder bevorzugt der allgemeinen Formel (3B) oder (3C)

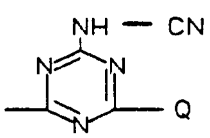

(3A)

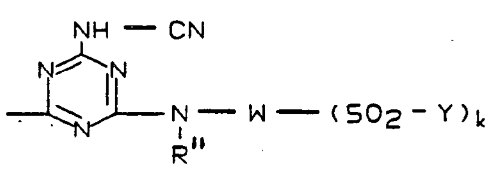

(3B)

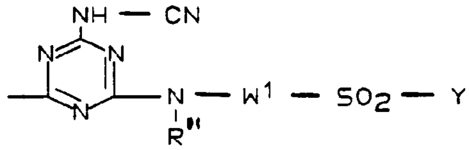

(3C)

in welchen $R^x$, Q, R', R'', W, $W^1$, Y und k eine der obengenannten Bedeutungen haben;

D ist ein Benzolring oder ist ein Naphthalinring, an den die Azogruppe in β-Stellung gebunden ist, wobei im Falle, daß D den Naphthalinring bedeutet, $R^4$ und $R^5$ bevorzugt jedes, unabhängig voneinander, ein Wasserstoffatom oder eine Sulfogruppe bedeuten und $R^6$ eine Sulfogruppe ist;

m ist die Zahl Null, 1 oder 2 (wobei im Falle von m gleich Null diese Gruppe Wasserstoff ist).

Weitere bevorzugte erfindungsgemäße Farbstoffe entsprechend der allgemeinen Formel (1) sind diejenigen der nachstehend angegebenen Formeln (18A), (18B), (19) und (20) bis (30):

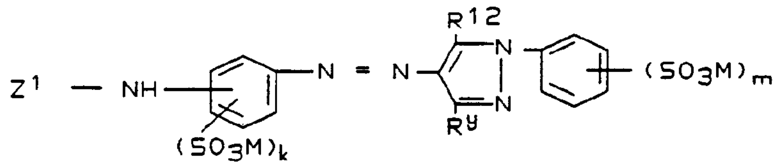

(18A)

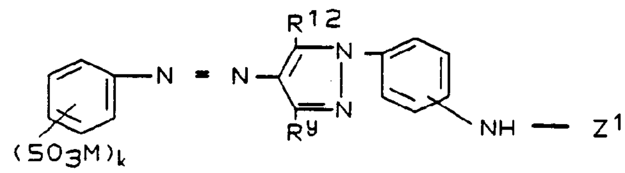

(18B)

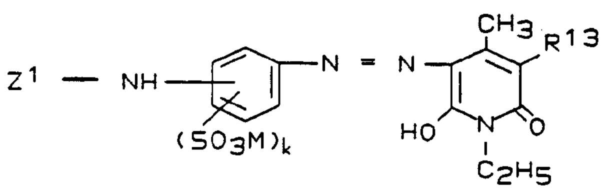

(19)

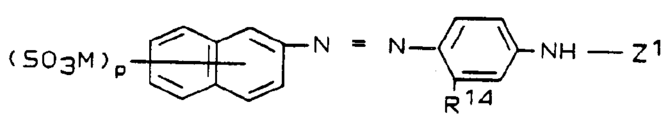

(20)

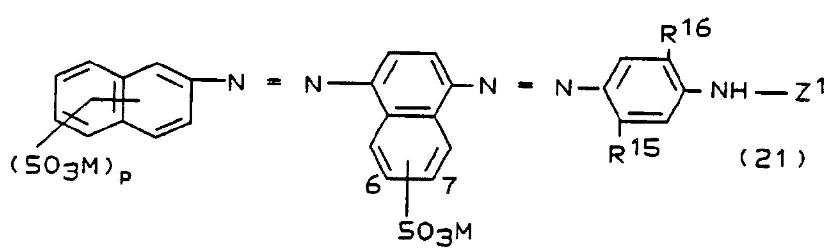

(21)

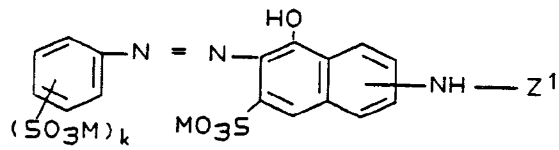
(22)

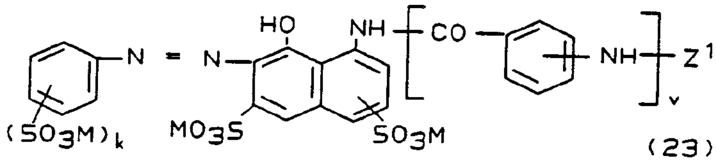
(23)

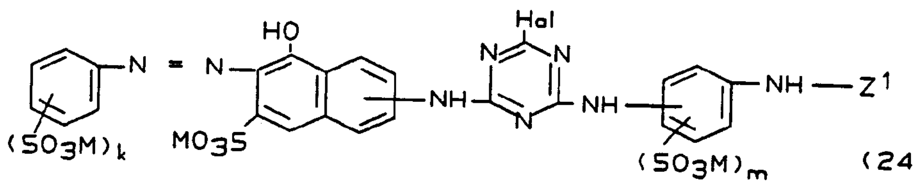
(24)

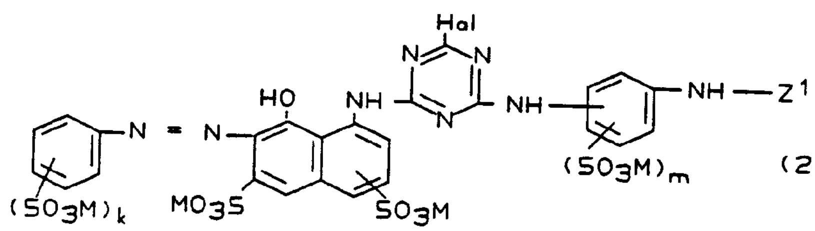
(25)

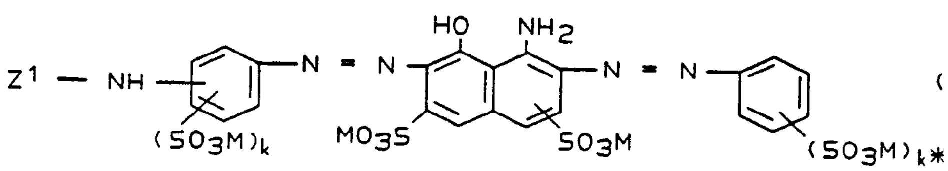
(26)

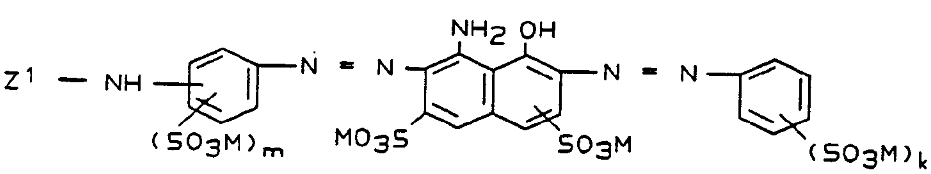
(27)

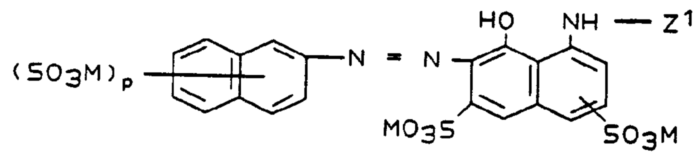

(28)

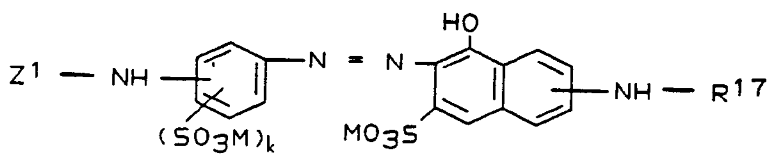

(29)

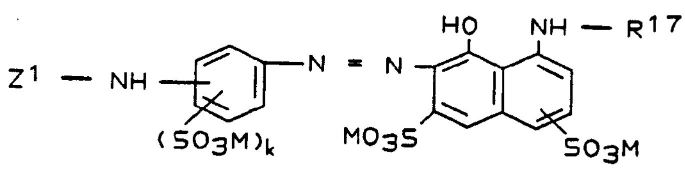

(30)

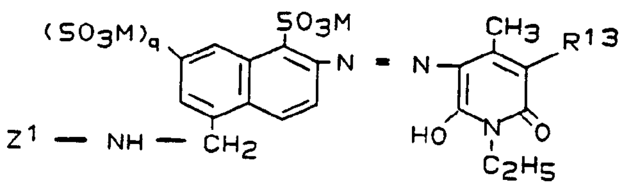

(31),

des weiteren die Metallkomplexfarbstoffe, wie die 1:2-Chrom- und 1:2-Kobalt- und insbesondere die 1:1-Kupferkomplex-Farbstoffe der Verbindungen der Formeln (32) bis (37):

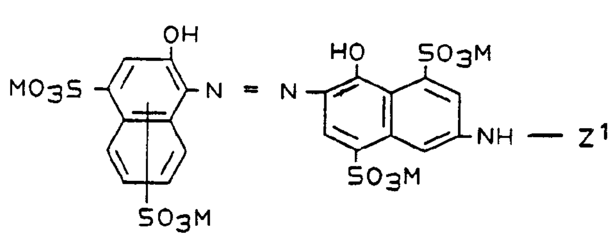

(32)

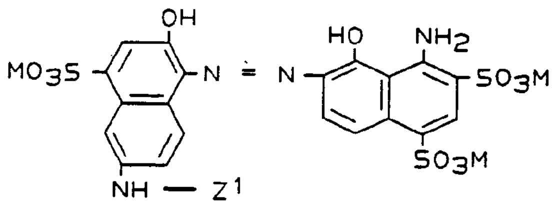

(33)

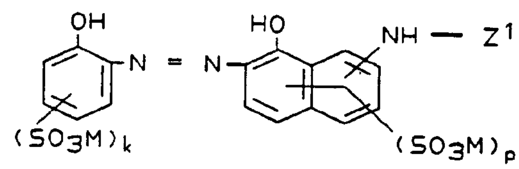

(34)

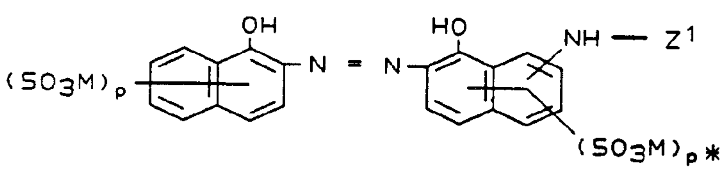

(35)

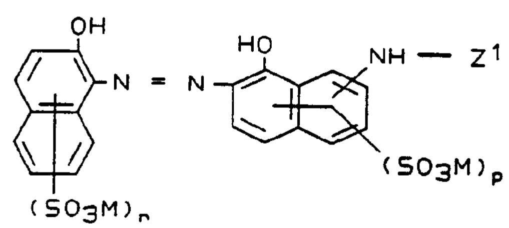

(36)

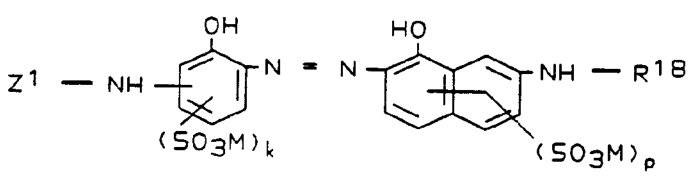

(37),

des weiteren die Farbstoffe der Formeln (38) bis (54):

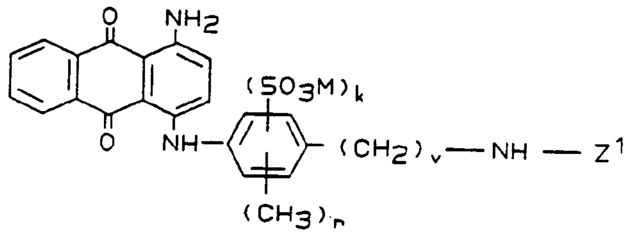

(38)

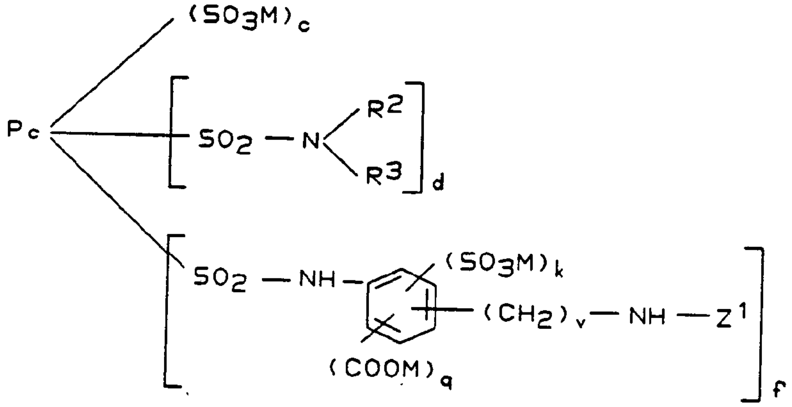

(39)

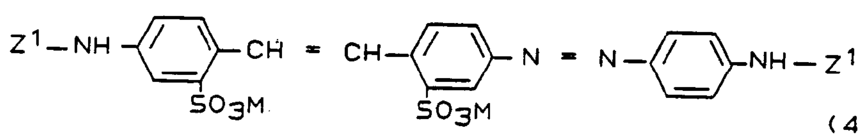

(40)

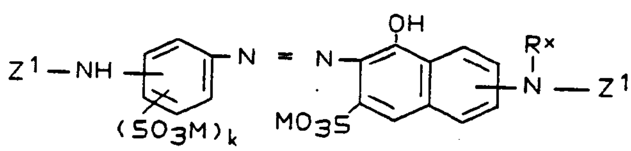

(41)

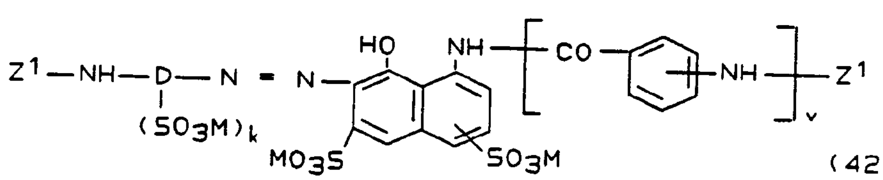

(42)

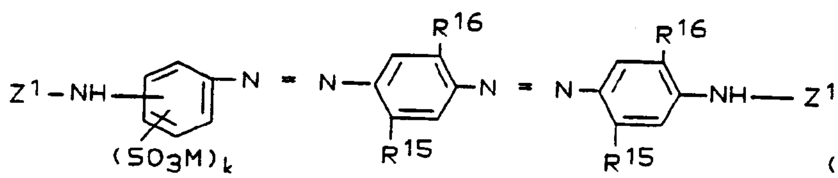

(43)

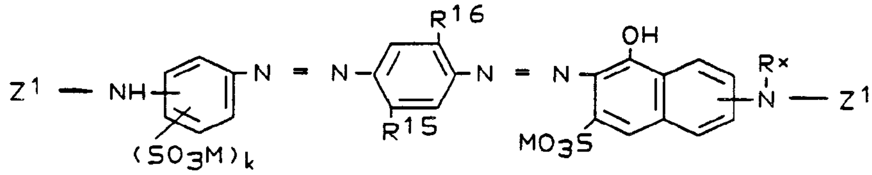

(44)

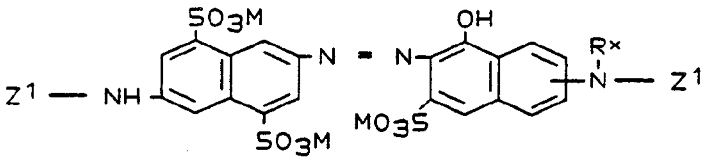

(45)

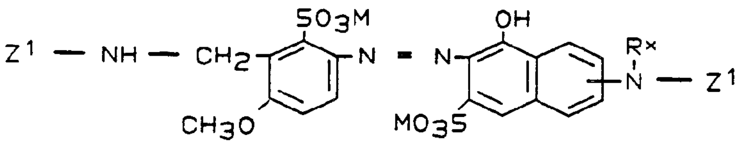

(46)

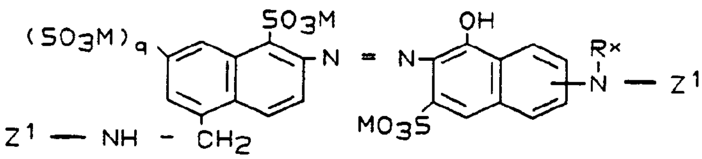

(47)

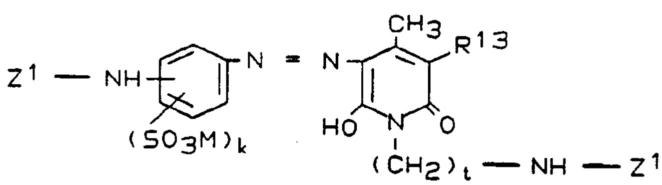

(48)

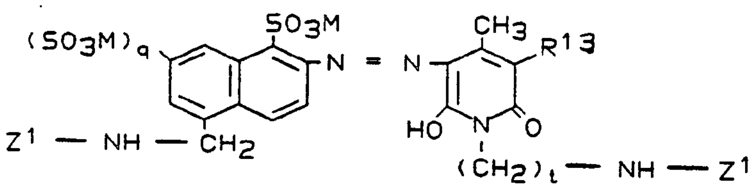

(49)

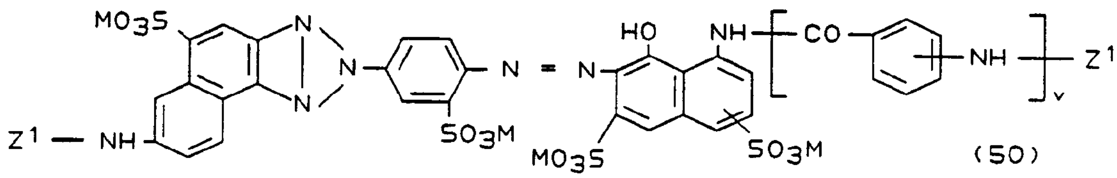

(50)

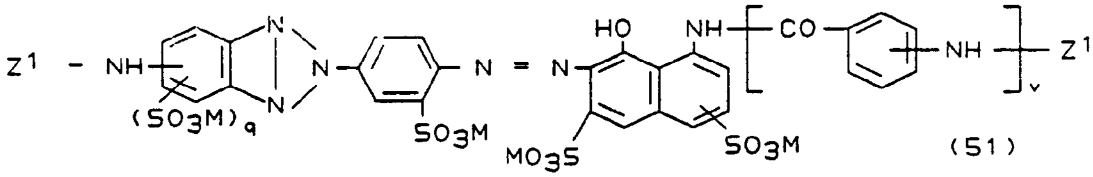

(51)

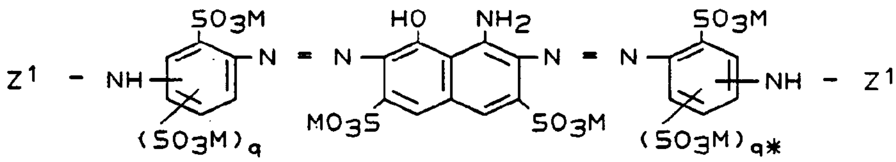

(52)

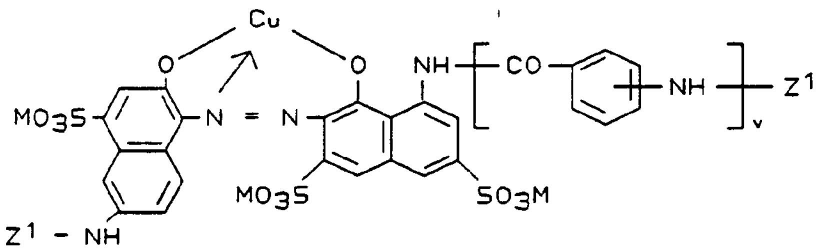

(53)

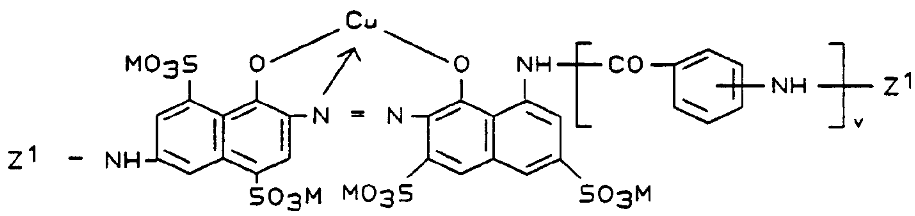

(54).

In diesen Formeln bedeuten:

| | |
|---|---|
| M, m, $Z^1$ und $R^y$ | haben die obengenannten, insbesondere bevorzugten, Bedeutungen; |
| k | steht für die Zahl 1 oder 2; |
| k* | steht für die Zahl 1 oder 2; |
| $R^{12}$ | ist Hydroxy oder Amino; |
| $R^{13}$ | ist Cyano-, Carbamoyl oder Sulfomethyl; |
| $R^{14}$ | ist Methyl, Acetylamino oder Ureido; |
| p | steht für die Zahl 1, 2 oder 3; |
| p* | ist die Zahl 1, 2 oder 3; |
| $R^{15}$ | ist Wasserstoff oder Alkyl von 1 bis 4 C-Atomen, wie Methyl und Ethyl, Alkoxy von 1 bis 4 C-Atomen, wie Methoxy und Ethoxy, Alkanoylamino von 2 bis 5 C-Atomen, wie Acetylamino, Ureido, Halogen, wie Brom und insbesondere Chlor, vorzugsweise jedoch Wasserstoff, Methyl, Ethyl, Methoxy, Ethoxy, Acetylamino, Ureido oder Chlor; |
| $R^{16}$ | ist Wasserstoff, Alkyl von 1 bis 4 C-Atomen, wie Methyl und Ethyl, Alkoxy von 1 bis 4 C-Atomen, wie Methoxy und Ethoxy, Halogen, wie Brom und insbesondere Chlor, vorzugs- |

weise jedoch Wasserstoff, Methyl, Ethyl, Methoxy, Ethoxy oder Chlor;

| | |
|---|---|
| v | ist die Zahl Null oder 1; |
| Hal | ist Chlor oder Fluor; |
| $R^{17}$ | ist Acetyl oder Benzoyl; |
| $R^{18}$ | ist Wasserstoff oder Acetyl; |
| r | ist die Zahl Null oder 1, 2 oder 3 (wobei im Falle von r gleich Null diese Gruppe Wasserstoff bedeutet); |
| $R^2$ | ist Wasserstoff oder Alkyl von 1 bis 4 C-Atomen, wie Methyl oder Ethyl, und |
| $R^3$ | ist Wasserstoff oder Alkyl von 1 bis 4 C-Atomen, wie Methyl oder Ethyl, oder |
| $R^2$ und $R^3$ | bilden zusammen mit dem N-Atom einen eine Alkylengruppe von 3 bis 7 C-Atomen oder eine oder zwei Alkylengruppen von 1 bis 5 C-Atomen und eine weitere Heterogruppe, wie ein N- oder O-Atom oder eine Gruppe -NH- oder $-N(CH_3)-$ oder $-N(C_2H_5)-$ , enthaltenden heterocyclischen Rest, wie beispielsweise den N-Piperidino- oder N-Morpholino-Rest; |
| q | steht für die Zahl Null oder 1 (wobei im Falle von q gleich Null diese Gruppe Wasserstoff darstellt); |
| q* | steht für die Zahl Null oder 1 (wobei im Falle von q* gleich Null diese Gruppe Wasserstoff darstellt); |
| Pc | ist der Rest des Kupfer- oder Nickelphthalocyanins; |
| c | steht für eine Zahl von 1 bis 3, |
| d | steht für eine Zahl von 0,5 bis 1,5 und |
| f | steht für eine Zahl von 1 bis 2, wobei die Summe von (c+d+f) eine Zahl von 3 bis 4 ist; |
| $R^x$ | ist Wasserstoff oder Alkyl von 1 bis 4 C-Atomen, wie Methyl; |
| t | steht für die Zahl 2 oder 3; |

die in den obigen Farbstofformeln angegebenen Benzolringe können zusätzlich noch substituiert sein, wie beispielsweise durch 1 oder 2 Substituenten aus der Gruppe Methyl, Ethyl, Methoxy, Ethoxy , Methylsulfonyl, Ethylsulfonyl, Carboxy, Acetylamino und Chlor, und die Naphthalinringe durch einen Substituenten aus der Gruppe Methoxy, Carboxy, Acetylamino, Nitro und Chlor.

Weiterhin sind bevorzugt Verbindungen der allgemeinen Formeln (17B), (20), (21) und (42), in welchen $Z^1$ ein Rest der oben angegebenen allgemeinen Formel (3C) ist, in welcher $W^1$ eine Alkylengruppe von 2 bis 4 C-Atomen, bevorzugt von 3 C-Atomen, ist oder ein Phenylenrest ist, der durch 1 oder 2 Substituenten aus der Gruppe Methyl, Ethyl, Methoxy, Ethoxy und Chlor substituiert sein kann, Y eine der oben genannten Bedeutungen hat und bevorzugt die β-Sulfatoethyl-Gruppe ist und R" Wasserstoff, Methyl oder Ethyl ist, wobei weiterhin bevorzugt in Formel (17B) D ein Naphthalinring oder bevorzugt ein Benzolring ist, $R^4$ die Vinylsulfonyl- oder bevorzugt die β-Sulfatoethylsulfonyl-Gruppe bedeutet und $R^5$ und $R^6$ die obengenannten Bedeutungen haben, M ein Wasserstoffatom oder Alkalimetall ist und $Z^1$ ein Rest der allgemeinen Formel (3C) ist, und wobei weiterhin bevorzugt in Formel (21) p für die Zahl 2 steht, wobei die beiden Gruppen $-SO_3M$ in 4- und 8-Stellung an den Naphth-2-yl-Rest gebunden sind und die Gruppe $-SO_3M$ in der Naphthylen-Mittelkomponente in 6-Stellung gebunden ist, und wobei Weiterhin bevorzugt in Formel (42) die eine Gruppe $-SO_3M$ im Aminonaphtholrest in meta-Stellung zur Gruppe NH steht und v die Zahl Null bedeutet.

Weiterhin bevorzugte Farbstoffe der vorliegenden Erfindung sind solche, die den allgemeinen Formeln

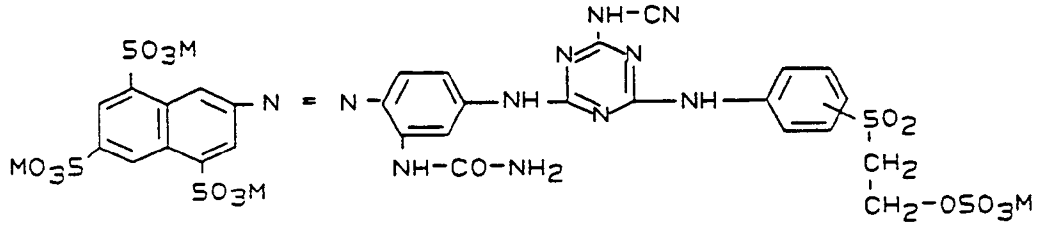

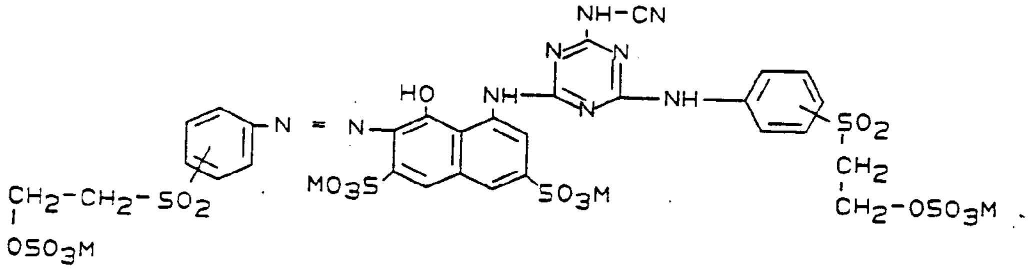

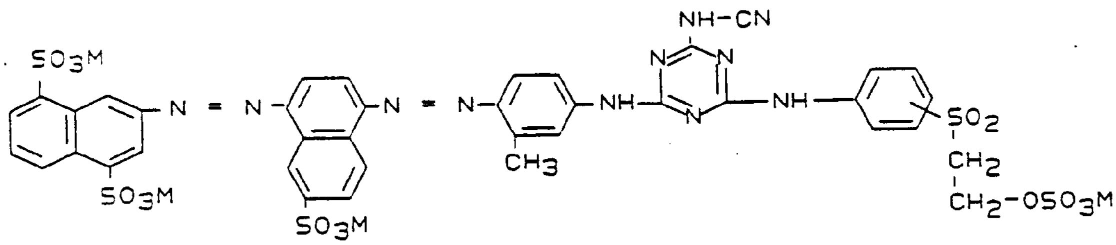

entsprechen, in welchen M Wasserstoff oder ein Alkalimetall bedeutet und die Gruppen $-SO_2-CH_2-CH_2-OSO_3M$ an den Benzolkern in meta- oder para-Stellung zur Aminogruppe gebunden sind.

In allen obigen Formeln können die einzelnen Formelglieder, sowohl verschiedener als auch gleicher Bezeichnung innerhalb einer allgemeinen Formel, im Rahmen ihrer Bedeutung zueinander gleiche und voneinander verschiedene Bedeutungen haben.

Die Gruppen "Sulfo", "Carboxy", "Phosphato", "Thiosulfato" und "Sulfato" schließen sowohl deren Säureform als auch deren Salzform ein. Demgemäß bedeuten Sulfogruppen Gruppen entsprechend der allgemeinen Formel $-SO_3M$ , Carboxygruppen Gruppen entsprechend der allgemeinen Formel -COOM , Phosphatogruppen Gruppen entsprechend der allgemeinen Formel $-OPO_3M_2$ , Thiosulfatogruppen Gruppen entsprechend der allgemeinen Formel $-S-SO_3M$ und Sulfatogruppen Gruppen entsprechend der allgemeinen Formel $-OSO_3M$ , jeweils mit M der obengenannten Bedeutung.

Die Umsetzung einer anfangs angegebenen Ausgangsverbindung der allgemeinen Formel (57) mit einem Amin der allgemeinen Formel H-Q erfolgt ebenfalls wie die anfangs erwähnte Umsetzung der Verbindung (58) mit dem Amin H-Q im wäßrigen oder wäßrig-organischen Medium in Suspension oder Lösung, wobei hier eine Temperatur zwischen 15 und 70°C, vorzugsweise zwischen 25 und 45°C, und ein pH-Wert zwischen 3 und 11,5, bevorzugt zwischen 3,5 und 7, eingehalten wird.

Die Ausgangsverbindungen der allgemeinen Formel (59) lassen sich herstellen, indem man, analog bekannten Verfahrensweisen, beispielsweise eine Verbindung der allgemeinen Formel (57) mit einem Amin der allgemeinen Formel H-Q mit Q der obengenannten Bedeutung oder eine Verbindung der allgemeinen Formel (62)

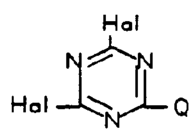

(62)

in welcher Hal und Q die obengenannten Bedeutungen haben, mit einer Ausgangsverbindung der allgemeinen Formel (55) umsetzt. Die Ausgangsverbindung (62) selbst kann wiederum analog bekannten Verfahrensweisen durch Umsetzung von einem Trihalogen-s-triazin mit einem Amin der allgemeinen Formel H-Q mit Q der obengenannten Bedeutung hergestellt werden.

Die Kondensation des Halogentriazins der Formel (56) mit einer Verbindung der Formel H-Q erfolgt, ebenfalls vorzugsweise in wäßriger Lösung oder Suspension, bei 0 bis 30°C bei einem pH-Wert zwischen 1,8 und 9,5. Auch hier wird der bei der Kondensation freiwerdende Halogenwasserstoff vorteilhafterweise durch laufende Zugabe von wäßrigen Alkalihydroxiden, -carbonaten oder -bicarbonaten neutralisiert.

Unter bestimmten Reaktionsbedingungen kann bei einem Halogentriazinrest Hydrolyse auftreten; deswegen muß bei einem Zwischenprodukt bzw. Vorprodukt, das eine Schutzgruppe, wie beispielsweise eine Acetylaminogruppe enthält, die Abspaltung der Acetylgruppe durch Verseifung vorgenommen werden, bevor die Umsetzung mit dem Halogentriazin erfolgt. In welcher Reihenfolge die verschiedenen oben erwähnten Umsetzungen zwischen den Halogentriazin- und Aminoausgangsverbindungen zweckmäßig zuerst ausgeführt werden, ist von Fall zu Fall verschieden und richtet sich vor allem nach der Löslichkeit der beteiligten Aminoverbindungen und der Basizität der Aminogruppen, die mit dem Halogentriazinrest umgesetzt werden sollen.

Bei der erfindungsgemäßen Synthese der erfindungsgemäßen Schwermetallkomplex-Azofarbstoffe kann man beispielsweise auch von solchen metallfreien Azofarbstoffen ausgehen, die der allgemeinen Formel (1) entsprechen, in welchen jedoch die Diazo- und Kupplungskomponenten in ortho-Stellung zur Azogruppe jeweils eine zur Komplexbildung befähigte Hydroxygruppe enthalten. Diese o,o'-Dihydroxy-Azoausgangsverbindung entsprechend der allgemeinen Formel (1) wird sodann in üblicher und bekannter Verfahrensweise mit einem ein Schwermetallion abgebenden Agenz, wie beispielsweise Kupferchlorid, Kupfersulfat, Chromchlorid, Chromsulfat und Kobaltchlorid, zum erfindungsgemäßen Schwermetallkomplex-Azofarbstoff umgesetzt.

Erfindungsgemäße Phthalocyaninfarbstoffe können erfindungsgemäß auch beispielsweise so hergestellt werden, daß man von einem Phthalocyaninsulfochlorid oder einem sulfogruppenhaltigen Phthalocyaninsulfochlorid ausgeht und dieses mit einem Amin der allgemeinen Formel H-Q mit Q der obengenannten Bedeutung und gegebenenfalls mit einem weiteren Amin, wie beispielsweise einem Amin der allgemeinen Formel $-NR^2R^3$ mit $R^2$ und $R^3$ der obengenannten Bedeutung, umsetzt. Solche Verfahrensweisen der Umsetzung von Phthalocyaninsulfochloriden mit Aminen sind zahlreich in der Literatur beschrieben, wie beispielsweise in der US-Patentschrift 4 745 178 und der darin diesbezüglich zusätzlich aufgeführten Literatur.

Die Ausgangsamine der allgemeinen Formel H-Q sind zahlreich in der Literatur beschrieben, so beispielsweise in den Deutschen Patentschriften Nrs. 887 505 und 965 902, in den Deutschen Offenlegungsschriften Nrs. 2 040 620 und 2 614 550 und in den Europäischen Patentanmeldungs-Veröffentlichungen Nrs. 0 107 614, 0 144 766, 0 159 292 und 0 278 904.

Die erfindungsgemäßen Farbstoffe können, ausgehend von einem oder mehreren Ausgangsprodukten mit einer β-Hydroxyethylsulfonyl-Gruppe, wie von einem Amin der allgemeinen Formel H-Q mit Q der obengenannten Bedeutung, jedoch mit dem Unterschied, daß die Gruppe(n) der Formel $-SO_2-Y$ β-Hydroxyethylsulfonyl-Gruppen sind, erfindungsgemäß auch so hergestellt werden, daß man analog den oben angegebenen erfindungsgemäßen Verfahrensweisen zunächst eine Ausgangsverbindung herstellt, der der allgemeinen Formel (1) mit der angegebenen Bedeutung entspricht, jedoch mit dem Unterschied, daß die Gruppe(n) $-SO_2-Y$ β-Hydroxyethylsulfonyl-Gruppen sind, und in dieser Ausgangsverbindung die β-Hydroxyethylsulfonyl-Gruppen analog bekannten Verfahrensweisen in andere Gruppen $-SO_2-Y$ entsprechend der erfindungsgemäßen Verbindung (1) überführt, so beispielsweise in deren Esterderivate, wie beispielsweise von mehrwertigen anorganischen Säuren oder von aliphatischen und aromatischen Carbon- oder Sulfonsäuren, so beispielsweise in Verbindungen, in welchen Y für die β-Chlorethyl-, β-Sulfatoethyl-, β-Phosphatoethyl-, β-Thiosulfatoethyl-, β-Acetyloxyethyl- oder β-Toluylsulfonyloxyethyl-Gruppe steht. Hierfür geeignete Veresterungs- und Acylierungsmittel sind beispielsweise die entsprechenden anorganischen oder organischen Säuren oder deren Anhydride oder Halogenide oder Amide, wie beispielsweise Schwefelsäure, Schwefeltrioxid enthaltende Schwefelsäure, Chlorsulfonsäure, Amidosulfonsäure, Phosphorsäure, Polyphosphorsäure, Phosphoroxychlorid, Gemische aus Phosphorsäure und Phosphorpentoxid, Acetanhydrid, Toluolsulfochlorid und Thionylchlorid.

Die Sulfatierung erfolgt beispielsweise durch Umsetzung mit konzentrierter Schwefelsäure bei einer Temperatur zwischen 0 und 20°C oder durch Umsetzung mit Chlorsulfonsäure in einem polaren organischen Lösemittel, wie beispielsweise N-Methyl-pyrrolidon bei einer Temperatur zwischen 10 und 80°C. Vorzugsweise erfolgt die Sulfatierung durch Eintragen des β-hydroxyethylsulfonylgruppen-haltigen Ausgangsfarbstoffes in Schwefelsäuremonohydrat bei einer Temperatur zwischen 5 und 15°C.

Diejenigen Verbindungen, in welchen Y für die Vinylgruppe steht, können aus deren analogen Esterderivaten mittels Alkali, so in wäßrigem Medium bei einem pH-Wert von 10 bis 12 und einer Temperatur zwischen 30 und 50°C während 10 bis 20 Minuten, hergestellt werden. Die Synthese von beispielsweise β-(Dialkylamino)-ethylsulfonyl- und β-Thio-sulfatoethylsulfonyl-Derivaten erfolgt durch Umsetzung von deren Vinylsulfonyl-Verbindungen mit dem entsprechenden Dialkylamin oder mit einem Alkalisalz der Thioschwefelsäure, wie Natriumthiosulfat. Alle diese Verfahrensweisen der Überführung von einer Gruppe $-SO_2-Y$ in eine andere sind dem Fachmann auf diesem faserreaktiven Gebiet geläufig und zahlreich in der Literatur beschrieben.

Die erfindungsgemäßen Farbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose. Die Farbstoffe der Formel (1) sind auch zum Färben oder Bedrucken von hydroxygruppenhaltigen Fasern geeignet, die in Mischgeweben enthalten sind, z.B. von Gemischen aus Baumwolle mit Polyesterfasern oder Polyamidfasern.

Die erfindungsgemäßen Farbstoffe lassen sich auf verschiedene Weise auf das Fasermaterial applizieren

und auf der Faser fixieren, insbesondere in Form von wäßrigen Farbstofflösungen und -druckpasten. Sie eignen sich sowohl für das Ausziehverfahren als auch zum Färben nach dem Foulard-Färbeverfahren, wonach die Ware mit wäßrigen, gegebenenfalls salzhaltigen Farbstofflösungen imprägniert und der Farbstoff nach einer Alkalibehandlung oder in Gegenwart von Alkali, gegebenenfalls unter Wärmeeinwirkung, fixiert wird. Besonders geeignet sind die erfindungsgemäßen Farbstoffe für das sogenannte Kaltverweilverfahren, wonach der Farbstoff zusammen mit dem Alkali auf dem Foulard aufgebracht und danach durch mehrstündiges Lagern bei Raumtemperatur fixiert wird. Nach dem Fixieren werden die Färbungen oder Drucke mit kaltem und heißem Wasser, gegebenenfalls unter Zusatz eines dispergierend wirkenden und die Diffusion der nicht fixierten Anteile fördernden Mittels, gründlich gespült.

Gegenstand der vorliegenden Erfindung ist deshalb auch die Verwendung der erfindungsgemäßen Verbindungen der allgemeinen Formel (1) zum Färben (einschließlich des Bedruckens) dieser Materialien bzw. Verfahren zum Färben (und Bedruckens) solcher Materialien in an und für sich üblicher Verfahrensweise, bei welchen eine Verbindung der allgemeinen Formel (1) als Farbmittel eingesetzt wird, indem man die Verbindung der allgemeinen Formel (1) im wäßrigen Medium auf das Material appliziert und es mittels Wärme oder mittels einer alkalisch wirkenden Verbindung oder mittels beidem auf dem Material fixiert.

Falls erfindungsgemäße Anthrachinonfarbstoffe eine ungenügende Löslichkeit in der alkalischen Färbeflotte aufweisen, kann dieser Mangel in der aus der Literatur bekannten Weise durch Zusatz von Dispergatoren oder anderen nichtfarbigen Verbindungen, z.B. einem Naphthalinsulfonsäure-Formaldehyd-Kondensat oder insbesondere Anthrachinon-2-sulfonsäure, behoben werden.

Die Farbstoffe der Formel (1) zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die Farbstoffe der Formel (1) eignen sich auch besonders zum Druck, vor allem auf Baumwolle, ebenso aber auch zum Bedrucken von Stickstoffhaltigen Fasern, z.B. von Wolle oder Seide oder von Mischgeweben, die Wolle oder Seide enthalten.

Die mit den erfindungsgemäßen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Naßechtheitseigenschaften, wie Wasch-, Wasser-, Seewasser-, Ueberfärbe- und Schweißechtheiten, sowie eine gute Plissierechtheit, Bügelechtheit und Reibechtheit.

Die nachfolgenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben; im allgemeinen werden sie in Form ihrer Alkalimetallsalze, wie Lithium-, Natrium- oder Kaliumsalze, hergestellt und isoliert und in Form ihrer Salze zum Färben verwendet.

Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Verbindungen angegebenen Absorptionsmaxima ($\lambda_{max}$) im sichtbaren Bereich wurden anhand derer Alkalimetallsalze in wäßriger Lösung ermittelt. In den Tabellenbeispielen sind die $\lambda_{max}$-Werte bei der Farbtonangabe in Klammern gesetzt; die Wellenlängenangabe bezieht sich auf nm.

**Beispiel 1**

45,3 Teile 3-(2'-Sulfo-4'-methoxy-phenylazo)-4-hydroxy-7-amino-naphthalin-2-sulfonsäure werden in wäßriger Lösung bei einer Temperatur von 0 bis 5°C und einem pH-Wert von 4 mit 19 Teilen Cyanurchlorid umgesetzt. Anschließend gibt man 4,4 Teile Cyanamid hinzu, stellt mittels Natronlauge einen pH-Wert von 10 ein und führt die Umsetzung während etwa 1,5 Stunden bei einer Temperatur von 60°C und bei einem pH-Wert zwischen 9,5 und 10 durch. Die so hergestellte Monochlortriazin-Azoverbindung wird in der Syntheselösung mit 29,5 Teilen 3-(β-Sulfatoethylsulfonyl)-anilin bei einem pH-Wert von 4 und einer Temperatur von 85°C umgesetzt. Nach Beendigung dieser Kondensationsreaktion wird der gebildete erfindungsgemäße Farbstoff, der, in Form der freien Säure geschrieben, der Formel

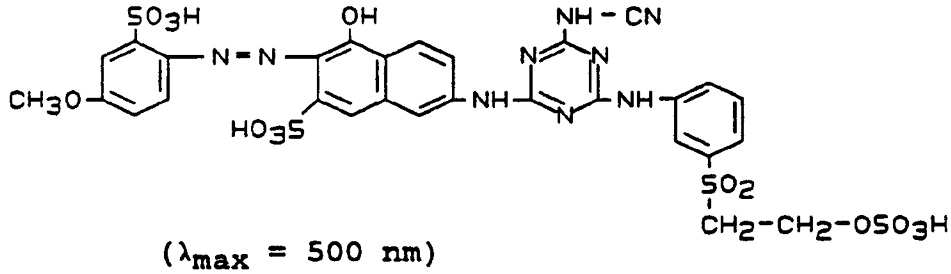

($\lambda_{max}$ = 500 nm)

entspricht, durch Eindampfen unter reduziertem Druck oder durch Sprühtrocknung als Alkalimetallsalz (Natriumsalz) isoliert. Er besitzt sehr gute faserreaktive Farbstoffeigenschaften und liefert nach den für faserreaktive Farbstoffe üblichen Anwendungsverfahren farbstarke, brillante scharlachrote Färbungen und Drucke mit guten Echtheitseigenschaften, von denen insbesondere die Wasserechtheit und Schweißechtheit hervorgehoben werden können. Er zeichnet sich insbesondere durch einen hohen Fixiergrad sowohl in den Ausziehverfahren bei Temperaturen zwischen 40 und 80°C als auch in den Klotz-Kaltverweil-Färbeverfahren aus.

**Beispiel 2**

Zu einer feinverteilten Suspension von 19 Teilen Cyanurchlorid in 200 Teilen Eiswasser gibt man 4,25 Teile Cyanamid, stellt anschließend mit Natronlauge einen pH-Wert von 8,5 bis 9 ein und führt die Umsetzung während einer Stunde bei 0 bis 3°C und einem pH-Wert von 8,5 unter weiterem Rühren zu Ende. Die entstandene Lösung wird anschließend mit wäßriger Salzsäure auf einen pH-Wert von 5 eingestellt; es werden 24,3 Teile 4-Hydroxy-7-methylamino-naphthalin-2-sulfonsäure zugesetzt, und die Kondensationsreaktion wird während 2 Stunden bei 20°C und einem pH-Wert von 3 bis 3,5 durchgeführt. Anschließend gibt man zu der Lösung der so erhaltenen Kupplungskomponente die schwefelsaure Suspension des auf üblichem Wege hergestellten Diazoniumsalzes von 28,8 Teilen 2-Aminonaphthalin-1,5-disulfonsäure und führt die Kupplungsreaktion bei 10 bis 20°C und einem pH-Wert von 6 bis 6,5 durch. Sodann gibt man 29,5 Teile 3-(β-Sulfatoethylsulfonyl)-anilin hinzu und führt die Kondensationsreaktion bei 85°C und unter Einhaltung eines pH-Wertes von 3,5 bis 4 durch.

Der erhaltene faserreaktive Farbstoff, der, in Form der freien Säure geschrieben, die Formel

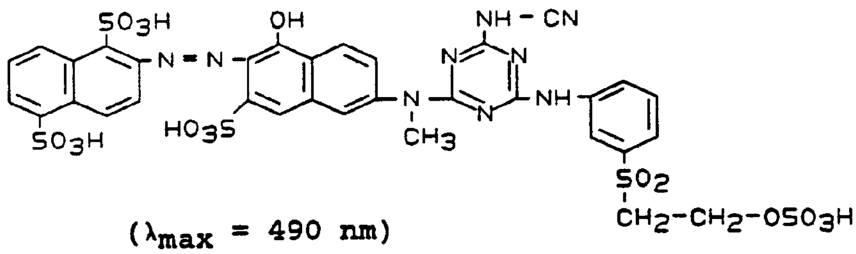

($\lambda_{max}$ = 490 nm)

besitzt, wird als Alkalimetallsalz (Natriumsalz) isoliert, beispielsweise nach Klären der Syntheselösung mittels Kieselgur und Filtration durch Eindampfen des Filtrates unter reduziertem Druck oder durch Sprühtrocknung. Der erfindungsgemäße Farbstoff liefert nach den in der Technik üblichen Applikations- und Fixierverfahren für faserreaktive Farbstoffe auf den in der Beschreibung genannten Materialien, wie insbesondere Cellulosefasermaterialien, beispielsweise Baumwolle, farbstarke orange Färbungen mit guten Echtheitseigenschaften, von denen insbesondere guten Wasser- und Überfärbeechtheiten hervorgehoben werden können. Er zeichnet sich weiterhin durch einen hohen Fixiergrad auf Baumwolle aus.

**Beispiel 3**

54,5 Teile 3-Ureido-4-(3',6',8'-trisulfo-2'-naphthylazo)-anilin werden in wäßriger Lösung bei 0 bis 5°C und einem pH-Wert von 4 mit 19 Teilen feindispergiertem Cyanurchlorid umgesetzt. Anschließend gibt man 4,4 Teile Cyanamid hinzu und führt die zweite Kondensationsreaktion während etwa zwei Stunden bei einem pH-Wert zwischen 9,5 und 10 und einer Temperatur zwischen 60 und 70°C durch. Die dritte Kondensationsreaktion erfolgt nach Zugabe von 23 Teilen 4-(β-Hydroxyethylsulfonyl)-phenethylamin bei einem pH-Wert von 9 und einer Temperatur von 80 bis 90°C. Nach beendeter Umsetzung wird die gebildete Azoverbindung der Formel (in

Form der freien Säure geschriebenen)

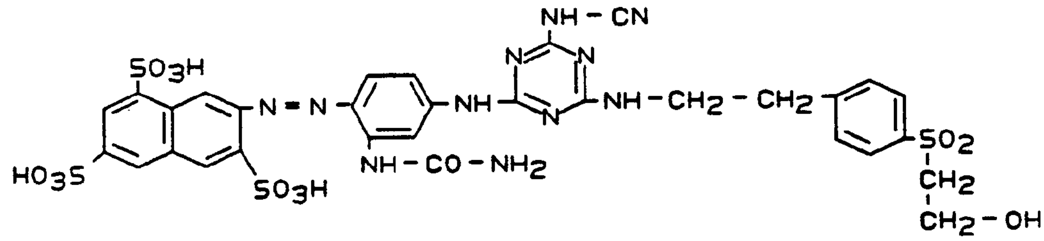

aus deren auf einen pH-Wert von 7 eingestellten Syntheselösung mittels Kaliumchlorid ausgesalzen, isoliert und getrocknet. Das erhaltene orangrote Pulver enthält die Azoverbindung zu etwa 70%.

10 Teile dieses Pulvers werden bei 5 bis 10°C unter Rühren in 100%ige Schwefelsäure eingetragen. Nach vollständiger Lösung des Produktes gibt man diesen Ansatz auf 80 Teile Eis und stellt mittels verdünnter wäßriger Kalilauge vorsichtig einen pH-Wert von 6 ein. Der gebildete erfindungsgemäße Farbstoff wird durch Aussalzen mittels Kaliumchlorid als Alkalimetallsalz (vorwiegend Kaliumsalz) isoliert. Er besitzt, in Form der freien Säure geschrieben, die Formel

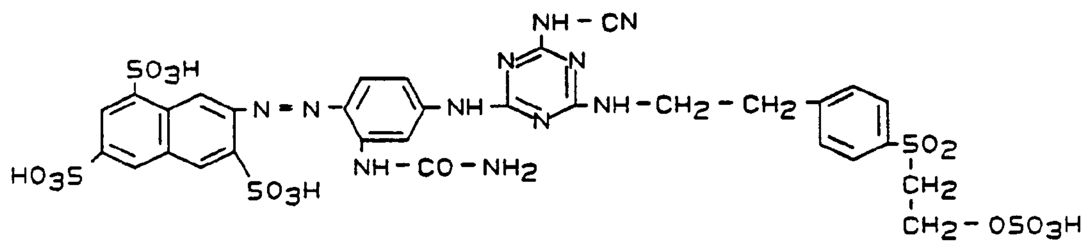

($\lambda_{max}$ = 412 nm)

und färbt die in der Beschreibung genannten Materialien, wie insbesondere Cellulosefasermaterialien, beispielsweise Baumwolle, in farbstarken, rotstichig gelben, echten Tönen.

**Beispiel 4**

45,3 Teile 3-(2'-Sulfo-4'-methoxy-phenylazo)-4-hydroxy-7-amino-naphthalin-2-sulfonsäure werden in wäßriger Lösung bei einer Temperatur von 0 bis 3°C und einem pH-Wert von 3,5 bis 4 mit 19 Teilen Cyanurchlorid umgesetzt. Nach beendeter Kondensationsreaktion werden 20,4 Teile γ-(β'-Hydroxyethylsulfonyl)-propylamin-hydrochlorid hinzugegeben, und die zweite Kondensationsreaktion wird bei 60°C und einem pH-Wert von 7 während etwa 2 Stunden zu Ende geführt (wie in den vorherigen Beispielen, kann die Umsetzung dünnschichtchromatographisch verfolgt werden). Danach gibt man 4,4 Teile Cyanamid hinzu und führt die dritte Kondensationsreaktion bei einem pH-Wert von 10 und einer Temperatur von 85°C durch. Die gebildete Azoverbindung mit der β-Hydroxyethylsulfonyl-Gruppe wird nach Einstellen der Syntheselösung auf einen pH-Wert von 7 durch Kaliumchlorid ausgesalzen, isoliert und getrocknet. 10 Teile dieses Produktes, das ca. 70%ig an der Azoverbindung ist, werden bei 5 bis 10°C in 15 Teile 100%ige Schwefelsäure unter Rühren eingetragen. Nachdem die Azoverbindung gelöst ist, gibt man den Ansatz auf 80 Teile Eis, neutralisiert das Gemisch mittels Calciumcarbonat, saugt vom ausgefallenen Calciumsulfat ab, wäscht den Rückstand mit Wasser und dampft das Filtrat unter reduziertem Druck ein.

Die als Alkalimetallsalz (Natriumsalz) erhaltene erfindungsgemäße Azoverbindung besitzt, in Form der freien Säure geschrieben, die Formel

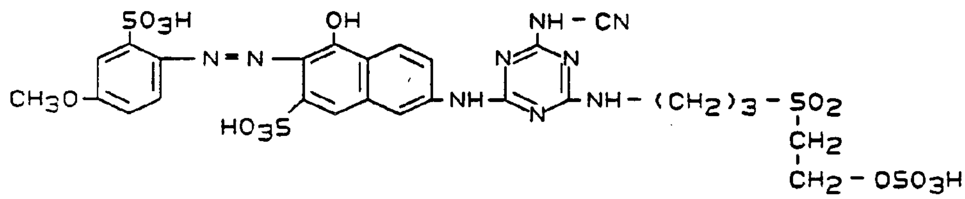

($\lambda_{max}$ = 501 nm).

Er zeigt sehr gute faserreaktive Farbstoffeigenschaften und färbt die in der Beschreibung genannten Materialien, wie insbesondere Cellulosefasermaterialien, wie Baumwolle, in farbstarken, leuchtend scharlachroten Tönen mit hohem Fixiergrad.

**Beispiel 5**

Man versetzt 31,9 Teile 4-Hydroxy-5-amino-naphthalin-2,6-disulfonsäure in 800 Teilen Wasser bei einer Temperatur von 0°C und einem pH-Wert von 4,5 langsam innerhalb von 5 Minuten mit 14,2 Teilen Cyanurchlorid. Anschließend gibt man unter weiterem Rühren 22,3 Teile γ-(β'-Chlorethylsulfonyl)-propylamin-hydrochlorid unter Einhaltung eines pH-Wertes von 7 und einer Temperatur von 5 bis 15°C hinzu und rührt noch einige Zeit nach, bis dünnschichtchromatographisch kein Ausgangsmaterial mehr nachweisbar ist. Anschließend gibt man 4,25 Teile Cyanamid hinzu und führt die Kondensationsreaktion bei einer Temperatur von 50 bis 60°C und einem pH-Wert von 6,5 während etwa 4 Stunden durch.

Die so hergestellte Kupplungskomponente wird in der Syntheselösung mit der auf üblichem Wege hergestellten wäßrigen, salzsauren Lösung des Diazoniumsalzes von 51,1 Teilen 2-Amino-6-(β-sulfatoethylsulfonyl)-naphthalin-1-sulfonsäure versetzt, und die Kupplungsreaktion wird bei 15 bis 30°C und einem pH-Wert von 6 durchgeführt.

Der erhaltene erfindungsgemäße Farbstoff wird nach Klären der Syntheselösung bei einem pH-Wert von 5,5 durch Sprühtrocknung als Alkalimetallsalz (Natriumsalz) isoliert. Er besitzt, in Form der freien Säure geschrieben, die Formel

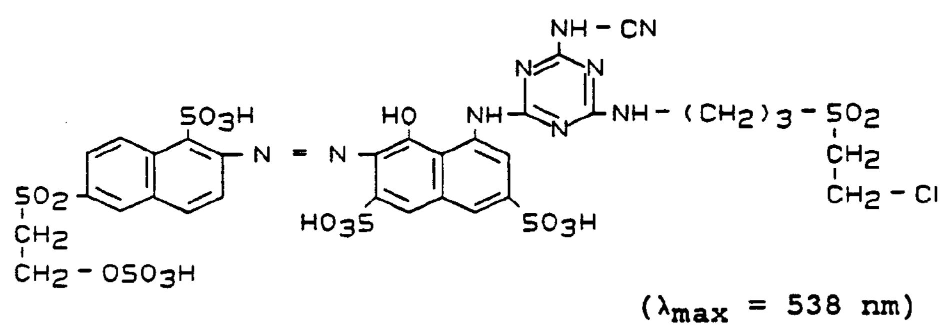

($\lambda_{max}$ = 538 nm)

und zeigt sehr gute faserreaktive Farbstoffeigenschaften. Nach den in der Technik für faserreaktive Farbstoffe üblichen Applikation- und Fixierverfahren liefert er beispielsweise auf Cellulosefasermaterialien, wie Baumwolle, farbstarke, blaustichig rote, echte Färbungen und Drucke bei einem hohen Fixiergrad.

**Beispiele 6 bis 123**

In den nachfolgenden Tabellenbeispielen sind weitere erfindungsgemäße Azofarbstoffe mit Hilfe der Komponenten entsprechend der allgemeinen Formel (A)

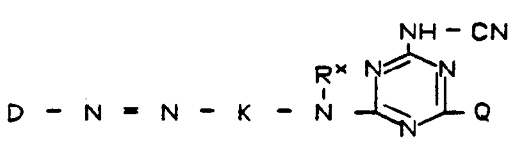

(A)

beschrieben. Sie lassen sich in erfindungsgemäßer Weise, beispielsweise analog einem der obigen Ausführungsbeispiele, unter Einsatz der aus dem jeweiligen Tabellenbeispiel in Verbindung mit der allgemeinen Formel (A) ersichtlichen Komponenten (wie der Diazokomponente D-$NH_2$, der Kupplungskomponente H-K-$NR^xH$, einem Halogentriazin, Cyanamid und einem Amin der Formel H-Q) herstellen. Sie besitzen sehr gute faserreaktive Farbstoffeigenschaften und färben die in der Beschreibung genannten Materialien, insbesondere Cellulosefasermaterialien, wie Baumwolle, in den in dem jeweiligen Tabellenbeispiel (hierfür Baumwolle) angegebenen Tönen in hoher Farbstärke und mit guten Echtheiten.

| Bsp. | Rest -D | Rest -K-N($R^x$)- | Rest -Q | Farbton |
|---|---|---|---|---|
| 6 | 3,6,8-Trisulfo-naphth-2-yl | 3-Ureido-phen-ylen(4,1)-1-amino | 3-(ß-Sulfato-ethylsulfonyl)-phenylamino | rotstichig gelb (414) |
| 7 | dito | dito | γ-(ß-Sulfato-ethylsulfonyl)-propylamino | rotstichig gelb |
| 8 | dito | dito | 3-(Vinylsulfo-nyl)-phenylamino | dito |
| 9 | 4,8-Disulfo-naphth-2-yl | 3-Acetylamino-phen-ylen(4,1)-1-amino | 3-(ß-Sulfato-ethylsulfonyl)-phenylamino | dito |
| 10 | dito | dito | 4-(ß-Sulfato-ethylsulfonyl)-phenylamino | dito |
| 11 | dito | dito | ß-[4-(ß'-Sulfato-ethylsulfonyl)-phen]-ethylamino | dito |
| 12 | dito | dito | γ-(ß-Sulfato-ethylsulfonyl)-propylamino | dito |
| 13 | dito | dito | Bis-[ß-(ß'-chlor-ethylsulfonyl)-ethyl]-amino | dito |

| Bsp. | Rest -D | Rest -K-N($R^x$)- | Rest -Q | Farbton |
|---|---|---|---|---|
| 14 | dito | dito | 2-Methoxy-5-(ß-sulfatoethylsulfonyl)-phenylamino | dito |
| 15 | 4,6,8-Trisulfo-naphth-2-yl | 3-Methyl-phenylylen(4,1)-1-amino | 3-(Vinylsulfonyl)-phenylamino | dito |
| 16 | dito | dito | 4-(ß-Sulfatoethylsulfonyl)-phenylamino | dito |
| 17 | dito | dito | γ-(ß'-Sulfato-ethylsulfonyl)-propylamino | dito |
| 18 | 6-(ß-Sulfato-ethylsulfonyl)-1-sulfo-naphth-2-yl | 3-Acetylamino-phen-ylen(4,1)-1-amino | 3-(ß-Sulfatoethylsulfonyl)-phenylamino | dito |
| 19 | dito | dito | 4-(ß-Sulfatoethylsulfonyl)-phenylamino | dito |
| 20 | dito | 3-Ureido-phen-ylen(4,1)-1-amino | dito | dito |
| 21 | dito | dito | 3-(ß-Sulfatoethylsulfonyl)-phenylamino | dito |
| 22 | 4-(ß-Sulfato-ethylsulfonyl)-phenyl | 3-Amino-4-sulfo-phen-ylen(6,1)-1-amino | 4-(ß-Sulfatoethylsulfonyl)-phenylamino | goldgelb |
| 23 | dito | dito | 3-(ß-Sulfatoethylsulfonyl)-phenylamino | goldgelb |
| 24 | dito | dito | γ-(ß'-Sulfato-ethylsulfonyl)-propylamino | goldgelb |

| Bsp. | Rest -D | Rest -K-N($R^x$)- | Rest -Q | Farbton |
|---|---|---|---|---|
| 25 | dito | dito | β-[4-(β'-sulfato-ethylsulfonyl)-phen]-ethylamino | gold-gelb |
| 26 | 2-Sulfo-4-(β-sulfatoethyl-sulfonyl)-phenyl | dito | 3-(β-Sulfatoethyl-sulfonyl)-phenyl-amino | gold-gelb |
| 27 | dito | dito | 4-(β-Sulfatoethyl-sulfonyl)-phenyl-amino | gold-gelb |
| 28 | 4-Sulfo-phenyl | dito | dito | gold-gelb |
| 29 | dito | dito | 3-(β-Sulfatoethyl-sulfonyl)-phenyl-amino | gold-gelb |
| 30 | dito | dito | γ-(β'-Sulfato-ethylsulfonyl)-propylamino | gold-gelb |
| 31 | dito | 3-Carboxy-pyrazol-5-on-4-yl-1-(2'-sulfo-phenyl-4'-amino) | 4-(β-Sulfatoethyl-sulfonyl)-phenyl-amino | gelb |
| 32 | dito | dito | 3-(β-Sulfatoethyl-sulfonyl)-phenyl-amino | gelb |
| 33 | 4-(β-Sulfato-ethylsulfonyl)-phenyl | dito | dito | gelb |
| 34 | dito | dito | 4-(β-Sulfatoethyl-sulfonyl)-phenyl-amino | gelb |
| 35 | 2-Sulfo-phenyl | dito | dito | gelb |

| Bsp. | Rest -D | Rest -K-N($R^x$)- | Rest -Q | Farbton |
|---|---|---|---|---|
| 36 | dito | dito | 3-(β-Sulfatoethyl-sulfonyl)-phenyl-amino | gelb |
| 37 | 2,5-Disulfo-phenyl | 4-Hydroxy-2-sulfo-naphth-ylen(3,7)-7-amino | dito | orange |
| 38 | dito | dito | 4-(β-Sulfatoethyl-sulfonyl)-phenyl-amino | orange |
| 39 | 1,5-Disulfo-naphth-2-yl | dito | dito | orange |
| 40 | dito | dito | 3-(β-Sulfatoethyl-sulfonyl)-phenyl-amino | orange |
| 41 | dito | dito | γ-(β'-Sulfato-ethylsulfonyl)-propylamino | orange |
| 42 | dito | dito | β-[4-(β'-sulfato-ethylsulfonyl)-phen]-ethylamino | orange |
| 43 | dito | 4-Hydroxy-2-sulfo-naphth-ylen(3,7)-7-methylamino | 4-(β-Sulfatoethyl-sulfonyl)-phenyl-amino | orange |
| 44 | 6-(β-Sulfato-ethylsulfonyl)-1-sulfo-naphth-2-yl | 4-Hydroxy-2-sulfo-naphth-ylen(3,7)-7-amino | dito | orange |
| 45 | dito | dito | 3-(β-Sulfatoethyl-sulfonyl)-phenyl-amino | orange |
| 46 | 4-Methoxy-2-sulfo-phenyl | dito | β-[4-(β'-Sulfato-ethylsulfonyl)-phen]-ethylamino | schar-lach |

| Bsp. | Rest -D | Rest -K-N($R^x$)- | Rest -Q | Farbton |
|---|---|---|---|---|
| 47 | dito | dito | 4-(β-Sulfatoethyl-sulfonyl)-phenyl-amino | schar-lach |
| 48 | dito | dito | N-Ethyl-N-[4-(β-sulfatoethyl-sulfonyl)-phenyl]-amino | schar-lach |
| 49 | dito | dito | 3,4-Di-(β-sulfato-ethylsulfonyl)-phenylamino | schar-lach |
| 50 | dito | dito | 2-Methoxy-5-(β-sulfatoethyl-sulfonyl)-phenyl-amino | schar-lach |
| 51 | dito | dito | 6-(β-Sulfatoethyl-sulfonyl)-naphth-2-yl-amino | schar-lach |
| 52 | 4-Methoxy-2-sulfo-phenyl | dito | 2,5-Di-(β-sulfato-ethylsulfonyl-methyl)-phenylamino | schar-lach |
| 53 | dito | dito | 3,5-Di-{N-[γ-(β'-sul-fatoethylsulfonyl)-propyl]-amidocarbonyl}-phenylamino | schar-lach |
| 54 | 4-Methoxy-3-(β-sulfatoethyl-sulfonyl)-phenyl | dito | 3-(β-Sulfatoethyl-sulfonyl)-phenyl-amino | schar-lach |
| 55 | dito | dito | 4-(β-Sulfatoethyl-sulfonyl)-phenyl-amino | schar-lach |
| 56 | 4-(β-Sulfato-ethylsulfonyl)-phenyl | 4-Hydroxy-2-sulfo-naphth-ylen(3,6)-6-amino | dito | gelb-stichig rot |

| Bsp. | Rest -D | Rest -K-N($R^x$)- | Rest -Q | Farbton |
|---|---|---|---|---|
| 57 | dito | dito | 3-(β-Sulfatoethyl-sulfonyl)-phenyl-amino | gelb-stichig rot |
| 58 | dito | 4-Hydroxy-2,8-disulfo-naphth-ylen(3,5)-5-amino | dito | gelbstichig rot (517) |
| 59 | dito | dito | 4-(β-Sulfatoethyl-sulfonyl)-phenyl-amino | gelbstichig rot |
| 60 | 4-Methoxy-2-sulfo-phenyl | 4-Hydroxy-2-sulfo-naphth-ylen(3,6)-6-amino | dito | dito |
| 61 | dito | dito | 3-(β-Sulfatoethyl-sulfonyl)-phenyl-amino | dito |
| 62 | 2-Sulfo-phenyl | 4-Hydroxy-2,7-disulfo-naphth-ylen(3,5)-5-amino | dito | rot |
| 63 | dito | dito | 4-(β-Sulfatoethyl-sulfonyl)-phenyl-amino | rot |
| 64 | dito | 4-Hydroxy-2,8-disulfo-naphth-ylen(3,5)-5-amino | 3-(β-Sulfatoethyl-sulfonyl)-phenyl-amido | gelb-stichig rot |
| 65 | dito | dito | 4-(β-Sulfatoethyl-sulfonyl)-phenyl-amido | dito |
| 66 | 2,5-Dicarboxy-phenyl | dito | dito | dito |

| Bsp. | Rest -D | Rest -K-N($R^x$)- | Rest -Q | Farbton |
|---|---|---|---|---|
| 67 | dito | dito | 3-(β-Sulfatoethylsulfonyl)-phenylamino | dito |
| 68 | dito | 4-Hydroxy-2,7-disulfo-naphthylen(3,5)-5-amino | dito | rot |
| 69 | dito | dito | 4-(β-Sulfatoethylsulfonyl)-phenylamino | rot |
| 70 | dito | dito | γ-(β'-Sulfato-ethylsulfonyl)-propylamino | rot |
| 71 | dito | dito | β-[4-(β'-Sulfato-ethylsulfonyl)-phen]-ethylamino | rot |
| 72 | 1,5-Disulfo-naphth-2-yl | dito | dito | blau-stichig rot |
| 73 | dito | dito | 4-(β-Sulfatoethylsulfonyl)-phenylamino | dito |
| 74 | dito | dito | 3-(β-Sulfatoethylsulfonyl)-phenylamino | dito |
| 75 | dito | dito | N-Ethyl-N-[4-(β-sulfatoethylsulfonyl)-phenyl]-amino | dito |
| 76 | dito | dito | γ-(β'-Sulfaotethylsulfonyl)-propylamino | dito |

| Bsp. | Rest -D | Rest -K-N($R^x$)- | Rest -Q | Farbton |
|---|---|---|---|---|
| 77 | dito | 4-Hydroxy-2,8-disulfo-naphthylen(3,5)-5-amino | 4-(β-Sulfatoethylsulfonyl)-phenylamino | rot |
| 78 | 4-(β-Sulfatoethylsulfonyl)-phenyl | dito | dito | rot |
| 79 | dito | dito | 3-(β-Sulfatoethylsulfonyl)-phenylamino | rot |
| 80 | dito | 4-Hydroxy-2,7-disulfo-naphthylen(3,5)-5-amino | dito | rot |
| 81 | dito | dito | 4-(β-Sulfatoethylsulfonyl)-phenylamino | rot |
| 82 | dito | dito | γ-(β'-Sulfatoethylsulfonyl)-propylamino | rot |
| 83 | dito | dito | β-[4-(β'-Sulfatoethylsulfonyl)-phen]-ethylamino | rot |
| 84 | dito | dito | 2-Methoxy-5-(β-sulfatoethylsulfonyl)-phenylamino | rot |
| 85 | 3-(β-Sulfatoethylsulfonyl)-phenyl | dito | 4-(β-Sulfatoethylsulfonyl)-phenylamino | rot |
| 86 | 2-Sulfo-4-(β-sulfatoethylsulfonyl)-phenyl | dito | dito | gelbstichig rot |

| Bsp. | Rest -D | Rest -K-N($R^x$)- | Rest -Q | Farbton |
|---|---|---|---|---|
| 87 | 6-(β-Sulfato-ethylsulfonyl)-1-sulfo-naphth-2-yl | dito | dito | blau-stichig rot |
| 88 | dito | dito | 3-(β-Sulfatoethyl-sulfonyl)-phenyl-amino | dito |
| 89 | dito | dito | γ-(β'-Sulfatoethyl-sulfonyl)-propyl-amino | dito |
| 90 | dito | 4-Hydroxy-2,8-disulfo-naphth-ylen(3,5)-5-amino | 4-(β-Sulfatoethyl-sulfonyl)-phenyl-amino | rot |
| 91 | dito | dito | 3-(β-Sulfatoethyl-sulfonyl)-phenyl-amino | rot |
| 92 | 3-Sulfo-4-phenylamino-phenyl | 4-Hydroxy-2,7-disulfo-naphth-ylen(3,5)-5-amino | dito | blau |
| 93 | dito | dito | 4-(β-Sulfatoethyl-sulfonyl)-phenyl-amino | blau |
| 94 | 3-Sulfo-4-(2'-methoxy-phenyl-amino)-phenyl | dito | dito | blau |
| 95 | dito | dito | 3-(β-Sulfatoethyl-sulfonyl)-phenyl-amino | blau |
| 96 | 4-(3',6',8'-trisulfo-naphth-2'-yl-azo)-2-methoxy-5-methyl-phenyl | dito | dito | blau |

| Bsp. | Rest -D | Rest $-K-N(R^X)-$ | Rest -Q | Farbton |
|---|---|---|---|---|
| 97 | dito | dito | 4-(β-Sulfatoethyl-sulfonyl)-phenyl-amino | blau |
| 98 | dito | dito | γ-(β'-Sulfatoethyl-sulfonyl)-propyl-amino | blau |
| 99 | 4-(4'-Methoxy-2'-sulfo-phenyl-azo)-6-sulfo-naphth-1-yl | 6-Sulfo-naphth-ylen(4,1)-1-amino | 4-(β-Sulfatoethyl-sulfonyl)-phenyl-amino | braun |
| 100 | dito | dito | 3-(β-Sulfatoethyl-sulfonyl)-phenyl-amino | braun |
| 101 | dito | dito | γ-(β'-Sulfatoethyl-sulfonyl)-propyl-amino | braun |
| 102 | 4-(4'-Methoxy-2'-sulfo-phenyl-azo)-7-sulfo-naphth-1-yl | 7-Sulfo-naphth-ylen(4,1)-1-amino | 3-(β-Sulfatoethyl-sulfonyl)-phenyl-amino | braun |
| 103 | 4-(4',6',8'-Trisulfo-naphth-2-ylazo)-6-sulfo-naphth-1-yl | 3-Methyl-phen-ylen(4,1)-1-amino | dito | braun |
| 104 | dito | dito | 4-(β-Sulfatoethyl-sulfonyl)-phenyl-amino | braun |
| 105 | dito | dito | γ-(β'-Sulfato-ethylsulfonyl)-propylamino | braun |
| 106 | 4-(2',5',7'-Trisulfo-naphth-1'-ylazo)-2,5-dimethyl-phenyl | 6-Sulfo-naphth-ylen(4,1)-1-amino | dito | braun |

| Bsp. | Rest -D | Rest -K-N($R^x$)- | Rest -Q | Farbton |
|---|---|---|---|---|
| 107 | dito | dito | 4-(β-Sulfatoethyl-sulfonyl)-phenyl-amino | braun |
| 108 | dito | dito | 3-(β-Sulfatoethyl-sulfonyl)-phenyl-amino | braun |
| 109 | 1:2-Chrom-komplex von: 2-Hydroxy-6-(β-sulfato-ethylsulfonyl)-phenyl | 4-Hydroxy-2,7-disulfo-naphth-ylen(3,5)-5-amino | dito | marine-blau |
| 110 | 1:2-Chrom-komplex von: dito | dito | 4-(β-Sulfatoethyl-sulfonyl)-phenyl-amino | marine-blau |
| 111 | 1:2-Kobalt-komplex von: dito | dito | dito | violett |
| 112 | 1:2-Kobalt-komplex von: dito | dito | 3-(β-Sulfatoethyl-sulfonyl)-phenyl-amino | violett |
| 113 | 1:1-Nickel-komplex von: dito | dito | dito | bordo |
| 114 | 1:1-Nickel-komplex von: dito | dito | 4-(β-Sulfatoethyl-sulfonyl)-phenyl-amino | bordo |

| Bsp. | Rest -D | Rest -K-N($R^x$)- | Rest -Q | Farbton |
|---|---|---|---|---|
| 115 | 1:1-Kupfer-komplex von: 4,8-Disulfo-1-hydroxy-naphth-2-yl | dito | dito | blau |
| 116 | 1:1-Kupfer-komplex von: dito | dito | 3-(β-Sulfatoethyl-sulfonyl)-phenyl-amino | blau |
| 117 | 1:2-Chrom-komplex von: 2-Carboxy-phenyl | 4-Hydroxy-2-sulfo-naphth-ylen(3,7)-7-amino | dito | rot-braun |
| 118 | 1:2-Chrom-komplex von: dito | dito | 4-(β-Sulfatoethyl-sulfonyl)-phenyl-amino | rot-braun |
| 119 | 1:2-Kobalt komplex von: 2-Hydroxy-6-nitro-phenyl | 4-Hydroxy-2,7-disulfo-naphth-ylen(3,5)-5-amino | dito | grau |
| 120 | 1:2-Kobalt-komplex von: dito | dito | 3-(β-Sulfatoethyl-sulfonyl)-phenyl-amino | grau |
| 121 | 1:2-Chrom-komplex von: dito | dito | dito | schwarz |

| Bsp. | Rest -D | Rest -K-N($R^x$)- | Rest -Q | Farbton |
|---|---|---|---|---|
| 121a | 1:2-Chromkomplex von: 2-Hydroxy-6-nitro-phenyl | 4-Hydroxy-2,7-disulfo-naphthylen(3,5)-5-amino | 4-(ß-Sulfatoethylsulfonyl)-phenylamino | schwarz |
| 122a | 4,8-Disulfo-naphth-2-yl | 3-Ureido-phenylen(4,1)-1-amino | dito | rotstichig gelb |
| 122b | dito | dito | 3-(ß-Sulfatoethylsulfonyl)-phenylamino | rotstichig gelb |
| 122c | 2-Sulfo-4-methoxy-phenyl | 4-Hydroxy-2-sulfo-naphthylen(3,7)-7-amino | 4-(ß-Sulfatoethylsulfonyl)-phenylamino | scharlachrot |
| 122d | 4-Methoxy-2,5-disulfo-phenyl | dito | 3-(ß-Sulfatoethylsulfonyl)-phenylamino | orange (496) |
| 122e | 4-(4',8'-disulfo-naphth-2'-yl-azo)-6-sulfo-naphth-1-yl | 6-Sulfo-naphthylen(4,1)-1-amino | dito | braun (454) |
| 122f | 3-(ß-Sulfatoethylsulfonyl)-phenylamino | 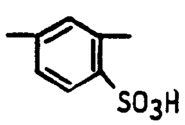 | 5-Amino-4-hydroxy-6-{2'-sulfo-5'-[2"-cyanamido-4"-(3"-ß-sulfatoethylsulfonylphenyl)-amino-1",3",5"-triazin-6"-yl]-amino-phenylazo}-2,7-disulfo-naphth-3-yl | marineblau |

| Bsp. | Rest -D | Rest -K-N($R^x$)- | Rest -Q | Farbton |
|---|---|---|---|---|
| 123 | 3,6,8-Tri-sulfonaphth-2-yl | 3-Ureido-phen-ylen(4,1)-1-amino | 4-(ß-Sulfatoethyl-sulfonyl)-phenyl-amino | rot-stichig gelb |

**Beispiel 124**

48,3 Teile 1-(4'-Sulfophenyl)-3-carboxy-4-(5"-amino-2"-sulfo-phenylazo)-5-pyrazolon werden in wäßriger Lösung bei 0 bis 3°C und einem pH-Wert von 3,5 bis 4 mit 19 Teilen Cyanurchlorid umgesetzt. Anschließend gibt man 4,4 Teile Cyanamid hinzu, stellt mittels wäßriger Natronlauge den pH-Wert auf 10 und erwärmt den Ansatz auf 50 bis 60°C. Man rührt noch 90 bis 120 Minuten bei 50 bis 60°C unter Einhaltung des pH-Wertes zwischen 9,5 und 10 nach und gibt nach beendeter Kondensationsreaktion wäßrige Salzsäure bis zu einem pH-Wert von 5 und anschließend 29,5 Teile 3-(β-Sulfatoethylsulfonyl)anilin hinzu, erwärmt den Ansatz auf 85°C und rührt ihn unter Einhaltung eines pH-Werts von 3,5 bis 4 bis zur vollständigen Kondensationsreaktion weiter.

Der gebildete erfindungsgemäße Azofarbstoff wird in Form seines Alkalimetallsalzes (Natriumsalzes) durch Eindampfen der Syntheselösung unter reduziertem Druck oder durch Sprühtrocknung isoliert. Er besitzt, in Form der freien Säure geschrieben, die Formel

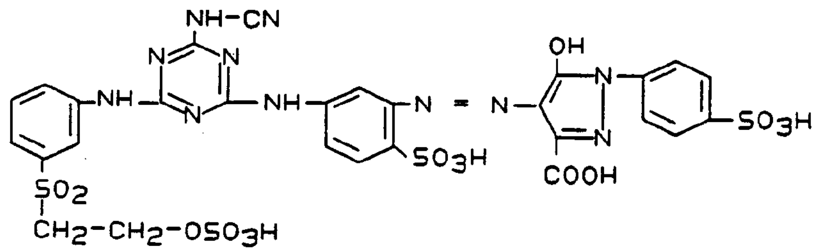

und weist sehr gute faserreaktive Farbstoffeigenschaften auf. Er färbt gemäß den bekannten Anwendungstechniken die in der Beschreibung genannten Materialien, wie insbesondere Cellulosefasermaterialien, in farbstarken, gelben Tönen mit guten Echtheitseigenschaften und zeichnet sich durch eine sehr hohe Fixierausbeute sowohl beim Färben im Ausziehverfahren zwischen 40 und 80°C als auch in den Klotz-Klatverweil-Färbeverfahren aus.

**Beispiel 125**

Eine Suspension von 19 Teilen Cyanurchlorid in 200 Teilen Eiswasser wird mit 18,8 Teilen 1,3-Diaminobenzol-4-sulfonsäure versetzt. Man rührt den Ansatz zunächst etwa zwei Stunden bei 0 bis 5°C und bei einem pH-Wert von 2,5 und danach etwa 30 Minuten bei 0 bis 5°C und einem pH-Wert von 4. Sodann gibt man 4,4 Teile Cyanamid hinzu, stellt mittels Natronlauge einen pH-Wert von 10 ein, erhöht die Temperatur langsam auf 50 bis 60°C und rührt noch etwa 1,5 Stunden unter Einhaltung eines pH-Wertes von 10 und einer Temperatur von 50 bis 60°C weiter. Sodann stellt man mittels wäßriger Salzsäure einen pH-Wert von 7 ein, gibt 20 Volumenteile einer wäßrigen 5n-Natriumnitrit-Lösung hinzu und diazotiert durch langsame Zugabe dieses Ansatzes in ein Gemisch aus 50 Volumenteilen konzentrierter Salzsäure und 600 Teilen Eis. Man rührt noch etwa 2 Stunden nach und zerstört in üblicher Weise einen eventuellen Überschuß an salpetriger Säure mittels Amidosulfonsäure.

Die erhaltene Diazoniumsalzsuspension wird sodann in eine wäßrige Lösung des Natriumsalzes von 60 Teilen 4-Hydroxy-5-amino-6-[4'-(β-sulfatoethylsulfonyl)-phenylazo]-naphthalin-2,7-disulfonsäure gegeben. Man führt die Kupplungsreaktion bei 15 bis 25°C und einem pH-Wert von 4,5 bis 5,5 durch, gibt anschließend 29,5 Teile 4-(β-Sulfatoethylsulfonyl)-anilin hinzu und führt die Kondensationsreaktion bei 85°C und einem pH-Wert von 3,5 bis 4 während etwa 2 Stunden durch. Den Ansatz klärt man anschließend mit wenig Kieselgur bei etwa 40°C, filtriert ihn und dampft das Filtrat ein.

Man erhält ein schwarzes, elektrolythaltiges Pulver des Alkalimetallsalzes (Natriumsalzes) der Disazoverbindung der Formel

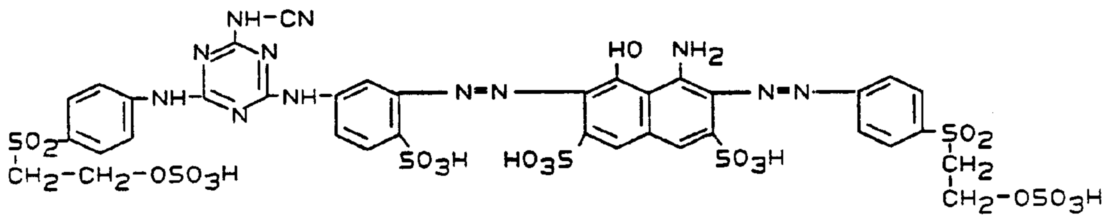

($\lambda_{max}$ = 595 nm)

Sie zeigt sehr gute faserreaktive Farbstoffeigenschaften und färbt beispielsweise Baumwolle in kräftigen, marineblauen Tönen.

**Beispiel 126**

Zur Herstellung eines erfindungsgemäßen Azofarbstoffs verfährt man gemäß der Verfahrensweise des Beispiels 125, setzt jedoch anstelle der 29,5 Teile 4-(β-Sulfatoethylsulfonyl)-anilin bei der Umsetzung mit der Chlortriazinverbindung die gleiche Menge an 3-(β-Sulfatoethylsulfonyl)-anilin ein.
Man erhält das Alkalimetallsalz der Disazoverbindung der Formel

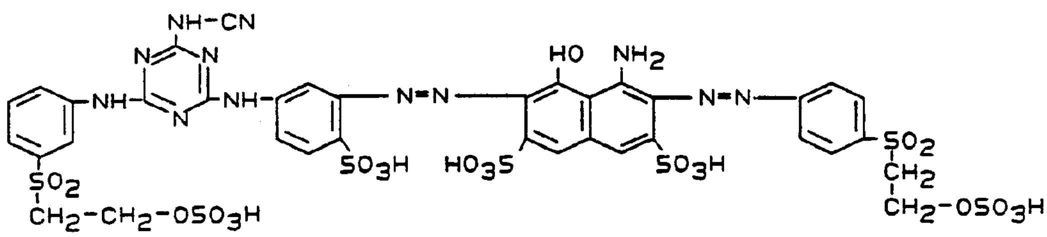

($\lambda_{max}$ = 596 nm)

der beispielsweise Baumwolle in kräftigen, marineblauen Tönen färbt.

**Beispiele 127 bis 165**

In den nachfolgenden Tabellenbeispielen sind weitere erfindungsgemäße Azofarbstoffe mit Hilfe der Komponenten entsprechend der allgemeinen Formel (B)

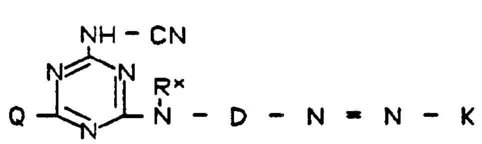

(B)

beschrieben. Sie lassen sich in erfindungsgemäßer Weise, beispielsweise analog einem der obigen Ausführungsbeispiele, unter Einsatz der aus dem jeweiligen Tabellenbeispiel in Verbindung mit der allgemeinen Formel (B) ersichtlichen Komponenten (wie einem Diaminophenylen oder -naphthylen der Formel $HR^xN-D-NH_2$, der Kupplungskomponente H-K, einem Halogentriazin, Cyanamid und einem Amin der Formel H-Q) herstellen. Sie besitzen sehr gute faserreaktive Farbstoffeigenschaften und färben die in der Beschreibung genannten Materialien, insbesondere Cellulosefasermaterialien, wie Baumwolle, in den in dem jeweiligen Tabellenbeispiel (hierfür Baumwolle) angegebenen Tönen in hoher Farbstärke und mit guten Echtheiten.

| Bsp. | Rest -Q | Rest -D- | Rest -K | Farbton |
|---|---|---|---|---|
| 127 | 4-(β-Sulfatoethyl-sulfonyl)-phenyl-amino | 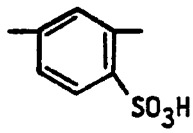 | 1-(β-Sulfato-ethyl)-2-hydroxy-4-methyl-pyrid-6-on-3-yl | grün-stichig gelb |
| 128 | γ-(β'-Sulfatoethyl-sulfonyl)-propyl-amino | dito | dito | dito |
| 129 | 3-(β-Sulfatoethyl-sulfonyl)-phenyl-amino | 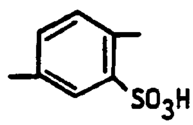 | dito | dito |
| 130 | dito | 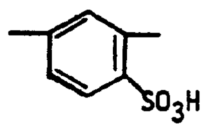 | 1-Ethyl-2-hydroxy-4-methyl-5-carbamoyl-pyrid-6-on-3-yl | dito |
| 131 | 4-(β-Sulfatoethyl-sulfonyl)-phenyl-amino | dito | dito | dito |
| 132 | β-[4-(β'-Sulfato-ethylsulfonyl)-phen]-ethylamino | dito | dito | dito |
| 133 | 4-(β-Sulfatoethyl-sulfonyl)-phenyl-amino | 4,6-Disulfo-1,3-phenylen | dito | dito |
| 134 | 3-(β-Sulfatoethyl-sulfonyl)-phenyl-amino | dito | dito | dito |
| 135 | γ-(β'-Sulfatoethyl-sulfonyl)-propyl-amino | 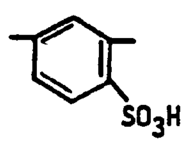 | 5-Amino-4-hydroxy-6-(4'-sulfo-phenyl-azo)-2,7-disulfo-naphth-3-yl | marine-blau |

| Bsp. | Rest -Q | Rest -D- | Rest -K | Farbton |
|---|---|---|---|---|
| 136 | dito | 4,6-Disulfo-1,3-phenylen | 1,4-Dimethyl-2-hydroxy-5-carbamoyl-pyrid-6-on-3-yl | grünstichig gelb |
| 137 | dito | 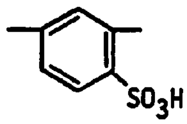 | 1,4-Dimethyl-2-hydroxy-5-sulfomethyl-pyrid-6-on-3-yl | dito |
| 138 | 4-(β-Sulfatoethylsulfonyl)-phenylamino | dito | dito | dito |
| 139 | dito | dito | 1-(4'-Sulfophenyl)-3-methyl-pyrazol-5-on-4-yl | gelb |
| 140 | 3-(β-Sulfatoethylsulfonyl)-phenylamino | dito | dito | gelb |
| 141 | 4-(β-Sulfatoethylsulfonyl)-phenylamino | dito | 1-(4'-Sulfo-2',5'-dichlor-phenyl)-3-methyl-pyrazol-5-on-4-yl | gelb |
| 142 | dito | 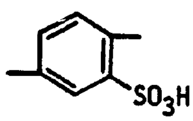 | 1-(4'-Sulfophenyl)-3-methyl-pyrazol-5-on-4-yl | gelb |
| 143 | 3-(β-Sulfatoethylsulfonyl)-phenylamino | dito | dito | gelb |
| 144 | dito | 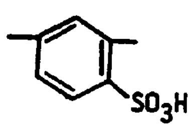 | 1-(4'-Sulfophenyl)-3-carboxy-pyrazol-5-on-4-yl | gelb |
| 145 | dito | dito | 5-Amino-4-hydroxy-6-(4'-sulfo-phenylazo)-2,7-disulfo-naphth-3-yl | marineblau |

| Bsp. | Rest -Q | Rest -D- | Rest -K | Farbton |
|---|---|---|---|---|
| 146 | 4-(β-Sulfatoethyl-sulfonyl)-phenyl-amino | dito | dito | gelb |
| 147 | dito | 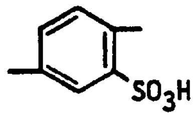 | dito | gelb |
| 148 | dito | 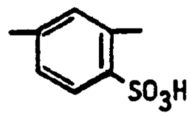 | 1-[4'-(β-Sulfato-ethylsulfonyl)-phenyl]-3-methyl-pyrazol-5-on-4-yl | gelb |
| 149 | 3-(β-Sulfatoethyl-sulfonyl)-phenyl-amino | dito | dito | gelb |
| 150 | 4-(β-Sulfatoethyl-sulfonyl)-phenyl-amino | 4,6-Disulfo-1,3-phenylen | dito | gelb |
| 151 | dito | 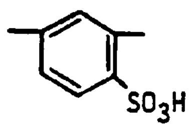 | 4-Hydroxy-5-acetylamino-2,7-disulfo-naphth-3-yl | gelb-stichig rot |
| 152 | 3-(β-Sulfatoethyl-sulfonyl)-phenyl-amino | dito | dito | dito |
| 153 | dito | dito | 4-Hydroxy-5-benzoylamino-2,7-disulfo-naphth-3-yl | dito |
| 154 | 4-(β-Sulfatoethyl-sulfonyl)-phenyl-amino | dito | dito | dito |
| 155 | dito | dito | 4-Hydroxy-5-benzoylamino-2,8-disulfo-naphth-3-yl | dito |

| Bsp. | Rest -Q | Rest -D- | Rest -K | Farbton |
|---|---|---|---|---|
| 156 | dito | dito | 5-[4'-Chlor-6'-(β-sulfoethylamino)-1',3',5'-triazin-2'-yl]-amino-4-hydroxy-2,7-disulfo-naphth-3-yl | dito |
| 157 | 3-(β-Sulfatoethyl-sulfonyl)-phenyl-amino | dito | dito | dito |
| 158 | 4-(β-Sulfatoethyl-sulfonyl)-phenyl-amino | dito | 5-[4'-Chlor-6'-amino-1',3',5'-triazin-2'-yl]-amino-4-hydroxy-2,7-disulfo-naphth-3-yl | dito |
| 159 | γ-(β'-Sulfatoethyl-sulfonyl)-propyl-amino | dito | 5-Amino-4-hydroxy-6-[4'-(β-sulfato-ethylsulfonyl)-phenylazo]-2,7-disulfo-naphth-3-yl | marine-blau |
| 160 | β-[4-(β'-Sulfato-ethylsulfonyl)-phen]-ethylamino | dito | dito | marine-blau |
| 161 | 2-Methoxy-6-(β-sulfatoethylsulfonyl)-phenylamino | dito | dito | marine-blau |
| 162 | 4-(β-Sulfatoethyl-sulfonyl)-phenyl-amino | dito | 5-Amino-4-hydroxy-6-(4'-sulfo-phenyl-azo)-2,7-disulfo-naphth-3-yl | marine-blau |
| 163 | 3-(β-Sulfatoethyl-sulfonyl)-phenyl-amino | dito | 1-(β-Sulfoethyl-2-hydroxy-4-methyl-pyrid-6-on-3-yl | grün-stichig gelb |

**Beispiel 164**

49 Teile 1-Amino-2-sulfo-4-(3'-amino-4'-sulfo-phenyl)-amino-9,10-anthrachinon werden in wäßriger Lösung bei 0 bis 5°C und einem pH-Wert von 3,5 bis 4 mit 19 Teilen Cyanurchlorid umgesetzt. Anschließend gibt

man 4,4 Teile Cyanamid hinzu, stellt mittels wäßriger Natronlauge einen pH-Wert von 10 ein und erhöht die Temperatur des Ansatzes langsam auf 50 bis 60°C. Man rührt noch einige Zeit in diesem Temperaturbereich weiter und stellt nach beendeter Kondensationsreaktion mit wäßriger Salzsäure einen pH-Wert von 5 ein, gibt 29,5 Teile 3-(β-Sulfatoethylsulfonyl)-anilin hinzu und führt die dritte Kondensationsreaktion bei 85°C und einem pH-Wert von 3,5 bis 4 durch.

Nach üblicher Klärung des Syntheselösung erhält man den erfindungsgemäßen Farbstoff der Formel (in Form der freien Säure geschrieben)

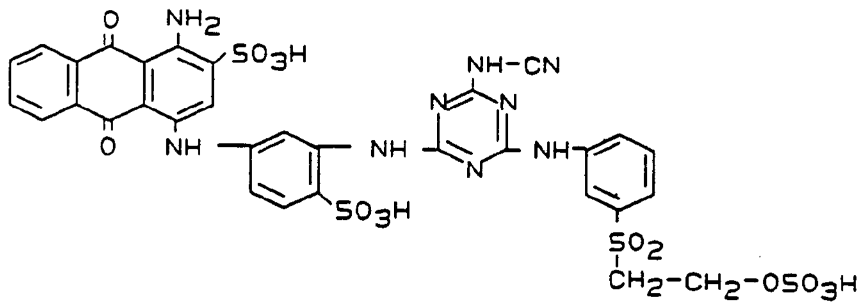

($\lambda_{max}$ = 581 nm)

als Alkalimetallsalz (Natriumsalz) durch Eindampfen des Filtrats. Er färbt die in der Beschreibung genannten Materialien, wie insbesondere Cellulosefasermaterialien, beispielsweise Baumwolle, nach den für faserreaktive Farbstoffe üblichen Applikations- und Fixierverfahren in farbstarken, brillanten blauen Tönen.

**Beispiel 165**

Zur Herstellung eines erfindungsgemäßen Anthrachinonfarbstoffes verfährt man gemäß der Verfahrensweise des Beispiels 164, setzt jedoch anstelle von 3-(β-Sulfatoethylsulfonyl)-anilin die gleiche Menge an 4-(β-Sulfatoethylsulfonyl)-anilin ein. Man erhält einen blauen Farbstoff mit gleich guten färberischen Eigenschaften, der beispielsweise auf Baumwolle farbstarke, brillante blaue Färbungen und Drucke liefert.

**Beispiel 166**

Zur Herstellung eines erfindungsgemäßen Anthrachinonfarbstoffes verfährt man gemäß der Verfahrensweise des Beispiels 164, setzt jedoch als Ausgangs-Anthrachinonverbindung 49 Teile 1-Amino-2-sulfo-4-(3'-amino-2',4',6-trimethyl-5'-sulfo-phenyl)-amino-9,10-anthrachinon ein. Der Farbstoff besitzt, in Form der freien Säure geschrieben, die Formel

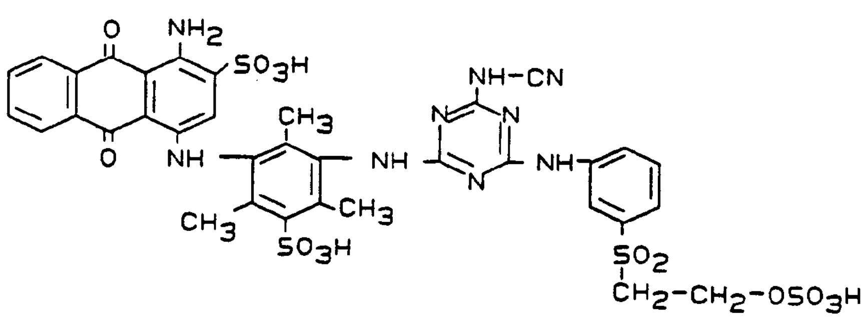

($\lambda_{max}$ = 584 nm).

Er zeigt sehr gute faserreaktive Farbstoffeigenschaften und liefert beispielsweise auf Baumwolle nach den in der Technik üblichen Applikations- und Fixierverfahren Drucke und Färbungen in farbstarken, brillanten blauen Tönen.

**Beispiel 167**

Etwa 3 000 Teile einer wäßrigen Lösung mit einem pH-Wert von 7 und einer Temperatur von 0 bis 5°C von 31,6 Teilen der Triphendioxazinverbindung der Formel

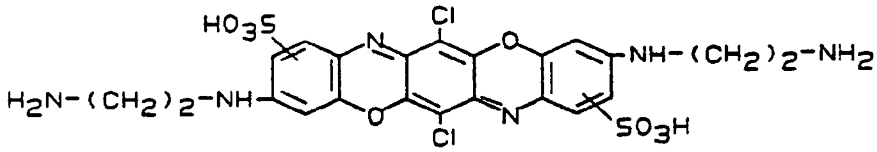

wird mit einer feinen Suspension von 19 Teilen Cyanurchlorid in 100 Teile Eiswasser versetzt. Man rührt den Ansatz noch etwa 1,5 Stunden bei 0 bis 5°C und einem pH-Wert von 6,5 bis 7 weiter und gibt nach beendeter Kondensationsreaktion eine Lösung von 4,4 Teilen Cyanamid in 30 Teilen Wasser hinzu, stellt mittels Natronlauge einen pH-Wert von 10 ein und erwärmt den Ansatz langsam auf 50 bis 60°C, rührt bei dieser Temperatur und diesem pH-Wert noch etwa zwei Stunden weiter, gibt sodann 29,5 Teile 3-(β-Sulfatoethylsulfonyl)-anilin hinzu und führt die dritte Kondensationsreaktion bei einem pH-Wert von 3,5 bis 4 und einer Temperatur von 80 bis 90°C durch.

Nach der üblichen Klärung der Syntheselösung erhält man aus dem Filtrat den erfindungsgemäßen Anthrachinonfarbstoff - beispielsweise durch Sprühtrocknung - als Alkalimetallsalz (Natriumsalz). Er besitzt, in Form der freien Säure geschrieben, die Formel

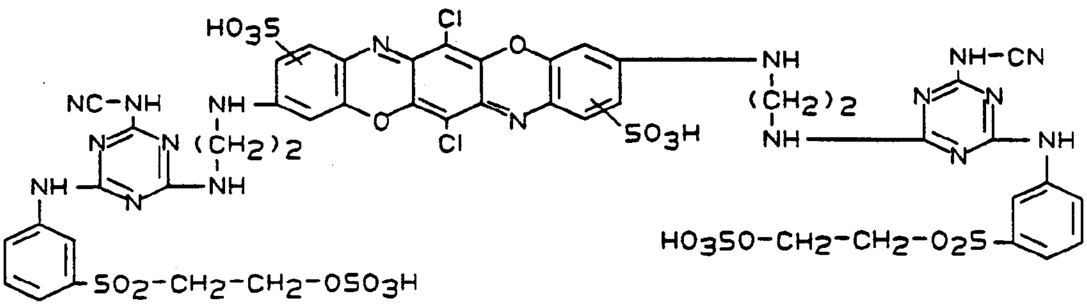

und liefert nach den in der Technik üblichen Applikations- und Fixierverfahren für faserreaktive Farbstoffe farbstarke, rotstichig blaue Färbungen und Drucke mit guten Echtheitseigenschaften.

**Beispiele 168 bis 176**

In den nachfolgenden Tabellenbeispielen sind weitere erfindungsgemäße Triphendioxazinfarbstoffe mittels der Komponenten der allgemeinen Formel (C) beschrieben.

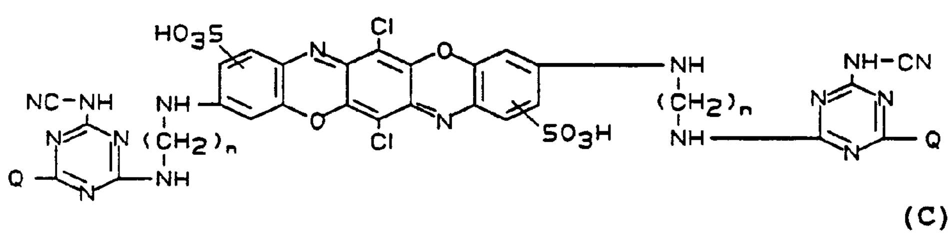

(C)

Sie lassen sich in erfindungsgemäßer Weise, wie beispielsweise gemäß dem obigen Beispiel 167, aus ihren Ausgangskomponenten, die aus der allgemeinen Formel (C) in Verbindung mit den Angaben der entsprechenden Tabellenbeispiele ersichtlich sind (wie dem entsprechenden Dichlor-triphendioxazin-Ausgangsdiamin, Cyanurchlorid, Cyanamid und dem Amin entsprechend der Formel H-Q) herstellen; sie besitzen sehr gute faserreaktive Farbstoffeigenschaften und liefern auf den in der Beschreibung genannten Materialien, wie insbesondere Cellulosefasermaterialien, kräftige, klare blaue Färbungen mit guten Echtheitseigenschaften.

| Bsp. | Index n | Rest Q | Farbton |
|---|---|---|---|
| 168 | 2 | β-[4-(β'-Sulfatoethylsulfonyl)-phen]-ethylamino | blau |
| 169 | 2 | γ-(β'-Sulfatoethylsulfonyl)-propylamino | blau |
| 170 | 2 | 2-Methoxy-6-(β-sulfatoethylsulfonyl)-phenylamino | blau |
| 171 | 3 | 3-(β-Sulfatoethylsulfonyl)-phenylamino | blau |
| 172 | 3 | 4-(β-Sulfatoethylsulfonyl)-phenylamino | blau |
| 173 | 3 | N-Ethyl-N-[4-(β-sulfatoethylsulfonyl)-phenyl]-amino | blau |
| 174 | 3 | γ-(Vinylsulfonyl)-propylamin | blau |
| 175 | 3 | β-[4-(β-'Sulfatoethylsulfonyl)-phen]-ethylamino | blau |
| 176 | 2 | 4-(β-Sulfatoethylsulfonyl)-phenylamino | blau |

**Beispiel 177**

58,5 Teile der Kupferphthalocyaninverbindung der Formel

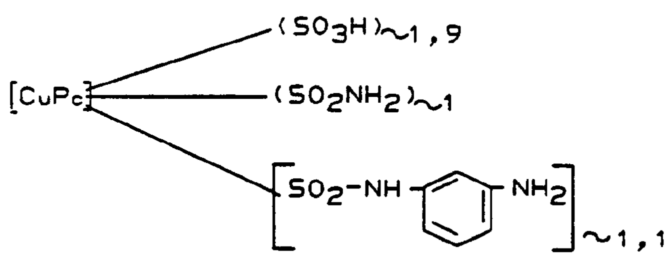

werden in einer Mischung aus 600 Teilen Eis und 600 Teilen Wasser homogen verrührt, und diese wird mit Natronlauge auf einen pH-Wert von 7 eingestellt. Man gibt 19 Teile Cyanurchlorid, in wenig Aceton gelöst, hinzu und führt unter weiterem Rühren die Kondensationsreaktion bei 0 bis 5°C und einem pH-Wert von 3,5 bis 4 durch. Sodann gibt man 4,4 Teile Cyanamid hinzu, erhöht die Temperatur langsam auf 50 bis 60°C und stellt mittels Natronlauge den pH-Wert 10 ein, rührt bis zur Beendigung dieser zweiten Kondensationsreaktion weiter und neutralisiert anschließend mit wäßriger Salzsäure bis auf einen pH-Wert von 5. Man gibt 29,5 Teile 3-(β-Sulfatoethylsulfonyl)-anilin hinzu und rührt den Ansatz etwa 2,5 Stunden bei 80 bis 90°C und einem pH-Wert von 3,5 bis 4. Die Syntheselösung wird bei einem pH-Wert von 5,5 noch in der Wärme mit Kieselgur geklärt, und das Filtrat wird unter reduziertem Druck eingedampft.

Man erhält ein blaues, elektrolythaltiges Pulver des Alkalimetallsalzes (Natriumsalzes) der Verbindung der Formel

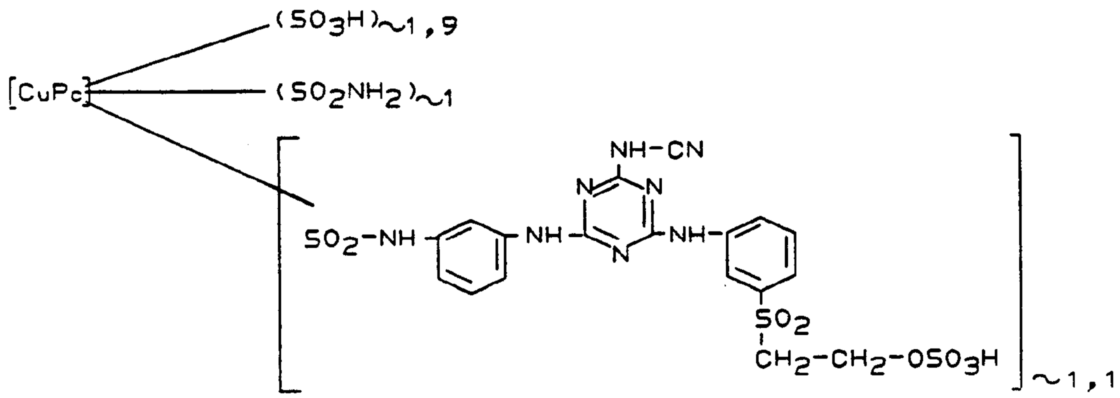

$(\lambda_{max} = 671\ nm)$.

Der erfindungsgemäße Kupferphthalocyaninfarbstoff besitzt sehr gute faserreaktive Farbstoffeigenschaften und färbt die in der Beschreibung genannten Materialien, wie insbesondere Cellulosefasermaterialien, nach den üblichen Applikations- und Fixierverfahren in farbstarken, echten, türkisblauen Tönen.

**Beispiel 178**

Zur Herstellung einer erfindungsgemäßen Kupferphthalocyanin-Verbindung verfährt man gemäß der Verfahrensweise des Beispiels 177, setzt jedoch anstelle von 3-(β-Sulfatoethylsulfonyl)-anilin die gleiche Menge an 4-(β-Sulfatoethylsulfonyl)-anilin ein. Der erfindungsgemäße Farbstoff zeigt die gleichen guten färberischen Eigenschaften wie der des Beispiels 177 und liefert ebenfalls echte, türkisblaue Färbungen und Drucke.

**Beispiel 179**

Eine homogen verrührte Mischung von 58 Teilen der Kupferphthalocyaninverbindung entsprechend der Formel

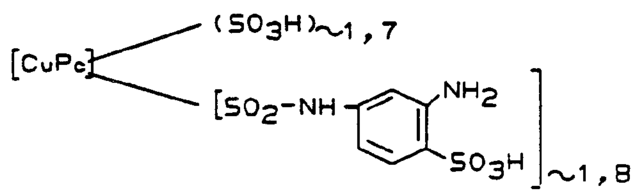

in 300 Teilen Wasser und 125 Teilen Eis wird mit Natronlauge auf einen pH-Wert von 7 eingestellt. Man gibt eine feine Suspension von 16,6 Teilen Cyanurchlorid in 170 Teilen Eiswasser hinzu und hält die Temperatur bei 0 bis 5°C und mittels Natriumbicarbonat einen pH-Wert von 5 bis 5,5. Nach Beendigung der Kondensationsreaktion gibt man 3,8 Teile Cyanamid hinzu, stellt mittels wäßriger Natronlauge einem pH-Wert von 10 ein, erwärmt den Ansatz langsam auf 50 bis 60°C, rührt ihn noch etwa zwei Stunden bei 60°C und einen pH-Wert von 9,5 bis 10 und setzt nach beendigter Reaktion die erhaltene Monochlortriazin-Verbindung mit 25,8 Teilen 4-(β-Sulfatoethylsulfonyl)-anilin bei einem pH-Wert von 3,5 bis 4 und bei 80 bis 90°C um. Nach beendeter Reaktion wird die Syntheselösung in üblicher Weise mit Kieselgur geklärt.

Durch Eindampfen des Filtrats erhält man ein blaues elektrolythaltiges Pulver des Alkalimetallsalzes (Natriumsalzes) der Kupferphthalocyaninverbindung der Formel

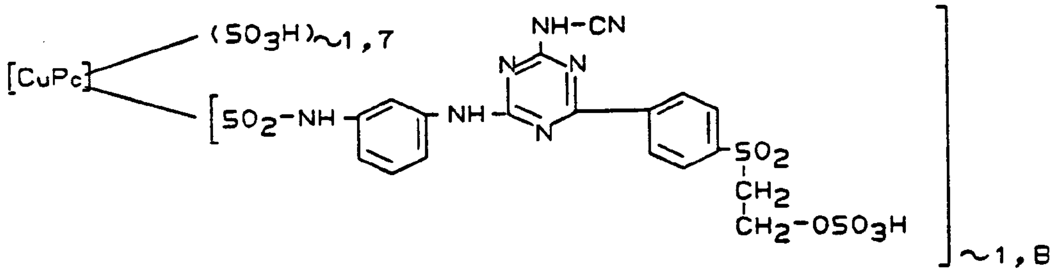

($\lambda_{max}$ = 670 nm).

Der erfindungsgemäße Kupferphthalocyaninfarbstoff färbt die in der Beschreibung genannten Materialien, wie insbesondere Cellulosefasermatieralien, nach den üblichen Anwendungsverfahren in farbstarken, echten, türkisblauen Tönen.

**Beispiel 180**

Zur Herstellung einer erfindungsgemäßen Kupferphthalocyanin-Verbindung verfährt man gemäß der Verfahrensweise des Beispiels 177, setzt jedoch anstelle von 3-(β-Sulfatoethylsulfonyl)-anilin die gleiche Menge an 4-(β-Sulfatoethylsulfonyl)-anilin ein. Der erfindungsgemäße Farbstoff zeigt die gleichen guten färberischen Eigenschaften wie der des Beispiels 177 und liefert ebenfalls echte, türkisblaue Färbungen und Drucke.

**Beispiel 181**

Eine homogene Mischung von 106,2 Teilen der Nickelphthalocyaninverbindung der Formel

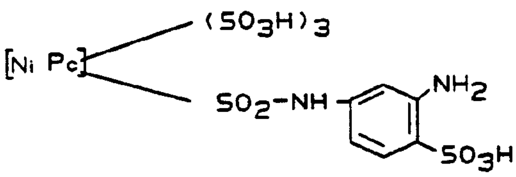

in 300 Teilen Eis und 600 Teilen Wasser wird mit Natronlauge auf einen pH-Wert von 7 eingestellt. Man gibt eine feine Suspension von 19 Teilen Cyanurchlorid in 200 Teilen Eiswasser hinzu und führt die Umsetzung bei 0 bis 5°C und einem pH-Wert von 4,5 durch. Anschließend gibt man 4,4 Teile Cyanamid hinzu, stellt mittels Natronlauge einen pH-Wert von 10 ein, erwärmt den Ansatz langsam auf 60°C, rührt ihn noch etwa zwei Stunden bei 60°C und einem pH-Wert von 9,5 bis 10 und gibt nach Beendigung diese zweiten Kondensationsreaktion 29,5 Teile 3-(β-Sulfatoethylsulfonyl)-anilin hinzu. Die dritte Kondensationsreaktion wird bei 80 bis 90°C und einem pH-Wert von 3,5 bis 4 durchgeführt. Die Syntheselösung wird anschließend in üblicher Weise bei einem pH-Wert von 5,5 geklärt und der erfindungsgemäße Farbstoff der Formel (in Form der freien Säure geschrieben)

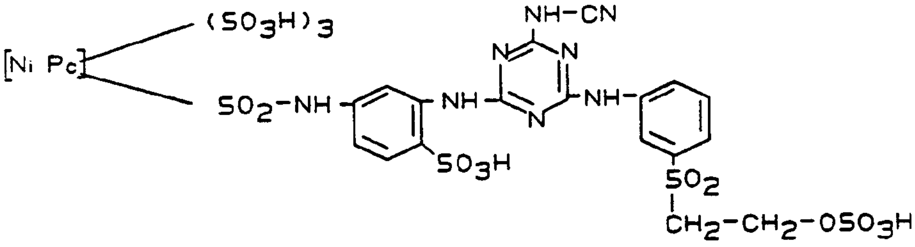

als Alkalimetallsalz (Natriumsalz) in Form eines elektrolythaltigen Pulvers isoliert. Nach den üblichen Applikations- und Fixierverfahren erhält man beispielsweise auf Cellulosefasermaterialien, wie Baumwolle, farbstarke, blaustichig grüne Färbungen und Drucke mit guten Echtheitseigenschaften.

**Beispiel 182**

Zur Herstellung einer erfindungsgemäßen Kupferphthalocyanin-Verbindung verfährt man gemäß der Verfahrensweise des Beispiels 177, setzt jedoch anstelle von 3-(β-Sulfatoethylsulfonyl)-anilin die gleiche Menge an 4-(β-Sulfatoethylsulfonyl)-anilin ein. Der erfindungsgemäße Farbstoff zeigt die gleichen guten färberischen Eigenschaften wie der des Beispiels 177 und liefert ebenfalls echte, türkisblaue Färbungen und Drucke.

## Patentansprüche

1. Wasserlöslicher Farbstoff entsprechend der allgemeinen Formel (1)

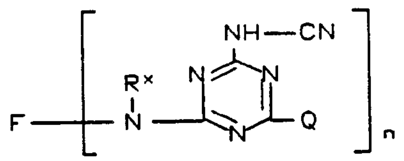

(1)

in welcher bedeuten:

F ist der Rest eines Monoazo-, Disazo- oder Polyazofarbstoffes oder eines Schwermetallkomplex-Azofarbstoffes oder eines Anthrachinon-, Phthalocyanin-, Azomethin-, Dioxazin-, Phenazin-, Stilben-, Triphenylmethan-, Xanthen-, Thioxanthen-, Nitroaryl-, Naphthochinon-, Pyrenchinon- oder Perylentetracarbimid-Farbstoffes;

$R^x$ ist Wasserstoff oder Alkyl von 1 bis 4 C-Atomen, das durch Halogen, Hydroxy, Cyano, Alkoxy von 1 bis 4 C-Atomen, Alkoxycarbonyl von 2 bis 5 C-Atomen, Carboxy, Sulfamoyl, Sulfo oder Sulfato substituiert sein kann;

n ist die Zahl 1 oder 2, bevorzugt 1;

Q ist eine Gruppe der allgemeinen Formel (2a) oder (2b)

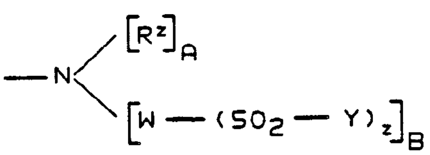

(2a)

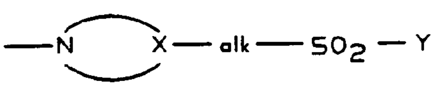

(2b)

in welchen

$R^z$ Wasserstoff oder Alkyl von 1 bis 4 C-Atomen ist, das durch Halogen, Hydroxy, Cyano, Alkoxy von 1 bis 4 C-Atomen, Carboxy, Sulfamoyl, Sulfo oder Sulfato oder durch einen gegebenenfalls durch Substituenten aus der Gruppe Halogen, Alkoxy von 1 bis 4 C-Atomen, Alkyl von 1 bis 4 C-Atomen, Sulfo und Carboxy substituiertes Phenyl substituiert sein kann, oder Cyclohexyl oder ein gegebenenfalls durch Substituenten aus der Gruppe Halogen, Alkoxy von 1 bis 4 C-Atomen, Alkyl von 1 bis 4 C-Atomen, Sulfo und Carboxy substituiertes Phenyl ist,

W ein gegebenenfalls substituierter Arylenrest oder ein Alkylen-arylen- oder Arylen-alkylen- oder Alkylen-arylen-alkylen- oder Arylen-alkylen-arylen-Rest ist, wobei die Alkylenreste solche von 1 bis 8 C-Atomen sind und substituiert sein können und die Arylenreste gegebenenfalls substituierte Phenylen- oder Naphthylenreste sind, und wobei die Alkylenreste durch 1 oder mehrere Heterogruppen und die Alkylen- und Arylenanteile in den kombinierten Arylen/Alkylen-Resten jeweils durch eine Heterogruppe unterbrochen sein können,

Y Vinyl, β-Sulfatoethyl, β-Thiosulfatoethyl, β-Phosphatoethyl, β-Alkanoyloxy-ethyl mit 2 bis 5 C-Atomen im Alkanoylrest,
β-Benzoyloxy-ethyl, β-(Sulfobenzoyloxy)-ethyl, β-(p-Toluolsulfonyloxy)-ethyl oder β-Halogenethyl ist,

z die Zahl 1 oder 2 ist,

A die Zahl Null oder 1 bedeutet und

B die Zahl 1 oder 2 bedeutet, wobei die Summe von (A + B) gleich der Zahl 2 ist und wobei im Falle von B gleich 2 die Gruppen der Formel $-W-(SO_2-Y)_k$ zueinander die gleiche Bedeutung oder voneinander eine verschiedene Bedeutung haben können,

X zusammen mit dem N-Atom den bivalenten Rest eines aus 1 oder 2 Alkylengruppen von 1 bis 5 C-Atomen und gegebenenfalls 1 oder 2 Heterogruppen bestehenden heterocyclischen Ringes bildet und

alk Alkylen von 1 bis 4 C-Atomen bedeutet.

2. Farbstoff nach Anspruch 1, dadurch gekennzeichnet, daß $R^x$ Methyl oder Ethyl oder Wasserstoff ist.

3. Farbstoff nach Anspruch 1 oder 2, dadurch gekennzeichnet, daß der faserreaktive Rest der Formel

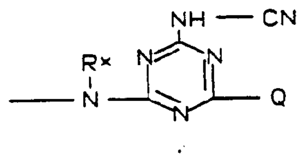

(3)

ein Rest der allgemeinen Formel (3b)

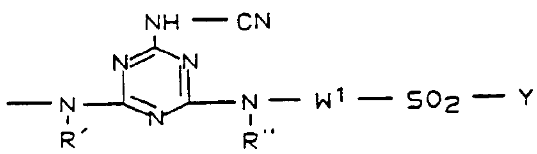

(3b)

ist, in welcher

R' die Methyl- oder Ethylgruppe oder insbesondere eine Wasserstoffatom bedeutet,

R" die Methylgruppe oder insbesondere ein Wasserstoffatom ist,

$W^1$ eine Alkylengruppe von 2 bis 4 C-Atomen, bevorzugt von 2 oder insbesondere von 3 C-Atomen, bedeutet oder ein Phenylenrest ist, der durch 1 oder 2 Substituenten aus der Gruppe Methyl, Methoxy, Ethoxy und Chlor substituiert sein kann, und

Y eine der in Anspruch 1 genannten Bedeutungen hat.

4. Farbstoff nach mindestens einem der Ansprüche 1 bis 3, dadurch gekennzeichnet, daß Y β-Sulfatoethyl ist.

5. Farbstoff nach Anspruch 1 der allgemeinen Formel (17A)

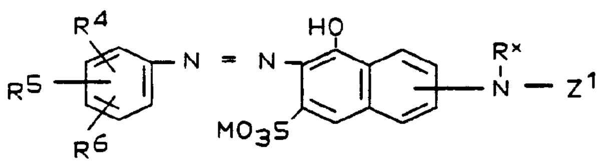

(17A)

in welcher $Z^1$ ein Rest der allgemeinen Formel (3C)

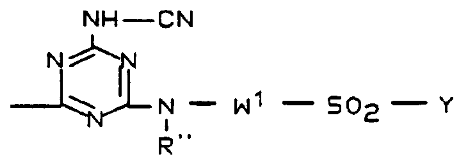 (3C)

ist, in welcher $W^1$ Alkylen von 2 bis 4 C-Atomen, bevorzugt von 3 C-Atomen, ist oder Phenylen ist, das durch 1 oder 2 Substituenten aus der Gruppe Methyl, Ethyl, Methoxy, Ethoxy und Chlor substituiert sein kann, Y eine der in Anspruch 1 genannten Bedeutungen hat und bevorzugt β-Sulfatoethyl ist, R" Wasserstoff, Methyl oder Ethyl ist, die Gruppe $-N(R^x)-Z^1$ in 6-Stellung an den 1-Naphthol-Rest gebunden ist, $R^x$ Wasserstoff, Methyl oder Ethyl bedeutet, $R^4$ Methoxy ist, $R^5$ Wasserstoff oder Sulfo ist, $R^6$ Wasserstoff oder Sulfo ist und M Wasserstoff oder ein Alkalimetall bedeutet.

6. Farbstoff nach Anspruch 1 der allgmeinen Formel (20)

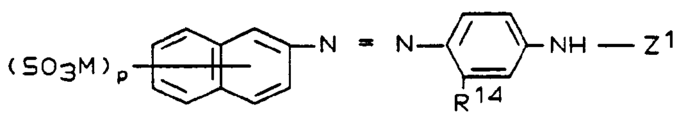 (20)

in welcher $Z^1$ ein Rest der allgemeinen Formel (3C)

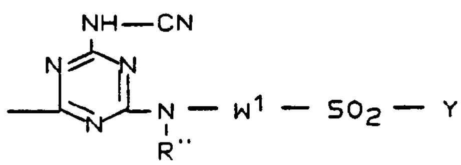 (3C)

ist, in welcher $W^1$ Alkylen von 2 bis 4 C-Atomen, bevorzugt von 3 C-Atomen, ist oder Phenylen ist, das durch 1 oder 2 Substituenten aus der Gruppe Methyl, Ethyl, Methoxy, Ethoxy und Chlor substituiert sein kann, Y eine der in Anspruch 1 genannten Bedeutungen hat und bevorzugt β-Sulfatoethyl ist, R" Wasserstoff, Methyl oder Ethyl ist, $R^{14}$ Methyl, Acetylamino oder Ureido ist, p für die Zahl 1, 2 oder 3 steht und M Wasserstoff oder ein Alkalimetall ist.

7. Farbstoff nach Anspruch 1 der allgemeinen Formel (21)

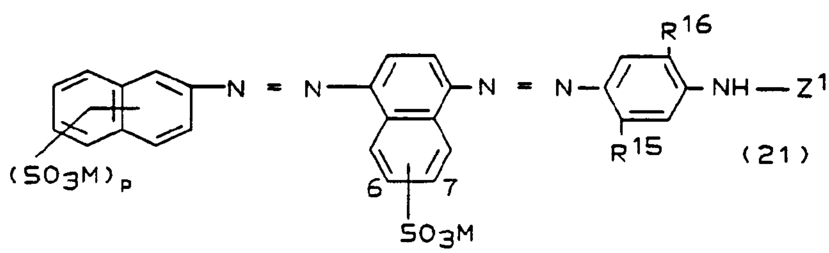 (21)

in welcher $Z^1$ ein Rest der allgemeinen Formel (3C)

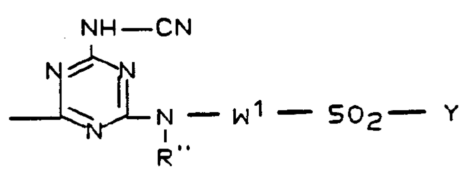 (3C)

ist, in welcher $W^1$ Alkylen von 2 bis 4 C-Atomen, bevorzugt von 3 C-Atomen, ist oder Phenylen ist, das

durch 1 oder 2 Substituenten aus der Gruppe Methyl, Ethyl, Methoxy, Ethoxy und Chlor substituiert sein kann, Y eine der in Anspruch 1 genannten Bedeutungen hat und bevorzugt β-Sulfatoethyl ist, R" Wasserstoff, Methyl oder Ethyl ist, p für die Zahl 2 steht und die Gruppe $-SO_3M$ in der Naphthylen-Mittelkomponente in 6-Stellung gebunden ist, $R^{15}$ Wasserstoff, Alkyl von 1 bis 4 C-Atomen, Alkoxy von 1 bis 4 C-Atomen, Alkanoylamino von 2 bis 5 C-Atomen, Ureido oder Halogen ist, $R^{16}$ Wasserstoff, Alkyl von 1 bis 4 C-Atomen, Alkoxy von 1 bis 4 C-Atomen oder Halogen ist und M Wasserstoff oder ein Alkalimetall bedeutet.

8. Farbstoff nach Anspruch 1 der allgmeinen Formel

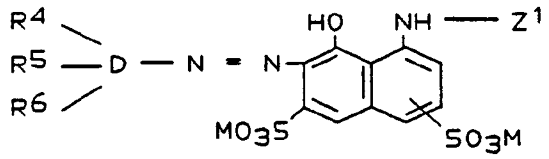

(17B)

in welcher $R^4$ Vinylsulfonyl oder bevorzugt β-Sulfatoethylsulfonyl ist, $R^5$ Wasserstoff, Alkyl von 1 bis 4 C-Atomen, Alkoxy von 1 bis 4 C-Atomen, Halogen, Carboxy oder Sulfo ist, $R^6$ Wasserstoff oder Sulfo ist und $Z^1$ ein Rest der allgemeinen Formel (3C)

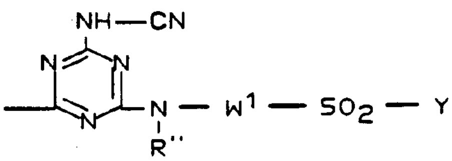

(3C)

ist, in welcher $W^1$ Alkylen von 2 bis 4 C-Atomen, bevorzugt von 3 C-Atomen, ist oder Phenylen ist, das durch 1 oder 2 Substituenten aus der Gruppe Methyl, Ethyl, Methoxy, Ethoxy und Chlor substituiert sein kann, Y eine der in Anspruch 1 genannten Bedeutungen hat und bevorzugt β-Sulfatoethyl ist und R" Wasserstoff, Methyl oder Ethyl ist.

9. Farbstoff nach Anspruch 1 der allgmeinen Formel

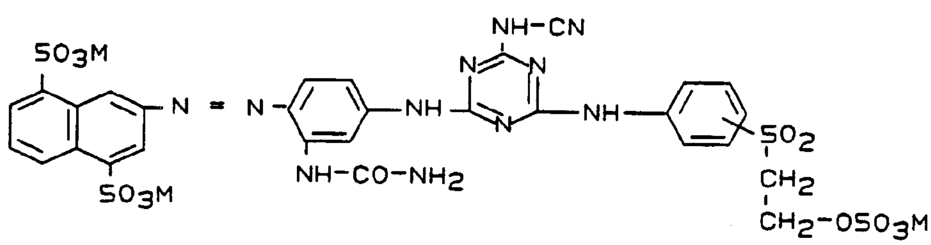

oder der Formel

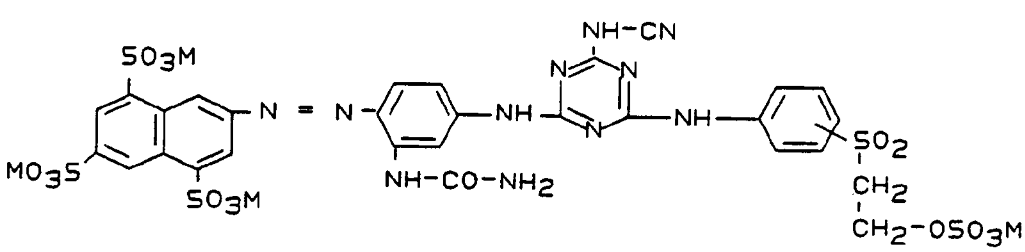

oder der Formel

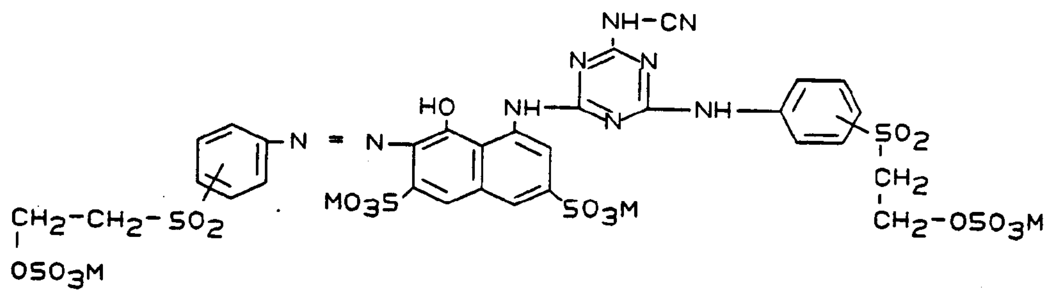

oder der Formel

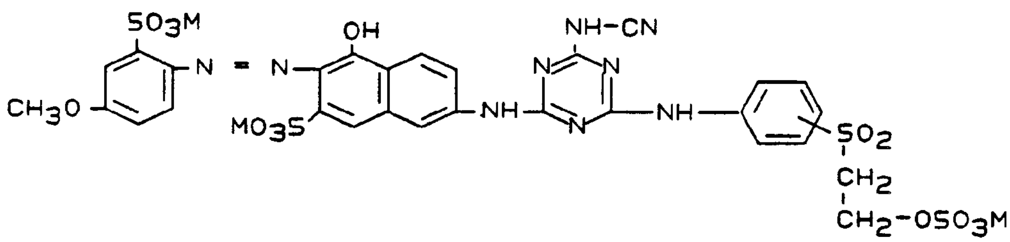

in welchen M Wasserstoff oder ein Alkalimetall bedeutet und die Gruppen $-SO_2-CH_2-CH_2-OSO_3M$ an den Benzolkern in meta- oder para-Stellung zur Aminogruppe gebunden sind.

**10.** Farbstoff nach Anspruch 1 der allgemeinen Formel

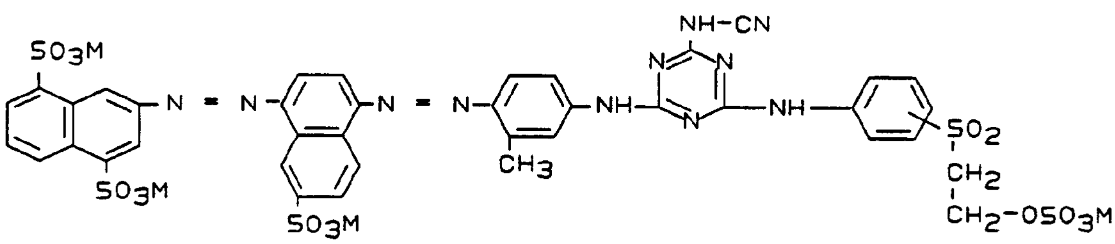

in welcher M Wasserstoff oder ein Alkalimetall ist und die Gruppe $-SO_2-CH_2-CH_2-OSO_3M$ an den Benzolkern in meta- oder para-Stellung zur Aminogruppe gebunden ist.

**11.** Verfahren zur Herstellung eines Farbstoffes von mindestens einem der Ansprüche 1 bis 10, dadurch gekennzeichnet, daß man für den jeweiligen Farbstoff typische Vorprodukte, von denen mindestens eines eine Gruppe der allgemeinen Formel (3) enthält, analog bekannten Verfahrensweisen miteinander umsetzt oder daß man eine aminogruppenhaltige Ausgangsverbindung der allgemeinen Formel (55)

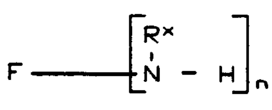

(55)

in welcher F, $R^x$ und n die in Anspruch 1 genannten Bedeutungen haben, mit einem Trihalogen-s-triazin der allgemeinen Formel (56)

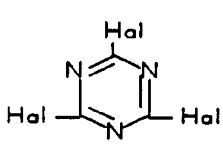

(56)

in welcher Hal für ein Halogenatom steht, mit Cyanamid oder einem Alkalimetallsalz davon und mit einem Amin der allgemeinen Formel H-Q mit Q der in Anspruch 1 genannten Bedeutung in stöchometrischen Mengen in beliebiger Reihenfolge miteinander umsetzt und gegebenenfalls anschließend weitere erforderliche Umwandlungsreaktionen durchführt,
oder daß man in einer Ausgangsverbindung, die der allgemeinen Formel (1) entspricht, in welcher jedoch die Gruppe(n) der Formel $-SO_2-Y$ β-Hydroxyethylsulfonyl-Gruppen sind, diese in eine andere Gruppe $-SO_2-Y$ mit Y der in Anspruch 1 angegebenen Bedeutung, vorzugsweise in die β-Sulfatoethylsulfonyl-Gruppe, überführt.

**12.** Verwendung einer Verbindung der allgemeinen Formel (1) von Anspruch 1 zum Färben (einschließlich Bedrucken) von hydroxy- und/oder carbonamidgruppenhaltigem Material, insbesondere Fasermaterial.

**13.** Verfahren zum Färben (einschließlich Bedrucken) von hydroxy- und/oder carbonamidgruppenhaltigem Material, insbesondere Fasermaterial, bei welchem man einen Farbstoff auf das Material aufbringt oder in das Material einbringt und ihn mittels Wärme und/oder mit Hilfe eines alkalisch wirkenden Mittels fixiert, dadurch gekennzeichnet, daß man als Farbstoff eine Verbindung der in Anspruch 1 genannten und definierten allgemeinen Formel (1) einsetzt.

## Claims

**1.** A water-soluble dyestuff corresponding to the formula (1)

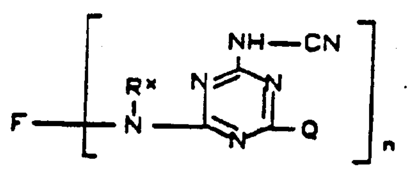

(1)

in which

F is the radical of a monoazo, disazo or polyazo dyestuff or of a heavy metal complex azo dyestuff or of an anthraquinone, phthalocyanine, azomethine, dioxazine, phenazine, stilbene, triphenylmethane, xanthene, thioxanthene, nitroaryl, naphthoquinone, pyrenequinone or perylenetetracarbimide dyestuff;

$R^x$ is hydrogen or alkyl having 1 to 4 carbon atoms, which can be substituted by halogen, hydroxyl, cyano, alkoxy having 1 to 4 carbon atoms, alkoxycarbonyl having 2 to 5 carbon atoms, carboxyl, sulfamoyl, sulfo or sulfato;

n is the number 1 or 2, preferably 1;

Q is a group of the formula (2a) or (2b)

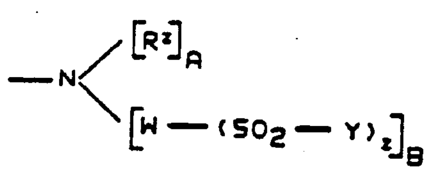

(2a)

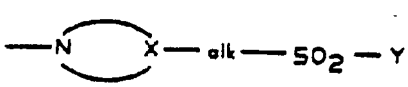

(2b)

in which

$R^z$ is hydrogen or alkyl having 1 to 4 carbon atoms, which can be substituted by halogen, hydroxyl, cyano, alkoxy having 1 to 4 carbon atoms, carboxyl, sulfamoyl, sulfo or sulfato, or by phenyl which is optionally substituted by substituents from the group comprising halogen, alkoxy having 1 to 4 carbon atoms, alkyl having 1 to 4 carbon atoms, sulfo and carboxyl, or is cyclohexyl, or phenyl which is optionally substituted by substituents from the group comprising halogen, alkoxy having

1 to 4 carbon atoms, alkyl having 1 to 4 carbon atoms, sulfo and carboxyl,

W is an optionally substituted arylene radical or an alkylene-arylene or arylene-alkylene or alkylene-arylene-alkylene or arylene-alkylene-arylene radical, in which the alkylene radicals are those having 1 to 8 carbon atoms and can be substituted and the arylene radicals are optionally substituted phenylene or naphthylene radicals, and in which the alkylene radicals can be interrupted by 1 or more hetero groups and the alkylene and arylene portions in the combined arylene/alkylene radicals can in each case be interrupted by a hetero group,

Y is vinyl, β-sulfatoethyl, β-thiosulfatoethyl, β-phosphatoethyl, β-alkanoyloxy-ethyl having 2 to 5 carbon atoms in the alkanoyl radical, β-benzoyloxy-ethyl, β-(sulfobenzoyloxy)-ethyl, β-(p-toluenesulfonyloxy)-ethyl or β-haloethyl,

z is the number 1 or 2,

A is the number zero or 1 and

B is the number 1 or 2,

in which the sum of (A + B) equals the number 2, and in which, in the case where B is 2, the groups of the formula $-W-(SO_2-Y)_k$ can have the same meaning as one another or a different meaning from one another,

X, together with the N atom, forms the bivalent radical of a heterocyclic ring consisting of 1 or 2 alkylene groups having 1 to 5 carbon atoms and optionally 1 or 2 hetero groups, and

alk is alkylene having 1 to 4 carbon atoms.

2. A dyestuff as claimed in claim 1, wherein $R^x$ is methyl or ethyl or hydrogen.

3. A dyestuff as claimed in claim 1 or 2, wherein the fiber-reactive radical of the formula

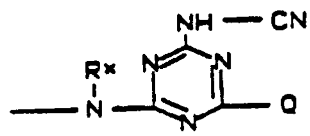

(3)

is a radical of the formula (3b)

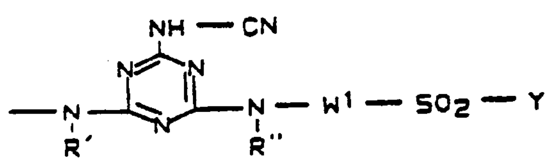

(3b)

in which

R' is the methyl or ethyl group or in particular a hydrogen atom,

R" is the methyl group or in particular a hydrogen atom,

$W^1$ is an alkylene group having 2 to 4 carbon atoms, preferably 2 or in particular 3 carbon atoms, or is a phenylene radical which can be substituted by 1 or 2 substituents from the group comprising methyl, methoxy, ethoxy and chlorine, and Y has one of the meanings given in claim 1.

4. A dyestuff as claimed in any of claims 1 to 3, wherein Y is β-sulfatoethyl.

5. A dyestuff as claimed in claim 1, of the formula (17A)

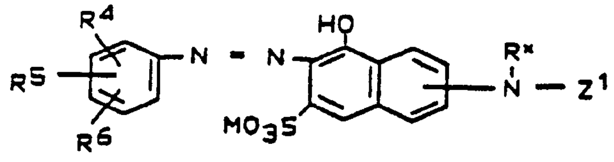

(17A)

in which $Z^1$ is a radical of the formula (3C)

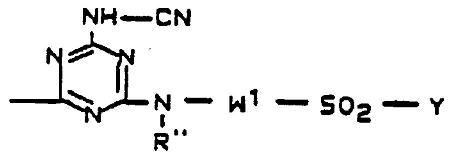

(3C)

in which $W^1$ is alkylene having 2 to 4 carbon atoms, preferably 3 carbon atoms, or is phenylene, which can be substituted by 1 or 2 substituents from the group comprising methyl, ethyl, methoxy, ethoxy and chlorine, Y has one of the meanings given in claim 1 and is preferably β-sulfatoethyl, R" is hydrogen, methyl or ethyl, the group $-N(R^x)-Z^1$ is bonded to the 1-naphthol radical in the 6-position, $R^x$ is hydrogen, methyl or ethyl, $R^4$ is methoxy, $R^5$ is hydrogen or sulfo, $R^6$ is hydrogen or sulfo and M is hydrogen or an alkali metal.

6. A dyestuff as claimed in claim 1, of the formula (20)

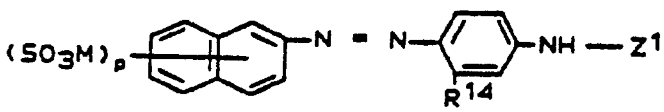

(20)

in which $Z^1$ is a radical of the formula (3C)

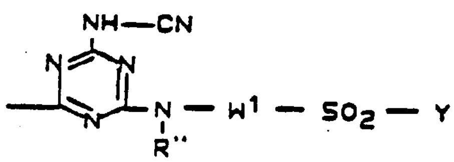

(3C)

in which $W^1$ is alkylene having 2 to 4 carbon atoms, preferably 3 carbon atoms, or phenylene which is substituted by 1 or 2 substituents from the group comprising methyl, ethyl, methoxy, ethoxy and chlorine, Y has one of the meanings given in claim 1 and is preferably β-sulfatoethyl, R" is hydrogen, methyl or ethyl, $R^{14}$ is methyl, acetylamino or ureido, p is the number 1, 2 or 3 and M is hydrogen or an alkali metal.

7. A dyestuff as claimed in claim 1, of the formula (21)

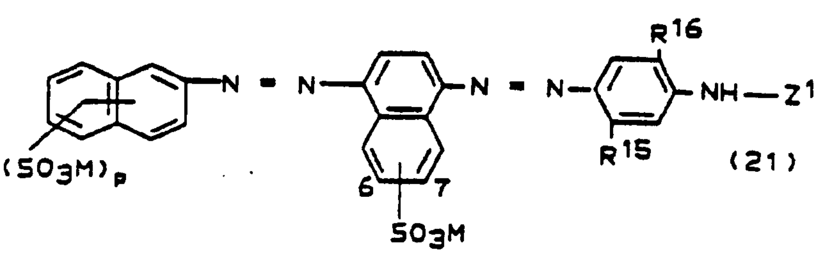

(21)

in which $Z^1$ is a radical of the formula (3C)

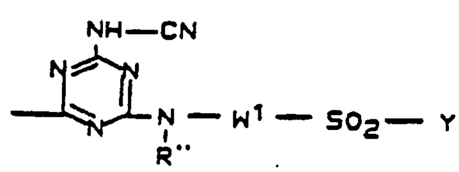

(3C)

in which $W^1$ is alkylene having 2 to 4 carbon atoms, preferably 3 carbon atoms, or is phenylene, which can be substituted by 1 or 2 substituents from the group comprising methyl, ethyl, methoxy, ethoxy and

chlorine, Y has one of the meanings given in claim 1 and is preferably β-sulfatoethyl, R" is hydrogen, methyl or ethyl, p is the number 2 and the group $-SO_3M$ is bonded in the 6-position in the naphthylene central component, $R^{15}$ is hydrogen, alkyl having 1 to 4 carbon atoms, alkoxy having 1 to 4 carbon atoms, alkanoylamino having 2 to 5 carbon atoms, ureido or halogen, $R^{16}$ is hydrogen, alkyl having 1 to 4 carbon atoms, alkoxy having 1 to 4 carbon atoms or halogen and M is hydrogen or an alkali metal.

8. A dyestuff as claimed in claim 1, of the formula

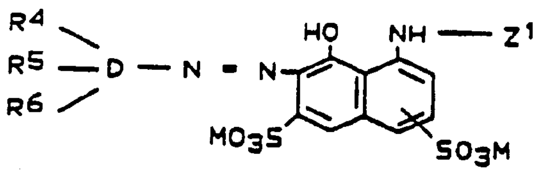

(17B)

in which

$R^4$ is vinylsulfonyl or preferably β-sulfatoethyl-sulfonyl, $R^5$ is hydrogen, alkyl having 1 to 4 carbon atoms, alkoxy having 1 to 4 carbon atoms, halogen, carboxyl or sulfo, $R^6$ is hydrogen or sulfo and

$Z^1$ is a radical of the formula (3C)

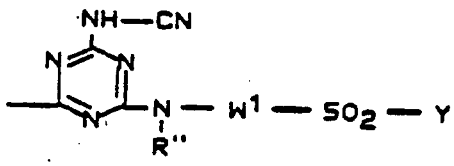

(3C)

in which $W^1$ is alkylene having 2 to 4 carbon atoms, preferably 3 carbon atoms, or is phenylene, which can be substituted by 1 or 2 substituents from the group comprising methyl, ethyl, methoxy, ethoxy and chlorine, Y has one of the meanings given in claim 1 and is preferably β-sulfatoethyl, and R" is hydrogen, methyl or ethyl.

9. A dyestuff as claimed in claim 1, of the formula

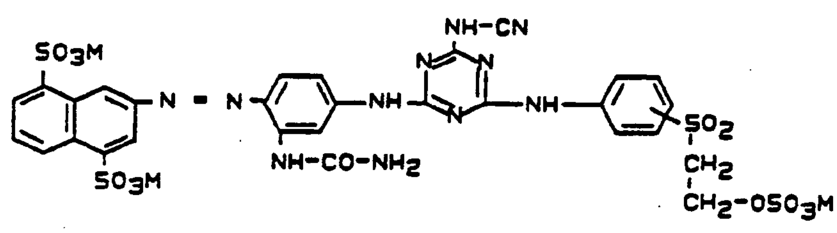

or of the formula

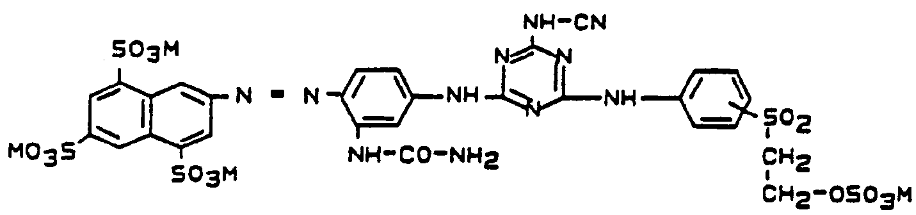

or of the formula

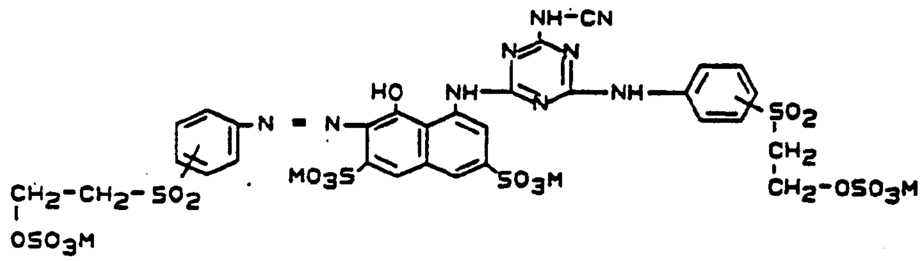

or of the formula

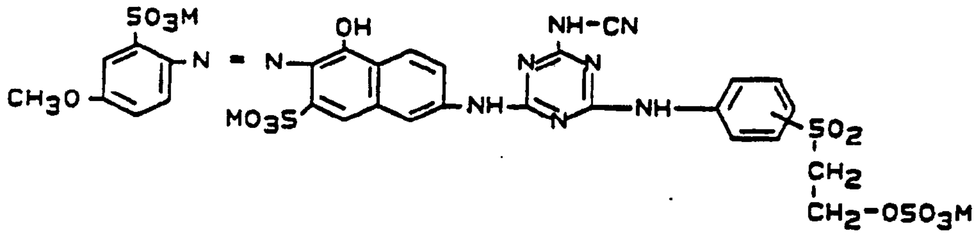

in which M is hydrogen or an alkali metal and the groups $-SO_2-CH_2-CH_2-OSO_3M$ are bonded to the benzene nucleus in the meta- or para-position relative to the amino group.

**10.** A dyestuff as claimed in claim 1, of the formula

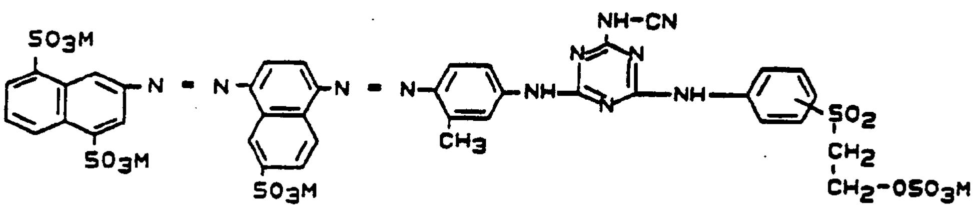

in which M is hydrogen or an alkali metal and the group $-SO_2-CH_2-CH_2-OSO_3M$ is bonded to the benzene nucleus in the meta- or para-position relative to the amino group.

**11.** A process for the preparation of a dyestuff as claimed in any of claims 1 to 10, which comprises reacting precursors typical for the particular dyestuff, at least one of which contains a group of the formula (3), with one another analogously to known procedures, or reacting a starting compound, containing amino groups, of the formula (55)

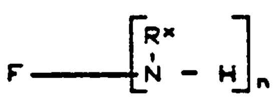 (55)

in which F, $R^x$ and n have the meanings given in claim 1, with a trihalo-s-triazine of the formula (56)

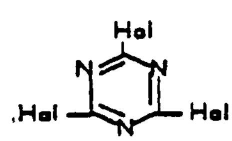 (56)

in which Hal is a halogen atom, with cyanamide or an alkali metal salt thereof and with an amine of the formula H-Q, where Q has the meaning given in claim 1, in stoichiometric amounts in any desired sequence, and if appropriate subsequently carrying out further necessary conversion reactions, or, in a starting compound which corresponds to the formula (1) but in which the group(s) of the formula $-SO_2-Y$ are β-hydroxyethylsulfonyl groups, converting these into another group $-SO_2-Y$, where Y has the meaning given in claim 1, preferably into the β-sulfato-ethylsulfonyl group.

12. The use of a compound of the formula (1) as claimed in claim 1 for dyeing (including printing) material, in particular fiber material, containing hydroxyl and/or carboxamide groups.

13. A process for dyeing (including printing) material, in particular fiber material, containing hydroxyl and/or carboxamide groups, in which a dyestuff is applied to the material or introduced into the material and is fixed by means of heat and/or with the aid of an alkaline agent, which comprises employing a compound of the formula (1) mentioned and defined in claim 1 as the dyestuff.

## Revendications

1. Colorant soluble dans l'eau correspondant à la formule générale (1)

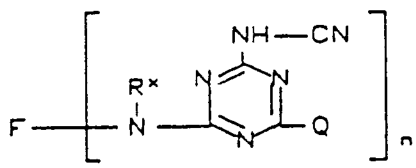

(1)

dans laquelle :

F est le résidu d'un colorant monoazoïque, disazoïque ou polyazoïque ou d'un colorant azoïque à complexe d'un métal lourd ou d'un colorant anthraquinonique, de phtalocyanine, d'azométhine, de dioxazine, de phénazine, stilbénique, de triphénylméthane, xanthénique, thioxanthénique, nitroarylique, naphtoquinonique, pyrènequinonique ou de pérylènetétracarbimide ;

$R^x$ est un hydrogène ou un radical alkyle ayant de 1 à 4 atomes de carbone, pouvant être substitué par un ou plusieurs radicaux halogéno, hydroxy, cyano, alcoxy ayant de 1 à 4 atomes de carbone, alcoxycarbonyle ayant de 2 à 5 atomes de carbone, carboxy, sulfamoyle, sulfo ou sulfato ;

n est le nombre 1 ou 2, de préférence 1 ;

Q est un groupe de formule générale (2a) ou (2b)

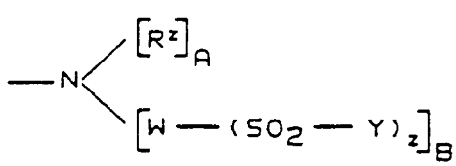

(2a)

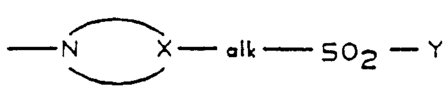

(2b)

dans lesquels :

$R^z$ est un hydrogène ou un radical alkyle ayant de 1 à 4 atomes de carbone et pouvant être substitué par un ou plusieurs radicaux halogéno, hydroxy, cyano, alcoxy ayant de 1 à 4 atomes de carbone, carboxy, sulfamoyle, sulfo ou sulfato, ou encore par un radical phényle éventuellement substitué par des substituants choisis parmi l'ensemble comprenant les radicaux halogéno, alcoxy ayant de 1 à 4 atomes de carbone, alkyle ayant de 1 à 4 atomes de carbone, sulfo et carboxy, ou encore cyclohexyle ou un radical phényle éventuellement substitué par des substituants choisis parmi l'ensemble comprenant les radicaux halogéno, alcoxy ayant de 1 à 4 atomes de carbone, alkyle ayant de 1 à 4 atomes de carbone, sulfo et

carboxy,

W est un radical arylène éventuellement substitué ou un radical alkylène-arylène, ou arylène-alkylène, ou alkylène-arylène-alkylène, ou arylène-alkylène-arylène, les radicaux alkylène ayant de 1 à 8 atomes de carbone et pouvant être substitués, et les radicaux arylène étant des radicaux phénylène ou naphtylène éventuellement substitués, les radicaux alkylène pouvant être interrompus par un ou plusieurs hétérogroupes, les fragments alkylène et arylène des radicaux arylène/alkylène combinés pouvant chacun être interrompu par un hétérogroupe,

Y est un radical vinyle, β-sulfatoéthyle, β-thio-sulfatoéthyle, β-phosphatoéthyle, β-alcanoyloxyéthyle ayant de 2 à 5 atomes de carbone dans le fragment alcanoyle, β-benzoyloxyéthyle, β-sulfobenzoyloxyéthyle, β-paratoluènesulfonyloxyéthyle ou β-halogénoéthyle,

z est le nombre 1 ou 2,

A est le nombre 0 ou 1, et

B est le nombre 1 ou 2,

où la somme (A + B) est égale à 2 et, quand B est égal à 2, les groupes de formule $-W-(SO_2-Y)_k$ peuvent avoir les mêmes significations ou avoir des significations différentes d'un groupe à l'autre,

X, avec l'atome d'azote, forme le résidu divalent d'un noyau hétérocyclique constitué de 1 ou 2 groupes alkylene ayant de 1 à 5 atomes de carbone et éventuellement de 1 ou 2 hétérogroupes, et

alk désigne un radical alkylène ayant de 1 à 4 atomes de carbone.

2. Colorant selon la revendication 1, caractérisé en ce que $R^x$ est le radical méthyle ou éthyle ou un hydrogène.

3. Colorant selon les revendications 1 ou 2, caractérisé en ce que le radical réactif sur les fibres, de formule

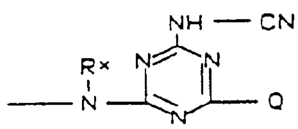

(3)

est un radical de formule genérale (3b)

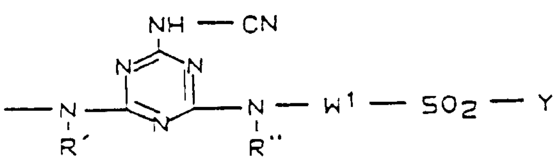

(3b)

dans laquelle

R' est le groupe méthyle ou éthyle ou en particulier un atome d'hydrogène,

R" est le groupe méthyle ou en particulier un atome d'hydrogène,

$W^1$ est un groupe alkylène ayant de 2 à 4 atomes de carbone, de préférence 2 ou en particulier 3 atomes de carbone, ou encore un radical phénylène pouvant être substitué par 1 ou 2 substituants choisis parmi l'ensemble comprenant les radicaux méthyle, méthoxy, éthoxy et chloro, et

Y a l'une des significations données dans la revendication 1.

4. Colorant selon au moins l'une des revendications 1 à 3, caractérisé en ce que Y est le radical β-sulfatoéthyle.

5. Colorant selon la revendication 1 de formule générale (17A)

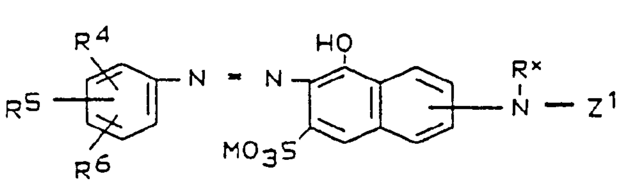

(17A)

dans laquelle $Z^1$ est un radical de formule générale (3C)

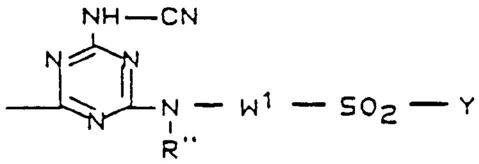

(3C)

dans laquelle $W^1$ est un radical alkylene ayant de 2 à 4 atomes de carbone, de préférence 3 atomes de carbone, ou encore un radical phénylène pouvant être substitué par 1 ou 2 substituants choisis parmi l'ensemble comprenant les radicaux méthyle, éthyle, méthoxy, éthoxy et chloro, Y a l'une des significations données dans la revendication 1 et est de préférence le radical β-sulfatoéthyle, R" est un hydrogène ou le radical méthyle ou éthyle, le groupe $-N(R^x)-Z^1$ est en position 6 fixé au radical naphtol-1, $R^x$ est un hydrogène ou le radical méthyle ou éthyle, $R^4$ est le radical méthoxy, $R^5$ est un hydrogène ou le radical sulfo, $R^6$ est un hydrogène ou le radical sulfo, et M est un hydrogène ou un métal alcalin.

6. Colorant selon la revendication 1 de formule générale (20)

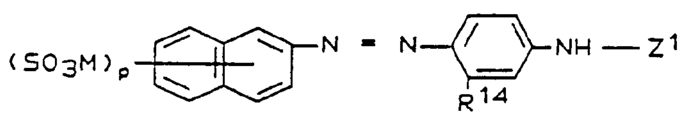

(20)

dans laquelle $Z^1$ est un radical de formule générale (3C)

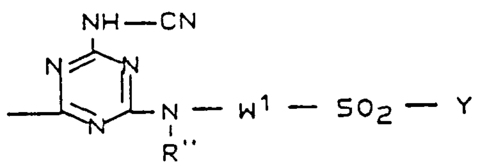

(3C)

dans laquelle $W^1$ est un radical alkylène ayant de 2 à 4 atomes de carbone, de préférence 3 atomes de carbone, ou encore un radical phénylène pouvant être substitué par 1 ou 2 substituants choisis parmi l'ensemble comprenant les radicaux méthyle, éthyle, méthoxy, éthoxy et chloro, Y a l'une des significations données dans la revendication 1 et est de préférence le radical β-sulfatoéthyle, R" est un hydrogène ou le radical méthyle ou éthyle, $R^{14}$ est le radical méthyle, acétylamino ou uréido, p vaut 1, 2 ou 3, et M est un hydrogène ou un métal alcalin.

7. Colorant selon la revendication 1 de formule générale (21)

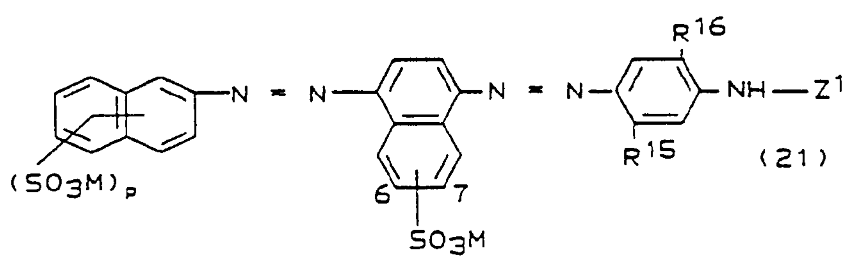

(21)

dans laquelle $Z^1$ est un radical de formule générale (3C)

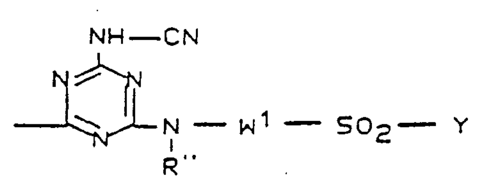

(3C)

dans laquelle $W^1$ est un radical alkylène ayant de 2 à 4 atomes de carbone, de préférence 3 atomes de carbone, ou encore un radical phénylène pouvant être substitué par 1 ou 2 substituants choisis parmi l'ensemble comprenant les radicaux méthyle, éthyle, méthoxy, éthoxy et chloro, Y a l'une des significations données dans la revendication 1 et est de préférence le radical β-sulfatoéthyle, R" est un hydrogène ou le radical méthyle ou éthyle, p est le nombre 2, et le groupe $-SO_3M$ du composant central naphtylène est lié en position 6, $R^{15}$ est un hydrogène, un radical alkyle ayant de 1 à 4 atomes de carbone, alcoxy ayant de 1 à 4 atomes de carbone, alcanoylamino ayant de 2 à 5 atomes de carbone, uréido ou halogéno, $R^{16}$est un hydrogène, un radical alkyle ayant de 1 à 4 atomes de carbone, alcoxy ayant de 1 à 4 atomes de carbone ou halogéno, et M est un hydrogène ou un métal alcalin.

**8.** Colorant selon la revendication 1 de formule générale

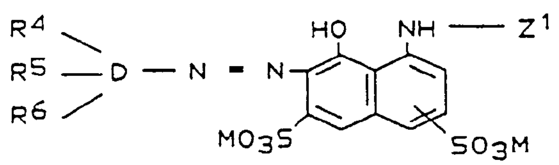

(17B)

dans laquelle $R^4$ est le radical vinylsulfonyle ou de préférence β-sulfatoéthylsulfonyle, $R^5$ est un hydrogène, un radical alkyle ayant de 1 à 4 atomes de carbone, alcoxy ayant de 1 à 4 atomes de carbone, halogéno, carboxy ou sulfo, $R^6$est un hydrogène ou le radical sulfo, et $Z^1$ est un radical de formule générale (3C)

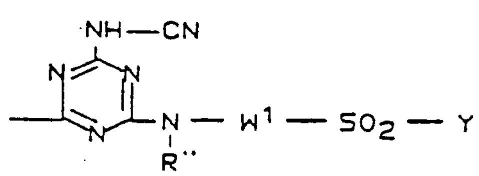

(3C)

dans laquelle $W^1$ est un radical alkylène ayant de 2 à 4 atomes de carbone, de préférence 3 atomes de carbone, ou encore un radical phénylène pouvant être substitué par 1 ou 2 substituants choisis parmi l'ensemble comprenant les radicaux méthyle, éthyle, méthoxy, éthoxy et chloro, Y a l'une des significations données dans la revendication 1 et est de préférence le radical β-sulfatoéthyle et R" est un hydrogène ou le radical méthyle ou éthyle.

**9.** Colorant selon la revendication 1 de formule génerale

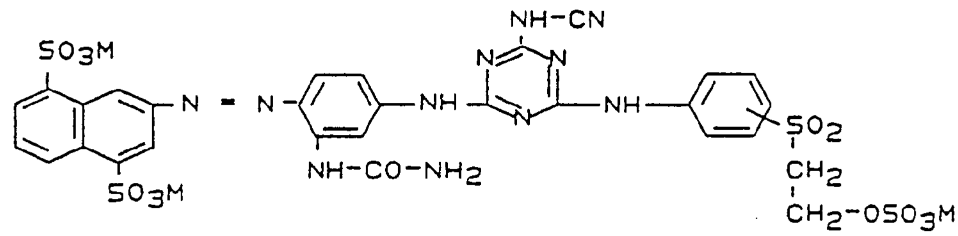

ou de formule

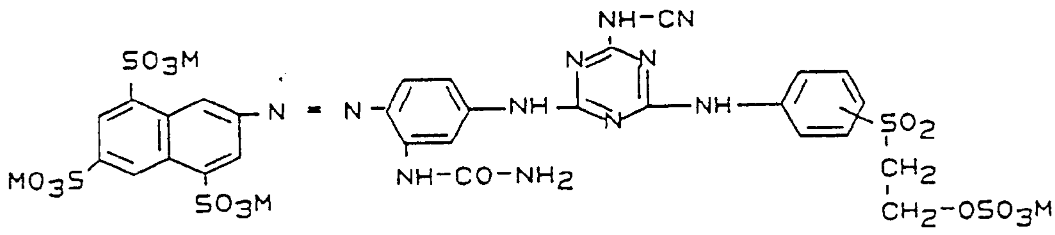

ou de formule

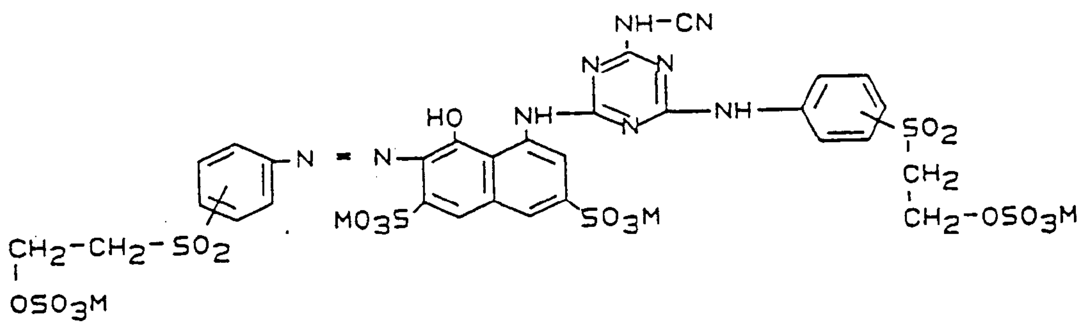

ou de formule

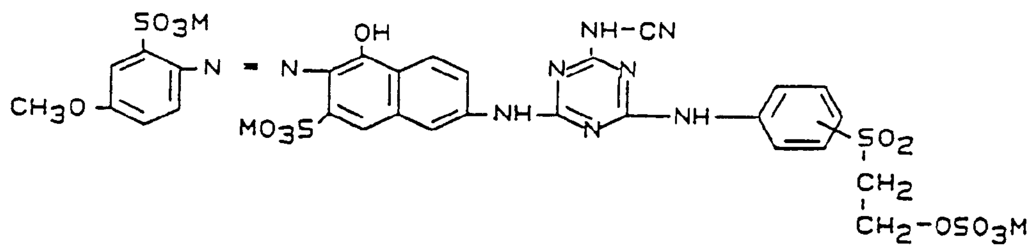

où M est un hydrogène ou un métal alcalin, et les groupes $-SO_2-CH_2-CH_2-OSO_3M$ sont fixés au noyau benzénique en position méta ou para par rapport au groupe amino.

**10.** Colorant selon la revendication 1 de formule générale

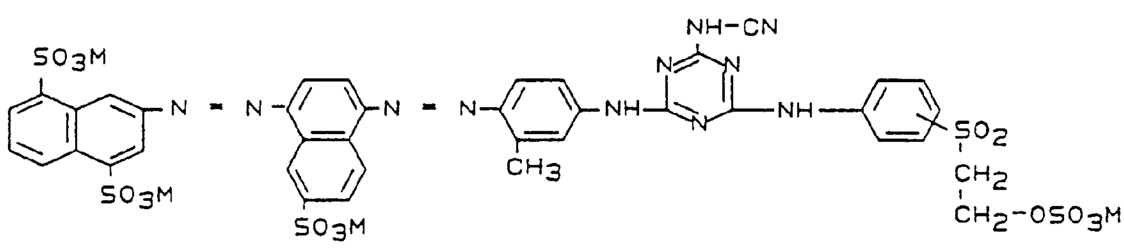

où M est un hydrogène ou un métal alcalin, et les groupes $-SO_2-CH_2-CH_2-OSO_3M$ sont fixés au noyau benzénique en position méta ou para par rapport au groupe amino.

**11.** Procédé pour préparer un colorant selon au moins l'une des revendications 1 à 10, caractérisé en ce qu'on fait réagir les uns avec les autres, d'une manière analogue à des modes opératoires connus, des précurseurs représentatifs de chacun des colorants, dont au moins l'un contient un groupe de formule générale (3), ou encore que l'on fait réagir en des quantités stoechiométriques, dans un ordre quelconque, un

composé aminé de départ de formule générale (55)

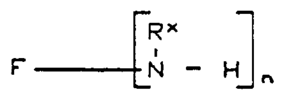

(55)

dans laquelle F, $R^x$ et n ont les significations données dans la revendication 1, avec une trihalogéno-s-triazine de formule générale (56)

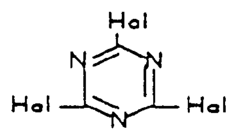

(56)

dans laquelle Hal est un atome d'halogène, avec du cyanamide ou l'un de ses sels de métaux alcalins, ou encore avec une amine de formule générale H-Q, Q ayant les significations données dans la revendication 1, en poursuivant éventuellement par d'autres réactions nécessaires de conversion,

ou bien en ce que, dans un composé de départ correspondant à la formule générale (1), dans laquelle cependant le ou les groupes de formule $-SO_2-Y$ sont des groupes β-hydroxyéthylsulfonyle, on convertit ces derniers en un autre groupe $-SO_2-Y$, Y ayant les significations données dans la revendication 1, de préférence en le groupe β-sulfatoéthylsulfonyle.

**12.** Utilisation d'un composé de formule générale (1) selon la revendication 1 pour teindre (et notamment imprimer) un matériau hydroxylé et/ou contenant des groupes carbonamide, en particulier un matériau fibreux.

**13.** Procédé pour teindre (et notamment imprimer) un matériau hydroxylé et/ou contenant des groupes carbonamide, notamment un matériau fibreux, dans lequel on applique un colorant sur le matériau ou on l'introduit dans le matériau et on le fixe à l'aide de chaleur et/ou à l'aide d'un agent à effet alcalin, caractérisé en ce qu'on utilise comme colorant un composé ayant la formule générale (1) donnée et définie dans la revendication 1.